Europäisches Patentamt

European Patent Office

Office européen des brevets

(19)

(11) **EP 1 176 746 A1**

## (12) EUROPEAN PATENT APPLICATION
published in accordance with Art. 158(3) EPC

(43) Date of publication:
**30.01.2002 Bulletin 2002/05**

(21) Application number: **00917376.6**

(22) Date of filing: **20.04.2000**

(51) Int Cl.[7]: **H04J 13/04**, H04B 1/707

(86) International application number:
**PCT/JP00/02576**

(87) International publication number:
**WO 00/65759 (02.11.2000 Gazette 2000/44)**

(84) Designated Contracting States:
**DE FR GB**

(30) Priority: **21.04.1999 JP 15422699**

(71) Applicants:
• **TOYO COMMUNICATION EQUIPMENT CO. LTD.**
  **Kouza-gun, Kanagawa 253-0192 (JP)**
• **Daiei Electronics Co., Ltd.**
  **Hachioji-shi, Tokyo 193-0834 (JP)**
• **Suehiro, Naoki**
  **Tsukuba-shi, Ibaraki 305-0031 (JP)**
• **Kuroyanagi, Noriyoshi**
  **Higashiyamato-shi, Tokyo 207-0022 (JP)**

(72) Inventors:
• **SUEHIRO, Naoki**
  **Tsukuba-shi Ibaraki 305-0031 (JP)**
• **KUROYANAGI, Noriyoshi**
  **3-chome Higashiyamato-shi**
  **Tokyo 207-0022 (JP)**
• **MATSUFUJI, Shinya**
  **Saga-shi Saga 840-0054 (JP)**

(74) Representative: **Grosse, Wolfgang, Dipl.-Ing.**
  **Patentanwälte Herrmann-Trentepohl Grosse -**
  **Bockhorni & Partner, Forstenrieder Allee 59**
  **81476 München (DE)**

(54) **CDMA COMMUNICATION SYSTEM HAVING PILOT-SUPPORTING INTERFERENCE SEPARATING FUNCTION**

(57)     The present invention overcomes the disadvantage of CDMA communications systems that it is likely to be interfered with by multipath delayed waves and interfering waves. According to the present invention, in a direct-spreading CDMA communications system, transmitter TX has a function of modulating a spreading-sequence with transmitting information to generate a transmitting data-frame, modulating a spreading-sequence with pilot-information to generate a pilot-frame, and transmitting these frames, and receiver RX has a function of receiving the corresponding received data and pilot-frames and analyzing both the frames, a function of storing both analyzed outputs as a pilot-response output and a data-response output, a function of estimating the disturbance due to the interfering wave components based on both the response outputs and removing the disturbance to generate a corrected output, and a function of hard-judging the corrected output, thereby recovering the transmitted information without being subject to the interference.

Fig. 2

**Description**

Background of the Invention

Field of the Invention

The present invention relates to a communications system that uses spread spectrum modulation to enhance the resistance of the system to interference-noise, giving an especially detrimental effect among the noise admixed in the transmission process. The present invention also relates to a communications system that uses baseband pulse modulation or band-pass type data modulation so as to enforce resistance to colored noise. Here, a mobile communications system uses PSK modulation to convert the spread-spectrum-modulated baseband-signal (SS) into a radio frequency band is taken, as an example, to describe this invention. Because this application provides particularly a large effect.

Description of the Prior Art

In spread spectrum communications, a spreading sequence is modulated by transmitting data so that the data with a relatively narrow band spectrum, is spread over a wide frequency-band and then transmitted. Such a communications system is superior in that the transmission power per unit frequency is low, interference with other communications can be kept at a relatively low level, and in that the system has an inherent strong resistance to ambient noise that is admixed in the transmissions process, e.g., general incoming noise and interference-noise incoming from mobile stations or interfering stations other than a desired station. However, because communications performed by numerous stations share the same band, it arises a problem such that communications performance degradation caused by the interference-noise tends to be a predominant factor.

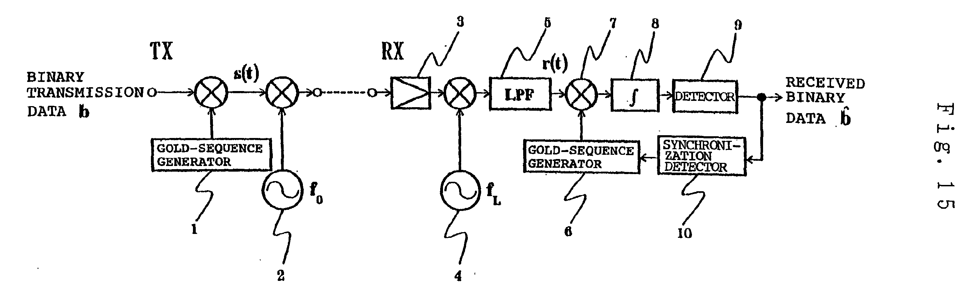

Figure 15 is a block diagram illustrating the general construction of a mobile communications system which performs spread spectrum communications via a radio communications channel. Here, a transmitter TX modulates a spreading sequence generated by a sequence generator 1, by multiplying it by binary transmission data b, thus producing a baseband transmission output s(t). Transmitter TX further modulates this basband transmission output s(t) using a carrier-wave of a frequency $f_0$ which is generated by an oscillator 2, so that the spectrum of the carrier-wave containing data b is spread. Transmitter TX then transmits this wave to a receiver RX via a radio communications channel. Furthermore, pseudo-noise (a PN sequence) whose bit period length is the same as the length of data b is generally used as the spreading sequence. In the following description, Gold-sequences (hereafter simply referred to as "G sequences") will be used as an example and because G sequences are the most common type in many PN sequences.

Receiver RX sends the spread-spectrum-modulated signal to an amplifier 3 via an antenna (not shown in the figures), amplifies the signal up to a required level, and then frequency-mixes the amplified signal with a local signal $f_L$ (= $f_0$) generated by a local oscillator 4. Receiver RX then demodulates the resultant signal into a baseband received spread signal r(t) by passing it through a low-pass filter 5. In other words, coherent demodulation or non-coherent demodulation is performed.

This baseband spread signal r(t) is inputted to a multiplier 7 with an M sequence that is the same as sequences used by transmitter TX and generated by the sequence generator 6. The resultant multiplied output is then integrated by an integrator 8 for the period of the sequence-length of the M sequence (1 frame), to obtain a matched filter output. This output is detected by a detector 9 at the end of the frame, and the received binary data b is then detected by means of a hard decision function which compares this output with a threshold value. A control signal produced based upon this detected data is inputted to a control terminal of sequence generator 6 via a synchronization detector 10, and the generating timing of G sequence is controlled so that the sequence phase may be synchronized with the received signal. Furthermore, in receiver RX shown in Fig. 15, the arrangement of the multiplying functions provided by local oscillator 4 and sequence generator 6 is often exchanged each other; however, the overall demodulation function remains the same.

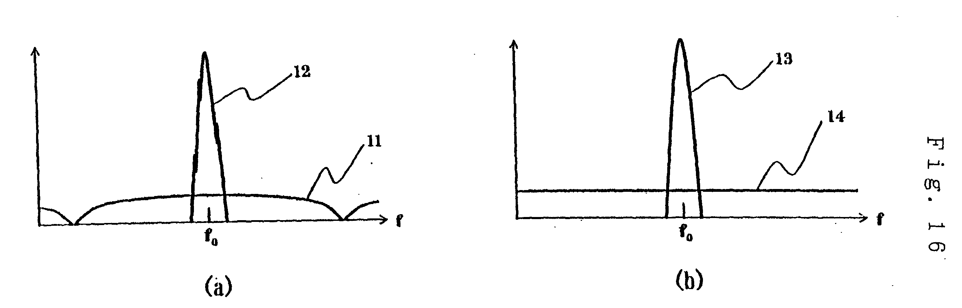

Figure 16 schematically shows spectra of a signal being transmitted. In Fig. 16(a), reference numeral 11 denotes a spectrum of a spread-spectrum-modulated signal, and reference numeral 12 denotes a spectrumof admixed environmental noise. When the receiver demodulates (despreads) this signal and the noise using the G sequence, the spread-spectrum-modulated signal 11, which has been spread over a wide-frequency-band as shown in Fig. 16(b), is converted into a narrow-band signal 13, and the environmental noise 12 is converted into a signal 14, which has been distributed over a wide frequency band. Accordingly, this communications method can suppress the disturbance due to the environmental noise.

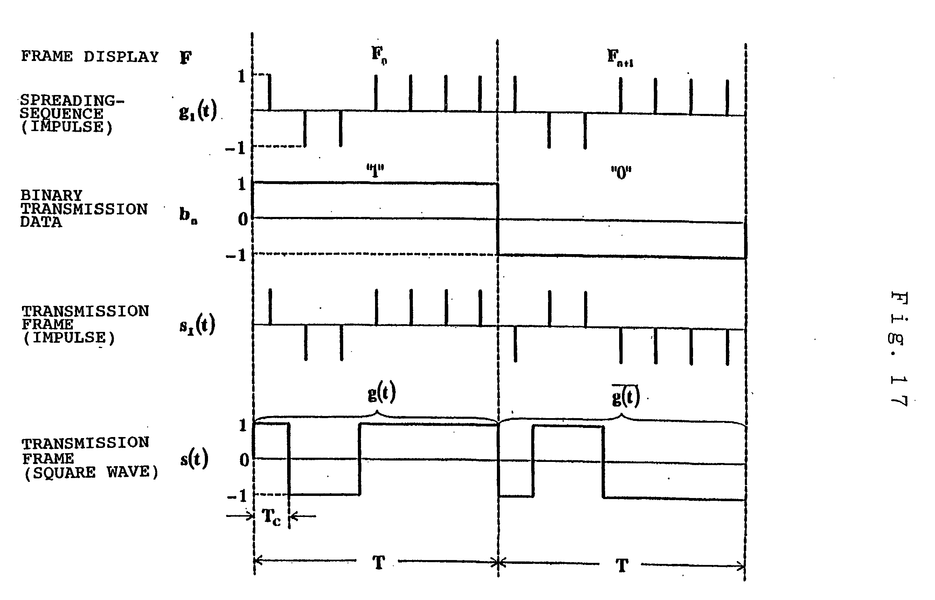

Figure 17 is a diagram showing the relation between a G (impulse) sequence $g_l$ and binary information in a conventional direct-sequence spread spectrum communications system (DS-SS). This is an example in which the sequence-length L = 7 (chips). In this figure, $b_n$ indicates binary data that is to be transmitted, T indicates the period of the data (frame period), $T_c$ indicates the chip period, and $S_l(t)$ indicates an output obtained by multiplying $g_l(t)$ by $b_n$. A transmitting frame s(t) is a transmission baseband waveform obtained by replacing the individual impulses in $s_l$ (t) with square waves. Thus, $g_l(t)$ and g(t) are given by:

$$g_I(t) = \sum_{i=0}^{L-1} c_i \delta(t - iT_c) \quad 0 \le t \le T \tag{1}$$

$$g(t) = \sum_{i=0}^{L-1} c_i q_1(t - iT_c) \quad 0 \le t \le T \tag{2}$$

$$\left. \begin{array}{ll} q_1(t) = 1 & |t| \le \dfrac{T_c}{2} \\[2mm] \quad\;\; = 0 & |t| \le \dfrac{T_c}{2} \end{array} \right\} \tag{3}$$

where $c_i$ (i = 0, 1, 2 , ... , L-1: L is the sequence-length of a spreading sequence) is the i-th chip amplitude of the spreading sequence, $\delta$ is a delta function, and $q_1$ is a square wave function. As shown in the figure, a square wave is sent out in response to a value "1", and an inverted output is sent out in response to a value "0". Actually, s(t) is bandlimited less than $f_c = T^{-1}_c$, converted into a radio frequency-band, and then sent out. Accordingly, the frequency bandwidth occupied by the data-signal is substantially $f_D = 1/T$, and that of the transmitting spread signal s(t) is substantially $f_C = T_C^{-1}$. In this case, the following equation is established:

$$f_c = Lf_D \tag{4}$$

Furthermore, instead of using the square waveform as $q_1(t)$ as shown in Equ. (3), it is possible to use such a waveform $q_1'(t)$ that the auto-correlation function at an adjacent sampling point may take zero (called the sampling function, and the DFT conversion of $q_1'(t)$ has a cosine roll-off characteristic). In this case, if the receiver prepares the same waveform $q_1'(t)$ as that used by the transmitter side and performs correlative demodulation using the same waveform, the desired wave components of the received signal will be the impulse sequence indicated in Equ. (2). The signal can be detected by despreading this impulse sequence using $g_l(t)$. The spread-spectrum-modulated signal thus occupies an extremely broad frequency bandwidth, colored noise power (component in-phase with the signal g (t)) can be suppressed to 1/L, so this system is resistant to noise.

In general, however, usually L >> 1 exists, and in spite of the use of a bandwidth L times as large as that of the data signal, the number of simultaneous calls $K_s$ is $K_s$ << L (about a fraction of the value L); the simultaneous transmission capacity/Hz is ($K_s/L$) times as large as that of a time-division multiple access system (TDMA). Consequently, this system is disadvantageous in terms of transmission frequency-band utilization-efficiency is generally extremely low compared to that of a time-division multiple access system.

Thus, the reason why the number of simultaneous calls $N_s$ cannot be set to a very large value compared to L is that the cross-correlation coefficient between G sequence $g_0(t)$ assigned to the desired station and different G sequence $g_K(t)(k \neq 0)$ assigned to another mobile station cannot be sufficiently small. Furthermore, the suppressing effect on colored noise or transmission noise accompanying fading or delayed waves caused by multiple reflections (multipath) during the transmission process is also generally insufficient. Essentially these factors reduce the frequency-utilization-efficiency of the conventional spread spectrum communications system.

The process gain $G_P$ of the conventional direct-sequence spread spectrum communications system is given by:

$$G_p = 10\log_{10} L \tag{5}$$

If an incoming noise has a single frequency, and is in phase with the sequence $g_0(t)$, the demodulated noise power obtained after the demodulation by the receiver (i.e., an output from integrator 8 in Fig. 15) will be 1/L times as much as the incoming noise power (an output from LPF 5 in Fig. 15), as described above. However, the mean value of the cross-correlation between different G sequences is given by $\rho = 1/\sqrt{L}$, but the worst correlation value is significantly larger than the mean. Because sequences $g_0(t)$ and $g_K(t)$ are modulated by mutually independent transmission information, and the cross-correlation varies with mutual frame phases of these sequences. As a result, numerous interference waves with a large cross-correlation are applied to the receiver over a long period of time, thus significantly degrading the code error rate. Therefore, there is a problem such that the number of simultaneous calls $N_S$ cannot be set to a large value.

Moreover, the error rate is further increased by the increase in self-interference noise and inter-station interference-noise which are caused by delayed waves resulting from multiple reflections (multipath) during transmission, or decrease in the receiving signal to noise ratio (SNR) associated with fading. Principally these factors reduce the frequency-utilization-efficiency of the CDMA system. The present invention relates to a technique that can deal not only with narrow-band noise but also with the inter-station interference- noise (wide-band noise) as described above or inter-cell interference-noise generated by similar communications being carried out in other cells (service areas in the mobile communications system).

To suppress the above-described interference-noise, the following two systems have been studied.

(A) Interference canceller system

(B) Least mean-square error decision feedback system

Interference canceller system (A) is first explained. The receiver demodulates the received signal $r(t)$ by means of the conventional DS-SS system using the signature spreading sequences allocated to all the users (the number of users is K) in the cell to which they belong. That is, K receivers are provided, and they produce detected initial outputs $b_1, b_2, ..., b_k$. To determine the correct value information $b_1$ transmitted by the desired station, a pseudo interference wave $x_l(t)$ is produced by multiplying the detected initial outputs $b_2, b_3, ..., b_k$ by both the respective reference-spreading sequences, and the estimated channel characteristics of the transmission paths. This component is subtracted from the received signal to produce an interference removed received signal $r_1(t) = r(t) - x_l(t)$, which is then demodulated to obtain the detected final output $\hat{b}_1$ .[Reference: Ramjee Prasad: "CDMA for Wireless Personal Communications", Artech House, 1996; p.316 to 327]

This system depends on the accuracy of the initial detection outputs $\hat{b}_1, \hat{b}_2, ..., \hat{b}_k$ and that of the estimated characteristics of the transmission paths, and its performance is significantly degraded when the number of users K exceeds half of the sequence-length L. Further, the apparatus requires a very large scale.

In system (B), the received signal is inputted to a transversal orthogonal filter, where the noise contained in the received signal is made orthogonal to the desired signal as much as possible. The output of the transversal orthogonal filter is despread by means of the conventional DS-SS demodulation system, using the reference-spreading sequence, thereby hard decision is made to obtain an output b with the despread output. This orthogonalization is carried out by controlling the branch coefficients of the transversal filter. Then, decision feedback process is performed based on the detected output b. That is, every time when a received frame is despread and the output is obtained on the hard-decision, the above-described coefficients are fine-adjusted so as to reduce the error between output b and the despread output obtained at the preceding demodulation stage (least-mean-square-error algorithm). [Reference: Predrag B. Rapajic and Branka S. Vucetic, "Adaptive Receiver Structures for Asynchronous CDMA Systems", IEEE JSAC, vol. 12, no. 4, May 1994].

This method is effective when the interference noise can be assumed to be a cycro-stationary process, but this is not realistic assumption for mobile stations. That is, it generally requires a long steady period during that the transmission paths or interference characteristics do not change. Further, when the noise exceeds a threshold, the coefficient control for reducing the above error often malefactions, resulting in control of increasing the error, thus hindering steady operations.

Summary of the Invention

It is an object of the present invention to solve the above-described problem of the CDMA communications system whose performance is vulnerable to the disturbance due to multipath delayed waves and interference-waves.

According to the present invention, a transmitter transmits a pilot-frame, and a receiver uses the received response information in the pilot-frame to remove obstructing components due to the multipath delayed waves and interference-waves contained in a data-frame. More specifically, the present invention uses the following system constructions.

1. A direct-sequence CDMA communications system having a pilot-supported interference separating function, is characterized in that each transmitter comprises a function of generating extended sequences which are composed by arranging a rear and a front portions of a core-spreading-sequence or zero sequences respectively at the front and the rear outsides of the core-spreading-sequence as guard-sequences, a function of modulating the extended sequences with transmitting information to produce a transmitting data-frame, a function of modulating the extended sequences with pilot information to produce an isolated pilot-frame that is not affected by data-frames and pilot-frames transmitted by the other transmitters, and a function of transmitting the data and isolated pilot-frames; and a receiver comprises a function of receiving a synchronously received data-flock-frame on a position synchronized with the core-sequence in the extended sequence coming from the desired station, a function of receiving a similar synchronously received isolated pilot-flock-frames, a function of analyzing both the flock-frames, estimating the influence of interfering wave components based on both the analyzed outputs to remove the influence, and thereby producing an estimated value $\hat{b}_0$ for the information transmitted by the desired station $u_0$, and a function of making hard decision on the estimated value and thereby obtaining the transmitted information without being subject to the interference.

2. A direct-sequence CDMA communications system having a pilot-supported interference separating function according to 1 stated above, is characterized in that the receiver comprises means of applying pilot flock frame $r_{kpf}$ received from the k (= 0, 1, 2...)-th user-station $u_k$ and the synchronously received data-flock-frame synchronized with a data-frame received from the desired station $u_0$, to matched filters which matches to one or more kinds of arbitrary analyzing sequences with sequence-length equal to the core-spreading-sequence, to output a pilot-response cross-correlation-function and a data-response cross-correlation-function to a storage, and means of solving a system of linear equations composed of a pilot-response matrix P and a data-response (cross-correlation-function) matrix $\Phi$ using algebraic operations to obtain an estimated value $\hat{b}_0$ for the information transmitted by the desired station.

3. A direct-sequence CDMA communications system having a pilot-supported interference separating function according to 1 stated above, is characterized in that the system comprises means of producing the first analyzing sequence y whose cross-correlation-function with the 0-th pilot-flock-frame $r_{0pf}$ received from the desired station $u_0$ takes the value 1 at the 0-shift position and the value 0 at the other shift positions, to produce 0-shift-correlation-value $Y_k$ between analyzing sequence $y_0$ and the pilot-flock-frame $r_{kpf}$ received from the interfering station, means of producing the second analyzing sequence w whose 0-shift-correlations with pilot-flock-frame $r_{opf}$ and $r_{kpf}$ (k $\neq$ 0) take the values 0 and $Y_k$, respectively, and means of subtracting a 0-shift-correlation value W between synchronously received data-frame r and the second analyzing sequence w, from a 0-shift-correlation-value R between synchronously received data-frame r and the first analyzing sequence y, to obtain an estimated value $\hat{b}_0$ for the information transmitted by the desired station.

4. A direct-sequence CDMA communications system having a pilot-supported interference separating function according to 3 stated above, is characterized in that an analyzing sequence v whose 0-shift-correlations with the 0-th pilot-flock-frame $r_{0pf}$ and the k-th pilot-flock-frame $r_{kpf}$ (k $\neq$ 0) take the values 1 and 0, respectively, is produced and, a 0-shift-correlation-value V between synchronously received data-frame r and the analyzing sequence v is defined as an estimated value $\hat{b}_0$.

5. A direct-sequence CDMA communications system having a pilot-supported interference separating function according to any one of 1 to 4 stated above, is characterized in that the transmitter at a base-station comprises a quasi-synchronizing function of transmitting synchronizing information on multiframe to control the transmitting timing of a frame-sequence transmitted by each user-station so that the synchronously received frame which the receiver received from the desired station may not contain frame-boundaries included in extended frame-sequences of self-interference-waves received from the desired station or frame-boundaries included in respective extended frame-sequences received from interfering stations; respective user-station receivers comprise means of receiving and identifying the synchronizing information; respective user-station transmitters comprise means of transmitting their pilot-frames onto the respective pilot-slots on the multiframe in a time-division manner; and the base-station receiver comprises means of receiving the respective pilot-flock-frames to produce the pilot-response correlation-functions or analyzing sequences.

6. A direct-sequence CDMA communications system having a pilot-supported interference separating function according to any one of 1 to 4 stated above, is characterized in that the transmitter comprises means of repeatedly arranging a core-spreading-sequence to generate a repeated sequence and adding guard-sequences at the front and the rear outsides of the repeated sequence to produce an extended sequence, means of modulating one or more extended sequences with the transmitting information and the pilot-information to produce a group of repeated data-frames and a repeated pilot-frame, and means of summing up the outputs which are obtained by modulating orthogonal carrier waves different in frequency from each other by both the respective repeated frames, to produce a transmitting multiplexed-frame synthesized in a frequency-division manner; and the receiver comprises means of receiving the multiplexed-frame, using local carrier-waves corresponding to the transmission-carrier-waves as well as a synchronization technique, separating the group of the synchronously received data-flock-frame based on the pilot-flock-frame and demodulating them; and the base-station has a quasi-synchronization function of transmitting synchronizing information to control the transmitting timing of respective user-station transmitters so that the synchronously received frame received from the desired station may not contain frame-boundaries included in extended frame-sequences of self-interference-waves received from the desired station or frame-boundaries included in respective extended frame-sequences received from interfering stations.

7. A direct-sequence CDMA communications system having a pilot-supported interference separating function according to 1 stated above, is characterized in that each transmitter periodically transmits, instead of the isolated pilot used in 1 described above, overlapping pilot-frames onto timings that overlap data-frames transmitted by the other transmitters; and the receiver receives the respective overlapping pilot-frames, to produce correlation-values between the respective overlapping pilot-frames and an analyzing sequence z that is orthogonal to the spreading-sequence of the desired station at every shift-position except the 0-shift-position, in order to obtain a pilot-response-output by averaging these correlation-values.

8. A direct-sequence CDMA communications system having a pilot-supported interference separating function according to 1 stated above, is characterized in that the transmitter of the k-th user station comprises means of producing an extended sequence $E_0$ which is constructed by arranging a rear and a front portions of a repeated sequence obtained by repeating a plurality of times a core-spreading-sequence with length L at the front and rear outside of the repeated sequence as guard-sequences, respectively, means of cyclically shifting the extended sequence by n (n = 0,1,2,...., L-1) chips to produce the n-shift extended sequence $E_n$, means of modulating the n-shift extended sequence $E_n$ with the n-th transmitting information $b_{kn}$ to produce the n-th transmitting data-frame, means of summing up L transmitting data-frames to produce a synthesized data-frame and transmitting the synthesized data frame over the k-th carrier wave, and means of transmitting a transmission frame produced by modulating extended sequence $E_0$ with the pilot information using the k'($\neq$ k)-th carrier-wave; and the receiver comprises means of using the k-th and k'-th carrier-waves to demodulate the synchronously received data-flock-frame and pilot-flock-frame synchronized with the frame of the desired station, respectively, and one of the following means (a) to (c) for obtaining an estimated value $\hat{b}_0$ for the information transmitted by desired station $u_0$ based on both the demodulated outputs:

(a) means of applying pilot-flock-frame $r_{kpf}$ received from the k-th user station and the synchronously received data-flock-frame synchronized with the data-frame of the desired station, to the matched filter that matches to one or more types of arbitrary analyzing sequences with sequence-length equal to that of the core-spreading-sequence, to output a pilot-response cross-correlation-function and a data-response cross-correlation-function to a storage, and means of using algebraic operations to solve a systemof linear equations in composed of the pilot-response matrix P and the data-response cross-correlation-function matrix $\Phi$, in order to obtain an estimated value $\hat{b}_0$ for the information transmitted by the desired station;

(b) means of producing the first analyzing sequence y whose cross-correlation-function with the 0-th pilot-flock-frame $r_{0pf}$ received from the desired station (0-th station $u_0$) takes the values 1 and 0 at the 0-shift and the other shift-positions, respectively, to produce 0-shift-correlation value $Y_k$ between analyzing sequence y and the k-th pilot-flock-frame $r_{kpf}$ received from the k-th interfering station $u_k(k \neq 0)$, means of producing the second analyzing sequence w whose 0-shift-correlations with pilot-flock-frame $r_{0pf}$ and with pilot-flock-frame $r_{kpf}$ (k $\neq$ 0) take the values 0 and $Y_k$, respectively, and means of subtracting a 0-shift-correlation value W between synchronously received data-frame r and analyzing sequence w from the 0-shift-correlation-value R between synchronously received data-frame r and analyzing sequence y to obtain an estimated value $\hat{b}_0$ for the information transmitted by desired station; and

(c) means of producing an analyzing sequence v whose 0-shift-correlations with pilot-flock-frame $r_{0pf}$ and with pilot-flock-frame $r_{kpf}$ (k $\neq$ 0) take the values 1 and 0, respectively, to obtain an estimated value $\hat{b}_0$ for information transmitted by the desired station based on a 0-shift-correlation value V between the synchronously received data-frame r and analyzing sequence v.

9. A direct-sequence CDMA communications system having a pilot-supported interference separating function according to 8 stated above, is characterized in that the transmitter comprises means of providing, as core-spreading-sequences, even-shift orthogonal sequences $g_H$ and $g_v$ which are in a relation of mates, and producing extended sequences $E_H(0)$ and $E_v(0)$ by adding the guard sequences to the respective repeated core-sequences, means of shifting extended sequences $E_H(0)$ and $E_v(0)$ by an even-number value (n) to generate extended sequences $E_H(n)$ and $E_v(n)$, means of modulating each of the extended sequences with the pilot information and the transmitting information, respectively, and means of modulating the same carrier-wave with the resultant modulated outputs and transmitting the modulated carrier-wave; and the receiver comprises one of the following means (a) to (c) for obtaining an estimated value $\hat{b}_0$ for the information transmitted by desired station $u_0$ based on the synchronously received frame synchronized with the frame of the desired station:

(a) means of applying pilot-flock-frame $r_{kpf}$ received from the k-th user station and the synchronously received data-flock-frame synchronized with the data frame of the desired station, to the matched filter that matches to one or more types of arbitrary analyzing sequences with sequence length equal to that of the core-spreading-sequence, to output a pilot-response cross-correlation-function and a data-response cross-correlation-function to a storage, and means of using algebraic operations to solve a system of L linear equations in L-unknowns composed of the pilot-response matrix P and the data-response cross-correlation function matrix $\Phi$, in order to obtain an estimated value $\hat{b}_0$ for the information transmitted by the desired station;

(b) means of producing the first analyzing sequence $y_0$ whose cross-correlation function with the 0-th pilot-flock-frame $r_{0pf}$ received from the desired station (0-th station $u_0$) takes the values 1 and 0 at the 0-shift and the other shift-positions, respectively, to produce 0-shift-correlation value $Y_k$ between analyzing sequence $y_0$ and the k-th pilot-flock-frame $r_{kpf}$ received from the k-th interfering station $u_k(k \neq 0)$, means of producing the second analyzing sequence $w_0$ whose 0-shift-correlations with pilot-flock-frame $r_{0pf}$ and with pilot-flock-frame $r_{kpf}$ ($k \neq 0$) take the values 0 and $Y_k$, respectively, and means of subtracting a 0-shift-correlation value W between synchronously received data-frame r and analyzing sequence $w_0$ from a 0-shift-correlation value R between synchronously received data-frame r and analyzing sequence $y_0$ to obtain an estimated value $\hat{b}_0$ for the information transmitted by desired station; and

(c) means of producing an analyzing sequence v whose 0-shift-correlations with pilot-flock-frame $r_{0pf}$ and with pilot-flock-frame $r_{kpf}$ ($k \neq 0$) take the values 1 and 0, respectively, to obtain an estimated value $\hat{b}_0$ for information transmitted by the desired station based on a 0-shift-correlation value V between the synchronously received data-frame r and analyzing sequence v.

10. A direct-sequence CDMA communications system having a pilot-supported interference separating function according to any one of 1 to 4 stated above, is characterized in that $\Gamma$ sets of $\Gamma$-element sequences constituting $\Gamma$-order complete complementary sequences are provided, two of these sets are assigned to each user-station as a pilot-spreading-sequence $g_{hv}$ (h = 0,2,4,..... $\Gamma$-2) and a data-spreading-sequence $g_{h+1, v}$; the transmitter of the k-th user-station $u_k$ comprises means of producing $\Gamma$ repeated element-sequences in a way of producing a repeated element-sequence by repeating of the v(= 0, 1, 2, ... , $\Gamma$-1)-th element-sequence of pilot-spreading-sequence $g_{hv}$ and data-spreading-sequence $g_{h+1, v}$ (h=2k), means of arranging guard-sequences at the front and the rear outside of the respective repeated element-sequences to produce extended sequences $E_{hv}$ and $E_{h+1, v}$, means of modulating extended sequences $E_{hv}$ and $E_{h+1, v}$ (h = 2k) with the pilot information and the data-information, respectively, and means of transmitting a transmission frame which is produced by modulating the v-th carrier-wave $f_v$ with the resultant modulated outputs; and the receiver comprises means of applying an output obtained by demodulating the synchronously received frame received from desired station $u_0$ with carrier-wave $f_v$, to a matched filter that matches to the element-sequences $g_{hv}$ and $g_{h+1,v}$ (h = 0, 1), to produce pilot-response and data-response correlation-functions, and one of the following means (a) to (c) for obtaining an estimated value $\hat{b}_0$ for the information transmitted by the desired station using the resultant outputs:

(a) means of applying pilot-flock-frame $r_{kpf}$ received from the k-th user station and the synchronously received data-flock-frame synchronized with the data frame of the desired station, to the matched filter that matches to one or more types of arbitrary analyzing sequences with sequence length equal to that of the core-spreading-sequence, to output a pilot-response cross-correlation-function and a data-response cross-correlation-function to a storage, and means of using algebraic operations to solve a system of linear equations in composed of the pilot-response matrix P and the data-response cross-correlation function matrix $\Phi$, in order to obtain an estimated value $\hat{b}_0$ for the information transmitted by the desired station;

(b) means of producing the first analyzing sequence $y_0$ whose cross-correlation function with the 0-th pilot-flock-frame $r_{0pf}$ received from the desired station (0-th station $u_0$) takes the values 1 and 0 at the 0-shift and the other shift-positions, respectively, to produce 0-shift-correlation value $Y_k$ between analyzing sequence $y_0$ and the k-th pilot-flock-frame $r_{kpf}$ received from the k-th interfering station $u_k(k \neq 0)$, means of producing the second analyzing sequence $w_0$ whose 0-shift-correlations with pilot-flock-frame $r_{0pf}$ and with pilot-flock-frame $r_{kpf}$ ($k \neq 0$) take the values 0 and $Y_k$, respectively, and means of subtracting a 0-shift-correlation value W between synchronously received data-frame r and analyzing sequence $w_0$ from a 0-shift-correlation value R between synchronously received data-frame r and analyzing sequence $y_0$ to obtain an estimated value $\hat{b}_0$ for

the information transmitted by desired station; and

(c) means of producing an analyzing sequence v whose 0-shift-correlations with pilot-flock-frame $r_{0pf}$ and with pilot-flock-frame $r_{kpf}$ ($k \neq 0$) take the values 1 and 0, respectively, to obtain an estimated value$\check{b}_o$ for information transmitted by the desired station based on a 0-shift-correlation value V between the synchronously received data-frame r and analyzing sequence v.

11. A direct-sequence CDMA communications system having a pilot-supported interference separating function according to 10 stated above, is characterized in that the transmitter of user-station $u_k$ comprises means of shifting the respective extended sequences by n (n= 0,1,2, ....L-1.) chips to generate $\Gamma$ peaces of n-shift extended sequences $E_{hv}(n)$ (h = 2k, 2k+1) (v = 0,1,2,..., $\Gamma$-1), means of modulating the $\Gamma$ peaces of n-shift extended sequences with the n-th transmitting information to make the v-th modulated output, and means of modulating the v-th carrier-wave with the v-th modulated output and transmitting the modulated carrier-wave; and the receiver comprises means of obtaining estimated values$\check{b}_{kn}$for L pieces of information transmitted by the desired station.

12. A direct-sequence CDMA communications system having a pilot-supported interference separating function according to 8 stated above, is characterized in that any one or plural numbers selected from integers (0 to L-1) are used for the "n" to transmit plural pieces of transmitting information, which are then received and demodulated.

13. A direct-sequence CDMA communications system having a pilot-supported interference separating function according to 11 stated above, is characterized in that any one or plural numbers selected from integers (0 to L-1) are used for the "n" to transmit plural pieces of transmitting information, which are then received and demodulated.

14. A direct-sequence CDMA communications system having a pilot-supported interference separating function according to any one of 8 and 10 to 13 stated above, is characterized in that an extended sequence or a set of extended sequences having been used as a pilot-frame is used to transmit the pilot-frame once every plural frames, and the resultantly produced idle frames are used to transmit data-information or the pilot-frames of other user stations, so as to be shared by all users in a time-division manner.

15. A direct-sequence CDMA communications system having a pilot-supported interference separating function according to any one of 8 to 13 stated above, is characterized in that the transmitter comprises means of providing M* core-spreading-sequences and selecting and transmitting one of the core-spreading-sequences; and the receiver comprises means of providing analyzing circuits that can deal with all the core-spreading-sequences to obtain M* estimated values for the information transmitted, and means of comparing the estimated values with each other to detect $\log_2 M^*$ bits of transmitted information per symbol frame.

16. A direct-sequence CDMA communications system having a pilot-supported interference separating function according to any one of 8 to 13 stated above, is characterized in that the transmitter modulates the extended sequence with multi-amplitude information; and the receiver obtains, by means of multi-amplitude discrimination, an estimated value$\check{b}_o$ for transmitted information to detect a plurality of bits of transmitted information per symbol frame.

17. A direct-sequence CDMA communications system having a pilot-supported interference separating function according to any one of 2 to 4 stated above, is characterized in that, in a system wherein up to (L-1) user stations can transmit simultaneously their signals over the same band using the core-spreading-sequence with length L, the receiver comprises means of adding an additional pilot-response for one station to the pilot-responses produced based on the pilot-flock-frames received from (L-1) user-stations to produce an L×L matrix P and, means of determining the additional pilot-responses so as not to reduce the rank of matrix P.

18. A direct-sequence CDMA communications system having a pilot-supported interference separating function according to 8 to 13 stated above, is characterized in that, in a system wherein (L-1) transmitting frames each is sequentially shifted by one-chip interval in frames by frame basis for one of the core-spreading-sequences with length L which compose the repeated extended sequences, the receiver comprises means of adding one row of an additional pilot-response to (L-1) rows of the pilot responses produced based on the pilot-flock-frames to produce an L×L matrix P and means of determining the additional pilot-responses so as not to reduce the rank of matrix P.

19. A direct-sequence CDMA communications system having a pilot-supported interference separating function according to any one of 8 to 13 stated above, is characterized in that, in a case where a system of N linear equations in N-unknowns consisted of pilot-response matrix P having a form of an N×N cyclic matrix, data-response matrix $\Phi$, and unknown matrix $\check{b}$ is solved by: multiplying the matrix P by an N × N Fourier transformation matrix to obtain a matrix $\alpha$, multiplying the Fourier transformation matrix $F_N$ by a diagonal matrix having the reciprocal of the elements of matrix $\alpha$ as the diagonal element of the row, multiplying the multiplied output matrix by an N × N Fourier inverse transformation matrix $F_N^{-1}$ to obtain an inverse matrix $[P]^{-1}$ of pilot-response matrix P, and multiplying inversematrix by data-responsematrix $\Phi$ to obtain unknown matrix $\check{b}$.

20. A direct-sequence CDMA communications system having a pilot-supported interference separating function according to any one of 2 to 4 and 7 to 13 stated above, is characterized in that a system of L simultaneous equations in L unknowns consisted of pilot-response matrix, unknown matrix, and data-response matrix is solved using a method comprising the following steps: obtaining beforehand a solution matrix of the equations consisted of a hypothetical data-response matrix such that the elements of the j-th row and the other rows may take the values 1 and 0, respectively; multiplying each element by the element $\Phi_j$ of the j-th row of data-response matrix $\Phi$ to obtain $\Phi_j\tilde{b}_{ji}$ and adding up $\Phi_j\tilde{b}_{ji}$ for all values of solution matrix $\tilde{b}$.

21. A direct-sequence CDMA communications system having a pilot-supported interference separating function according to any one of 1 to 4 stated above, is characterized in that the receiver comprises means of extracting synchronously received pilot- and data-frames synchronized with the frame of the desired station, means of selecting one of the data-frames as a demodulation target-frame assigned by the number zero, and producing the n-th differential frame $d_{0n}$ made of the difference (sum) between the target frame and the partner frame which is the n-th data frame coming in neighborhood of the target-frame, means of solving a system of simultaneous equations in for the differential frame by algebraic operation to obtain sets of differential frames s $[d_{oh}]$ and s $[d_{oh}.]$ such that estimated values $\tilde{\beta}_{0n}(k = 0, 1, 2, ...)$ for the information transmitted by the desired-station and interfering stations take values within a neighborhood of prescribed values (+2, -2), means of obtaining the numbers of candidates such that estimated values $\tilde{\beta}_{0H}$ for the information transmitted by the desired station obtained from $d_{oh}$ and $d_{oh}$, fall within prescribed values, respectively, and means of determining the detected output $\tilde{b}_{00}$ for the information on the target-frame transmitted by the desired station by comparing the magnitude.

22. A direct-sequence CDMA communications system having a pilot-supported interference separating function according to 21 stated above, is characterized in that the receiver comprises means of obtaining the first analyzing sequence y whose cross-correlation function with the 0-th pilot-flock-frame $r_{0pf}$ received from the desired station takes the values 1 and 0 at the 0-shift and the other shift positions, respectively, to produce the 0-shift-correlation-value $Y_k$ between the first analyzing sequence y and the k-th pilot-flock-frame $r_{kpf}$ received from interference-station $u_k(k \neq 0)$, means of obtaining the second analyzing sequence w whose 0-shift-correlations with the pilot-flock-frame $r_{opf}$ and $r_{kpf}$ ($k \neq 0$) take the values 0 and $Y_k$, respectively, means of producing the correlation-value $W_{0n}$ between the second analyzing sequence w and the n-th differential frame $d_{0n}$ to obtain a set $s[d_{0h}]$ of the differential frames satisfying such a condition that the power of $W_{0n}$ is equal to or less than a prescribed threshold value, and means of obtaining correlation-values $D_{0h}$ between the respective differential frames $d_{0h}$ and the first analyzing sequence y, and means of averaging the correlation-values $D_{oh}$, thereby producing an estimated value $\tilde{b}_{00}$ for the information on the target-frame transmitted by the desired station.

23. A direct-spreading CDMA communications system having a pilot-supported interference separating function according to 22 stated above, is characterized in that the system assigns each user-station $u_A$, $u_B$, $u_C$, $u_D$, ... with one of sets $(A_0, A_1)$, $(B_0, B_1)$, $(C_0, C_1)$, $(D_0, D_1)$ ... of self-complementary sequences whose elements constitute sets $(A, B)$, $(C, D)$ ... of complete complementary sequences, each transmitter comprises means of modulating respective two-element sequences $(A_0, A_1)$, $(B_0, B_1)$ ... with the n-th transmitting information $b_{An}, b_{Bn}, ...,$ and further modulating two different carrier waves with the modulated outputs obtained, to generate the n-th transmitting frame, and the receiver comprises means of demodulating a received input frame with the respective carrier waves, to separate received element-sequences $(A_0, B_0, C_0, ...)$ and $(A_1, B_1, C_1, ...)$, means of providing self-complementary sequence set $(B_0, B_1)$ having complete complementary relationship with self-complementary sequence set $(A_0, A_1)$ at the desired-station $u_A$ to obtain 0 shift cross-correlation values between the n-th synchronized received differential frame $d_{0n}$ and the respective element-sequences of self-complementary sequence set $(B_0, B_1)$, thereby producing a set $s[d_{0h}]$ that satisfies such a condition that the power of the sum output of the cross-correlation values is equal to or less than a threshold value, and means of producing 0 shift cross-correlation outputs between differential frame $d_{0h}$ and self-complementary sequence set $(A_0, A_1)$ which the desired-station used, and averaging a sum of the 0-shift-correlation outputs to produce an estimated value $\tilde{b}_{00}$ for the 0-th target frame bearing information transmitted by the desired-station.

Brief Description of the Drawings

Figure 1 is an explanatory representation of intra-cell transmission paths in a CDMA mobile communications system. Figure 1(a) is a view showing the up-link transmission paths, and Figure 1(b) is a view showing the down-link transmission paths.

Figure 2 is block diagrams of the circuits of a transmitter and a receiver according to the first embodiment of the present invention. Figure 2(a) is a block diagram of the transmitter circuit TX, and Figure 2(b) is a block diagram of the receiver circuit RX.

Figure 3(a) is a view showing transmitting frames transmitted by a desired-station and an interfering station, and Figure 3(b) is a view showing received frames coming from the desired-station and the interfering station.

Figure 4 is a view showing correlation-function output characteristics.

Figure 5 is a view showing a multiframe composition for transmitting pilot-frames in a time-division manner.

Figures 6(a) and (b) are views showing a composition of repeated spreading-sequence and its spectrum for transmitting pilot-frames in a frequency division manner.

Figure 7(a) is a view showing transmitting waveforms of a self-orthogonal-sequence chip shift transmission system, and Figures 7(b) and (c) show received waveforms of the self-orthogonal-sequence chip shift transmission system.

Figure 8 is a view showing components of a correlation-function output according to the second embodiment (N = 4, $0 \leqq m \leqq 2$).

Figure 9(a) is a view showing the configuration of a transmitter circuit according to the second embodiment (chip shift transmission system), and Figure 9(b) is a view showing the configuration of a receiver circuit according to the second embodiment (chip shift transmission system).

Figure 10(a) is a view showing received frames and correlation-function outputs (pilot-frame responses) according to the third embodiment.

Figure 10(b) is a view showing received frames and correlation-function outputs (data-frame responses) according to the third embodiment.

Figure 11(a) is a view showing the configuration of a transmitter partial circuit according to the third embodiment which uses the $\Gamma(= 4)$-th complete complementary sequences.

Figure 11(b) is a view showing the configuration of the transmitter partial circuit according to the third embodiment which uses the $\Gamma(= 4)$-th complete complementary sequences.

Figure 11(c) is a view showing the configuration of a receiver partial circuit according to the third embodiment which uses the $\Gamma(= 4)$-th complete complementary sequences.

Figure 12 is a view showing a block diagram of fast processing for solving N-element linear simultaneous equations.

Figure 13 is a block diagram of a pilot-supported differential frame demodulating system according to the fourth embodiment.

Figure 14 is a view showing the occurrence frequency of analyzed outputs in the pilot-supported differential frame demodulating system.

Figure 15 is a block diagram showing a general configuration of a spread-spectrum mobile communications system.

Figure 16 is a schematic view of spectra of signals being transmitted. Figure 16(a) is a view showing spectral characteristics of received waves. Figure 16(b) is a view showing spectral characteristics observed after despreading.

Figure 17 is a diagram showing relation between binary information and transmitting frame signals in a conventional direct-sequence spread-spectrum communications system.

The Best Mode to Carry Out the Invention

The present invention is to overcome the above-described disadvantages of CDMA communications systems that they are vulnerable to the multipath and interfering waves. According to the present invention, a transmitter has a function of transmitting pilot-frames, and a receiver has a function of removing interfering components due to the multipath and interfering waves contained in data-frames by using the received response information obtained from the pilot-frames.

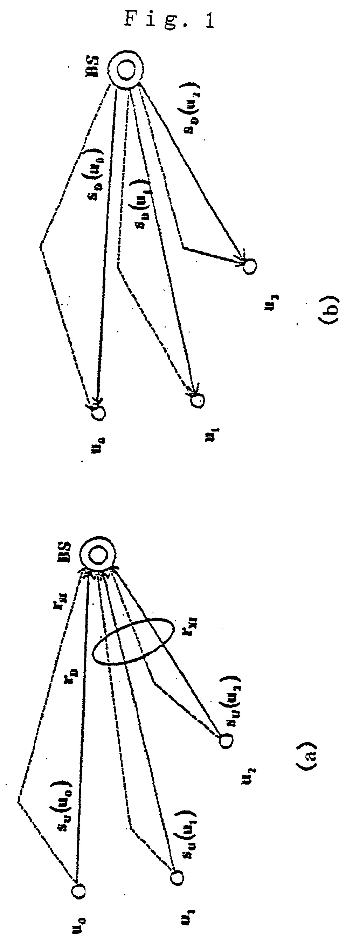

Figure 1 is a supplementary explanatory illustration of the present invention showing intra-cell transmission paths of a CDMA mobile communications system. The up-link transmission in Fig. 1(a) shows that a mobile station $u_i$ (i=0,1,2,.....K) (hereafter referred to as a "user-station") transmits a transmitting wave $s_u(u_i)$ to a base-station BS. If the 0-th user $u_0$ is assumed to be a desired-station, the received wave $r_D$ that is a direct wave arrived at base-station BS is the desired wave. In this case, the dotted lines indicate multipath delayed waves. A delayed wave generated by the desired wave is a self-interference-wave $r_{SI}$. On the other hand, the transmitted waves from the user-stations (also referred to as interfering stations) other than the desired-station are received as inter-station interfering waves $r_{XI}$. These interfering waves include not only direct waves but also multipath delayed waves as shown in the figure. Thus, a received interfering wave $r_I$ is the sum of the self-interference-waves and the other station interfering waves. If the total received wave is defined as r, the equations below are given.

$$r(t) = r_D(t) + r_I(t) \tag{6}$$

$$r_I(t) = r_{SI}(t) + r_{XI}(t) \tag{7}$$

Figure 1(b) shows down-link transmission paths, where multipath delayed waves are also generated as shown by the dotted lines. Further, the received wave received by user-station $u_0$ includes not only the transmitting wave $s_D$ $(u_0)$ and its delayed wave, shown in the figure, but also a wave transmitted to another station $s_D(u_i)(i \neq 0)$ and its delayed wave, which are not shown. In the down-link transmission, the timing when the interfering wave and the desired wave reach desired-station $u_0$ is the same. Accordingly, if only the direct wave is considered, then all the interfering waves are synchronously received, resulting in synchronous transmission, thus it reduces interference degradation compared to the up-link asynchronous transmission.

If there is an object blocking the direct wave, a delayed wave may be demodulated instead of the direct wave. In this case, several interfering waves due to multipath precede the wave to be demodulated. In the following, a system design will be described for the up-link transmission, which is technically more difficult, by assuming, for convenience, that the preceding waves are omitted (without loss of generality).

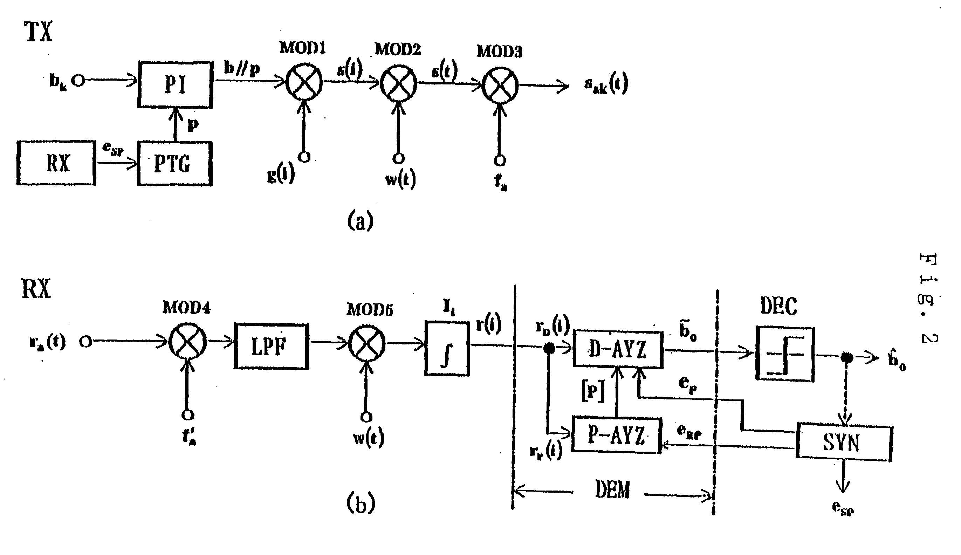

Figure 2 shows the configurations of transmitter and receiver circuits using general spreading-sequences according to the first embodiment of the present invention. Figure 2 (a) shows a transmitter circuit TX of the k-th(k = 0, 1, 2, ... K) user $u_k$. A sequence of binary information b and a sequence of pilot-information p are provided and synthesized by a pilot inserting circuit PI, shown in the figure, to obtain an output as a synthesized sequence of the sequences b and p. The timing position of sequence p inserted into sequence b is designated by a transmitting pilot-frame-timing signal $e_{SP}$ transmitted by the base-station. Receiver RX generates synchronizing information from a received input using an existing synchronization technique. The synchronizing information includes the information designating timing signal $e_{SP}$, as described below. A pilot timing generating circuit PTG, shown in the figure, generates pilot timing information based on timing signal $e_{SP}$.

Transmitter TX includes three modulators $MOD_1$, $MOD_2$, and $MOD_3$. At modulator $MOD_1$, b or p modulates a spreading-sequence g(i)[i = 0, 1, 2, ... L-1] (in the figure, the transmitting information of the user $u_k$ is represented as $b_k$, but b is the simplified representation). At modulator $MOD_2$, the resultant modulated output s(i) modulates a chip waveform w(t) (normally a square wave with a chip time width or a sampling function waveform is used) to generate a base band transmitting frame s(t). At $MOD_3$, s(t) modulates a carrier wave $f_a$ to generate a radio-band transmitting wave $s_{ak}(t)$ for user $u_k$.

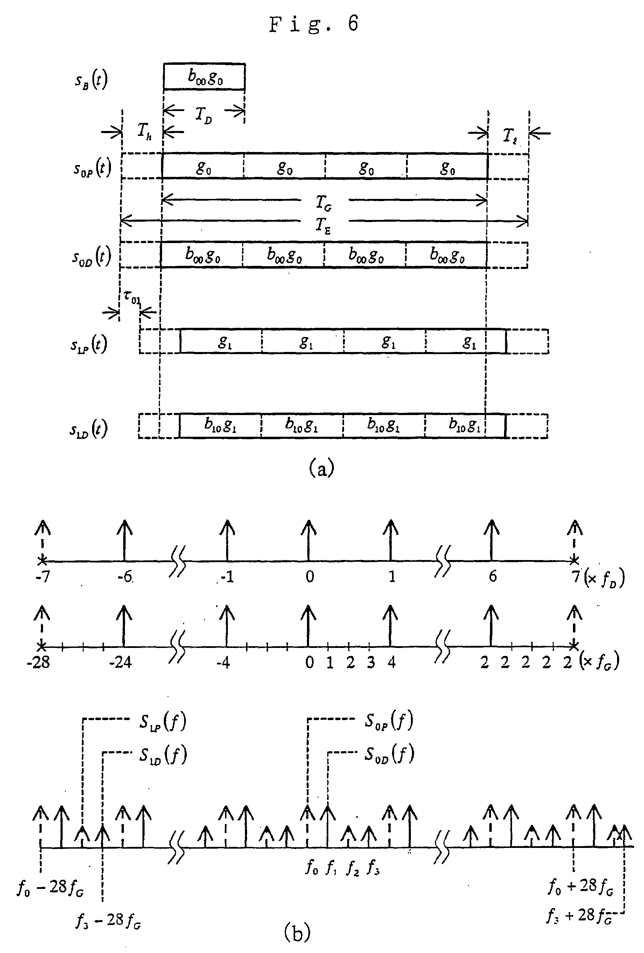

A received input $r_a(t)$ is applied to receiver RX in Fig. 6. Input $r_a(t)$ is obtained by adding noise to radio-band transmitting wave $s_a(t)$, which has been attenuated and distorted, and it is converted into the base-band received signal r(t) by modulator $MOD_4$, low-pass filter LPF, and a local carrier wave $f_a$ synchronized with local carrier wave $f_a$ shown in Fig. 2. The attenuation and distortion added to the transmitting wave of desired-station $u_0$ (hereafter the 0-th user is assumed to be the desired-station) is compensated for by an equalizing circuit, not shown here. Accordingly, if signal r(t) is assumed to be an output from the equalizing circuit, it may be expected that this signal contains the base-band transmitting wave as it is. It may be assumed that the transmitting wave of each user generates M multipath delayed waves and that these distortions are equalized (the attenuation of the interfering waves and delayed waves is not compensated for). This base-band received wave is given by:

$$r(t) = r_{0f}(t) + \sum_{k=1}^{K} r_{kf}(t) + x(t) \tag{8}$$

$$r_{kf}(t) = \sum_{m=0}^{M} \imath_{km} b_k g_k (t - mT_C), \tag{9}$$

where $r_{kf}(t)$ denotes a flock-frame composed of the sum of the direct and delayed waves which have been generated by the transmitting wave of the k-th user (the flock-frame is normally accompanied by a subscript f), and $\mu_{km}$ denotes the signal amplitude of the m-th delayed wave of the k-th user, which is generally a complex due to the phase difference between the transmitted and local carrier waves. In the following description, the value for the desired-station is normalized as $\mu_{00} = 1$. x(t) denotes an additive white Guassian noise and includes residues due to incompletely equalized distortion.

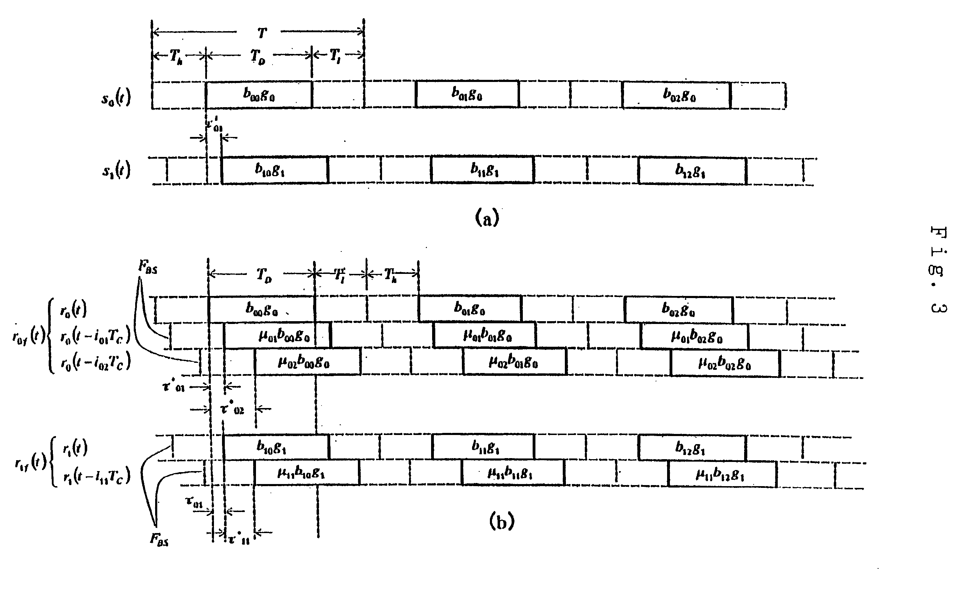

Modulator MODS and an integrator $I_1$, both shown in Fig. 2, generate a correlation output between input signal r(t) and the receiver chip waveform w(t). This correlation output is a chip impulse sequence produced at successive chip period. Then, consider a synchronously received frame r(t) with a period $T_D$ which is synchronized with the received wave which the desired-station has transmitted [see Fig. 3(b)]. Frame r(t) is transformed into the received frame r(i) composed of L chip impulses which have been produced by the above-described correlation detection. As described below, if a cyclically extended-frame is used as a spreading-sequence, received frame r(i) is given by:

$$r(i) = r_{0f}(i) + \sum_{k=1}^{K} r_{kf}(i) + x(i)$$

$$r_{0f}(i) = \sum_{m=0}^{M} \mu_{0m} b_0 g_0(i-m)$$

$$r_{kf}(i) = \sum_{m=0}^{M} \mu_{km} b_k g_k(i-m) \; , \qquad\qquad (10)$$

where as discrete-value representation of the time variable $t = iT_c$ and delay time $T_m = mT_c$, i and mare used, respectively.

This received frame contains either a received frame $r_D(i)$ or $r_P(i)$ for the desired-station modulated by the data b or the pilot signal p, respectively. A synchronizing circuit SYN, shown in the figure, uses the final detection output b of receiver RX to generate a frame-timing $e_F$ synchronized with the desired-station as described above and the transmitting and receiving pilot-frame-timings $e_{SP}$ and $e_{RP}$, and transmits timing $e_F$ to a data-frame analyzing circuit D-AYZ, while transmitting timing $e_{RP}$ to a pilot-frame analyzing circuit P-AYZ. [These synchronizing signals could be generated without using the detection output b. For example, as described below, if the signals are transmitted through a dedicated channel or a paging channel for synchronization using bands or time slots different from those for main signals to be transmitted from the transmitting station, thereby a more reliable system is constructed.] With the aid of these synchronizing signals, analyzing circuit D-AYZ analyzes received frame $r_D(i)$, while analyzing circuit P-AYZ analyzes received frame $r_P(i)$. Analyzing circuit D-AYZ generates a demodulated output $\bar{b}_o$ for the desired-station. Thereby a more reliable system is constructed by using a pilot-response matrix [P] that is composed of analyzed outputs of analyzing circuit P-AYZ by removing the disturbance of interfering wave components included in received frame $r_D(i)$. A hard decision circuit DEC performs hard-judging of demodulated output $\bar{b}_o$ to generate detection output $\hat{b}_o$ corresponding to the transmitted information $b_0$.

Now, explain a frame configuration for base-band transmitting and received signals for use in the embodiment of Fig. 2 by referring to Fig. 3. In this case, desired-station $u_0$ sends a transmitting signal $s_0(t)$, and the interfering station $u_1$ sends a transmitting signal $s_1(t)$, and the base-station demodulates received signal $r_0(t)$ (in the case of K = 1). As shown in Fig. 3(a), transmitting wave $s_0(t)$ is composed of a sequence of extended-frames with an extended period T. The extended-frame has such a structure that a header (time width $T_h$) and a tail (time width $T_\ell$) are placed at the front and the rear outsides of the core frame (time width $T_D$). Spreading-sequences for the k-th station used for the core and extended-frames are denoted by $g_k(i)$ and $g_{Ek}(i)$, respectively. If the header and tail use a rear portion and a front portion of spreading-sequence $g_k(i)$, a portion with time width $T_D$ on an arbitrary position of sequence $g_{Ek}(i)$ becomes a cyclically shifted sequence of $g_k(i)$. Accordingly, sequence $g_{Ek}(i)$ is a cyclically extended sequence. On the other hand, the header and tail may take zero codes. In this case, sequence $g_{Ek}(i)$ becomes a spaced extended sequence. Station $u_0$ using a spreading-sequence $g_0(i)$ generates an extended spreading-sequence $g_{E0}(i)$, and modulates successively sequence $g_{E0}(i)$ with transmitting information $b_{00}, b_{01}, b_{02}, ...,$ and then sends the resultant output $s_0(t)$ with extended period T. For asynchronous communications, transmitting signal $s_1(t)$ of user $u_1$ is generally sent with a time difference $\tau'_{01} (\neq 0)$ with signal $s_0(t)$. The synchronizing information transmitted to each user by the base-station contains a signal for controlling time difference $\tau'_{01}$ so that a time difference $\tau_{01}$ between both the received frames, described below, may not be excessive.

These two transmitting signals generate multipath delayed waves. The received waves including these delayed waves are shown in Fig. 3(b). The received signal is the sum of these waves. Consider direct wave $b_{00}g_0(i)$ in the synchronously received frame for the desired-station. Synchronously received frame r(i) occupying the frame periods (time width $T_D$ shown in the figure) of $b_{00}g_0(i)$ is extracted by synchronizing signal $e_f$. This frame includes some of the interfering waves [$\mu_{01}b_{00}g_0(i), \mu_{02}b_{00}g_0(i), \mu_{10}b_{10}g_1(i),$ and $\mu_{11}b_{10}g_1(i)$]. The following condition should be set so that interfering waves on the adjacent frames may not be included into the synchronously received frame, by assuming $T_h = T_\ell$.

$$|\tau_{ok}| + |\tau*_{km}| < T_k$$

$$(k = 0,1,2,... L\text{-}1, \ m=0,1,2,...M \tag{11}$$

Then, if the relative transimitter timing $\tau'_{0k}$ for the transmitting frame is controlled by the base-station as described above, timing $\tau_{0k}$ can be restrained from taking an excessively large value. A delay time $\tau^*_{km}$ of the delayed wave (or preceding wave) indicates a time difference from the direct wave, and its upper limit depends on the natural environment of the cell. Consequently, appropriate selection of time width $T_h$ enables a demodulating operation be performed under such a quasi-synchronization condition as not being affected by the adjacent frames. This is a condition required for removing interfering wave components, which will be described later.

Then, explain the functions of pilot-frame analyzing circuit P-AYZ in Fig. 2(b). Here it is assumed that one frame of transmitting signal $s_0(t)$ shown in Fig. 3(a) is a transmitting pilot-frame $[s_{0P}(i)= pg_{E0}(i)]$which is produced by modulating the spreading-sequence with normally p = 1. The other stations send no signals during the periods of these extended transmitting frames, as stated below. The receiver can identify the frame position of this pilot-frame based on received pilot-frame-timing $e_{RP}$ supplied from synchronizing circuit SYN, and thus extracts the pilot received frame $r_{0P}(i)$. (Pilot received frame $r_{0p}(i)$ is assumed to contain no white noise. This assumption can be practically achieved by sending the transmitting pilot-frame with a higher power than the power of the data-frames or sending it a plurality of times.) Pilot-frame analyzing circuit P-AYZ is composed of a matched filter MF ($g_0$) matched to $g_0(i)$. An output (pilot-frame response) of pilot-frame analyzing circuit P-AYZ for the synchronously received pilot-flock-frame $r_{0pf}(i)$ (containing delayed waves) which is received from desired-station $u_0$ is given by the following periodical cross-correlation-function for a shift variable j (non-period cross-correlation may be also utilized):

$$\Lambda_{0f}(j) = r_{0pf}(i) * \overline{g_0(i)} = \sum_{s=0}^{L-1} p_{0s}\delta(j-s) \tag{12}$$

$$p_{0s} = \sum_{m=0}^{M} \mu_{0m}\lambda^m{}_{00}(s) \tag{13}$$

$$\lambda^m{}_{00}(j) = \frac{1}{L}\sum_{i=0}^{L-1} c_{0i}\overline{c_{0i+m-j}} \tag{14}$$

where, $*$ denotes a convolution operation symbol, $\overline{\phantom{x}}$ denotes a symbol indicating a conjugate, $\delta$ denotes a delta function, $\lambda^m{}_{00}(j)$ denotes the cross-correlation value between a sequence $g_0(i)$ and a partial sequence with time width $T_D$ obtained by delaying sequence $g_0(i)$ by $mT_c$, $c_{0i}$ denotes the i-th chip amplitude, and a subscript i+m-j takes the value of mod L. [as a discret-value representation of shift axis variable $\tau = jT_c$ and a shift value $\tau_s = sT_c$, a shift variable j and a shift parameter s are used.] Further, $p_{0S}$ denotes the sum of the s-shift correlation outputs obtained from the direct and delayed waves, that is, an s-shift synthesized correlation output obtained from the pilot-frame of user-station $u_0$.

In general, an output from pilot-frame analyzing circuit P-AYZ obtained from the pilot-frame sent by user-station $u_k$ is expressed by:

$$\Lambda_{kf}(j) = r_{kpf}(i) * \overline{g_0(i)} = \sum_{s=0}^{L-1} p_{ks}\delta(j-s) \tag{15}$$

$$p_{ks} = \sum_{m=0}^{M} \mu_{km}\lambda^m{}_{0k}(s) \tag{16}$$

$$\lambda^m{}_{0k}(j) = \frac{1}{L}\sum_{i=0}^{L-1} c_{0i}\overline{c_{k,i+m-j+i'(0,k)}} \qquad , \qquad (17)$$

where $\lambda^m{}_{0k}(j)$ denotes the cross-correlation value between the sequence $g_0(i)$ and a partial sequence with time width $T_D$ obtained by delaying sequence $g_k(j)$ by $mT_c$, $i'(0,k)$ is equal to $\tau_{0k}/T_c$, and $p_{0S}$ and $p_{kS}$ denote values corresponding to elements in the 0- and k-th rows of a matrix [P], described later.

Data-frame analyzing circuit D-AYZ in Fig. 2(b) analyzes synchronously received data-frame $r_D(i)$ in Fig. 3(b) in the following manner : Here, frame $r_D(i)$ corresponds to r(i) in Equation (10). First, the periodical cross-correlation-function $\Phi$ (j) between received frame r(i) and sequence $g_0(i)$ is obtained. Since function $\Phi(j)$ is obtained by multiplying the response (correlation-function) of a pilot-frame $s_{kP}(i)$ which user-station $u_k$ has sent by the transmitting information $b_k$ and then adding the respective multiplied products together, the following equation is established.

$$\left.\begin{aligned}
\Phi(j) &= r(i)*\overline{g_0(i)} = \sum_{S=0}^{L-1}\Phi_S\delta(j-s) \\
\Phi_s &= \sum_{k=0}^{K} b_k p_{ks} + \phi_k = \sum_{k=0}^{K}\tilde{b}_k p_{ks} \\
\tilde{b}_k &= b_k + \varepsilon
\end{aligned}\right\} \qquad (18)$$

where $\emptyset_k$ and $\varepsilon$ denote a correlation error and a detection output error corresponding to the white noise x(i) and they are both random variables.

Thus, for the k-th demodulated output $\tilde{b}_k$ that is an unknown, the following L-element linear simultaneous equations are obtained.

$$[P][\tilde{b}] = [\Phi]$$

$$\left.\begin{pmatrix} p_{00} & p_{01} & \cdots & p_{0,K} \\ p_{10} & p_{11} & \cdots & p_{1,K} \\ \vdots & \vdots & & \vdots \\ p_{L-1,0} & p_{L-1,1} & \cdots & \end{pmatrix}\begin{pmatrix} \tilde{b}_0 \\ \tilde{b}_1 \\ \vdots \\ \tilde{b}_K \end{pmatrix} = \begin{pmatrix} \Phi_0 \\ \Phi_1 \\ \vdots \\ \Phi_{L-1} \end{pmatrix}\right\} \qquad (19)$$

where, matrix [P] is generated by transposing the k-th row, the k-th output from pilot-frame analyzing circuit P-AYZ, to the k-th column [$p_{ks}$(s = 0,1,2, ..... L-1) → $p_{sk}$]. Since a value $\mu_{km}$ is a complex number, a value $p_{sk}$ is also a complex number. However, their real components alone can be used. Equation (19) can be solved for K ≤ (L-1). Data-frame analyzing circuit D-AYZ applies received data-frame $r_D(i)$[= r(i)] to matched filter MF($g_0$) to produce cross-correlation-function $\Phi(j)$ and then produce a matrix $[\tilde{b}]^T = [\tilde{b}_0, \tilde{b}_1,...\tilde{b}_k]$ using matrix [P]. Unknown $\tilde{b}_k$ in matrix $[\tilde{b}]^T$ is applied to a decision circuit DEC in Fig. 2(b) to hard-judge resulting in producing detection output $\hat{b}_0$ for information transmitted by the desired-station. This method makes it possible to detect the information transmitted by the desired-station, in a way of removing the interfering effects due to the self-interference and inter-station interference. The less white noise x(i)is, the less the error rate is, because of $|\varepsilon| << 1$ in Eq. (18).

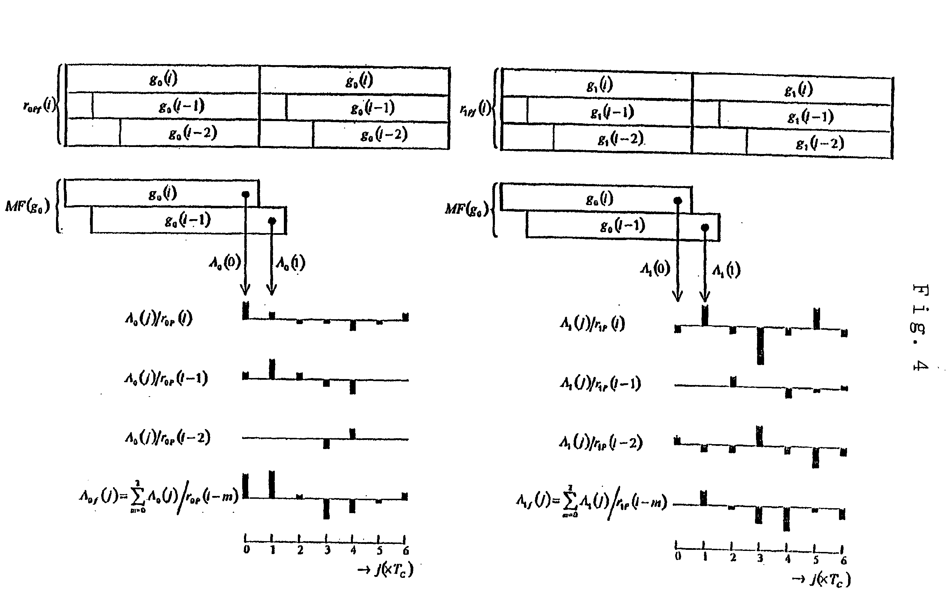

Figure 4 is a characteristic diagram of cross-correlation-function. The upper part of this figure is a modeled representation of synchronously received inputs $r_{0pf}(i)$ and $r_{1pf}(i)$for M = 2 in Eq. (10) and a sequence $g_0(i)$ equipped

in the matched filter. The lower part shows the correlation-functions [$\Lambda_0(j)/r_{0p}(i)$, $\Lambda_0(j)/r_{0p}(i-1)$, etc.] with the direct and delayed waves, and the synthesized outputs $\Lambda_{0f}(j)$ and $\Lambda_{1f}(j)$.

In the above description, sequence $g_0(i)$ is used as a despread-analyzing sequence which receiver RX uses to demodulate the synchronously received data-frame for the desired-station, but an arbitrary analyzing sequence with chip length of L. For example, an L chip sequence located of a synchronously received pilot-frame $r_{0pf}(i)$ [= $r_{0f}(i)$] containing delayed waves, shown by Eq. (10), may be used instead of sequence $g_0(i)$. In this case, equations corresponding to Eqs. (12), (15), and (18) are obtained by replacing $\overline{g_0(i)}$ in these equations with $\overline{r_{0pf}(i)}$ and then the analysis is performed by changing Eqs. (13), (14), (16), and (17). The spreading-sequence $g_k(i)$ used in the first embodiment is not particularly restrained but an arbitrary sequence may be used.

Next, if the rank of matrix [P] in Eq. (19) is less than L, this equation cannot be solved. A counter measure to be taken in this case is shown below. Matrix [P] can generally be converted into the following equation by means of LU resolution.

$$
[P]=[L]\ [U]
$$

$$
[L]=\begin{pmatrix}
1 & & & & \\
\ell_{10} & 1 & & \mathbf{0} & \\
\ell_{20} & \ell_{21} & 1 & & \\
\vdots & \vdots & \vdots & \ddots & \\
\ell_{L-1,0} & \ell_{L-1,1} & \ell_{L-1,2} & \cdots & 1
\end{pmatrix}
$$

$$
[U]=\begin{pmatrix}
u_{00} & u_{01} & u_{02} & \cdots & u_{0,L-1} \\
 & u_{11} & u_{12} & \cdots & u_{1,L-1} \\
 & & u_{22} & \cdots & u_{2,L-1} \\
 & \mathbf{0} & & \ddots & \vdots \\
 & & & & u_{L-1,L-1}
\end{pmatrix}
$$

$$(20)$$

Matrix [P] can thus be expressed by the product of the two matrices. Then, a normalized value of the lowest value $u_{L-1}$ of the diagonal elements $u_i (i = 0,1,2,...L-1)$ of the matrix [U] is found as follows:

$$
U^*L\text{-}1,L\text{-}1 = U_{L-1,L-1} / U_{00} \tag{21}
$$

Then, if $u^*_{L-1,L-1} \ll 1$, Eq. (19) cannot be solved or is likely to be affected by noise x(i) even if it could be solved. Accordingly, $|\varepsilon|$ in Eq. (18) takes an excessively large value, resulting in increase of the error rate. To solve this problem, for example, the rightmost matrix $[p_{0,K}, p_{1,K},...p_{L-1,K}]$ of matrix [P] in Eq. (19) is substituted with a matrix $[A]^T = [a_0, a_1,...a_{L-1}]$ to change matrix [P] as follows:

$$[P] = \begin{Bmatrix} p_{00} & p_{01} & \cdots & p_{0,K-1} & a_0 \\ p_{10} & p_{11} & \cdots & p_{1,K-1} & a_1 \\ \vdots & \vdots & \cdots & \vdots & \vdots \\ p_{L-1,0} & p_{L-1,1} & \cdots & p_{L-1,K-1} & a_{L-1} \end{Bmatrix} \qquad (22)$$

This modification can be performed by excluding the K-th user $u_k$ from the communication service targets and using matrix $[A]^T = [a_0, a_1,...a_{L-1}]$ in place of the K-th reception response for $r_{pkf}$. By resolving Eq. (22) with the method of LU resolution, the minimum diagonal element $u^*_{L-1,L-1}$ of the matrix U is obtained with the following expression:

$$u^*_{L-1,L-1} = \sum_{k=0}^{L-1} a_k \pi_k \qquad (23)$$

where $\pi_k$ denotes a constant determined by all the elements in matrix [P] except those of matrix [A]. Thus, decrease in the rank of matrix [P] and increase in error $|\varepsilon|$ can be avoided by selecting the polarity of respective components $a_k$ of the diagonal element $u^*_{L-1,L-1}$ so that respective components $a_k\pi_k$ of the diagonal element $u^*_{L-1,L-1}$ may take the same polarity.

In this case, a determinant of matrix [P] in Eq. (22) is obtained by multiplying the value of Eq. (23) by a constant. Therefore, using this determinant, the polarity of the component $a_k$ can be also determined. After the polarity has been determined as described above, $|a_k| = 1$ (or another constant) can be simply selected.

Although the number of users K+1 whom this system can provide real services based on this method decreases from L to L-1 (K+1 = L-1), this method has an advantage of achieving a low error rate even under a condition of low received signal to noise ratio SNR.

In the above description, the means has been shown which defines an analyzing sequence such as $g_0(i)$ or $r_{0pf}(i)$, subsequently produces matrix [P] on the basis of pilot-frame response $\Lambda_{0f}(j)$ [Eq. (12)] using the sequence, and then solves the L-element linear equation [Eq. (19)] to find the demodulated output $\bar{b}$. Now, another means will be shown which defines a pilot-frame response $Y_{k0}(j)$ with a new orthogonal property and then analyzes received input r(i) using the response in order to produce demodulated output $\bar{b}$.

First, the j-shift periodical correlation-function $Y_{00}(j)$ for pilot-flock-frame $r_{0pf}(i)$ coming from user $u_0$ is defined as:

$$Y_{00}(j) = \frac{1}{L}\sum_{i=0}^{L-1} r_{0pf}(i) \cdot \overline{y_0(i-j)} = 1 \qquad (j=0)$$
$$= 0 \qquad (j \neq 0) \qquad \Bigg\} \quad (24)$$
$$(j = 0,1,2,....L-1, \quad i-j : mod \, L),$$

where $y_0(i)$ denotes an orthogonal analyzing sequence with length L which is orthogonal to given pilot-flock-frame $r_{0pf}(i)$ except for the 0 shift. Since Eq. (24) is composed of L equations, one sequence $y_0(i)$ can be obtained unless the rank decreases less than L. [Pilot-flock-frame $r_{0pf}(i)$ and sequence $y_0(i)$ may be complex or real sequences.] With the method shown in Eq. (22), the rank reduction can be avoided by reducing the number of users K+1, thus ensuring that sequence $y_0(i)$ can be obtained. Here, it is assumed that the rank reduction does not take place.

The 0-shift-correlation $Y_{k0}$ between sequence $y_0(i)$ and pilot-flock-frame $r_{pkf}(i)$ coming from the k-th interfering station $u_k(k \neq 0)$ is represented by:

$$Y_{k0} = \frac{1}{L}\sum_{i=0}^{L-1} r_{pkf}(i) \cdot \overline{y_0(i)} \qquad (25)$$

The 0-shift-correlation $Y_{k0}$ corresponds to an amount indicating the interference due to the k station. Thus, an interference analyzing sequence $w_0(i)$ with length L is defined as:

$$
\left.
\begin{aligned}
W_{k0} &= \frac{1}{L}\sum_{i=0}^{L-1} r_{kf}(i) \cdot \overline{w_0(i)} \\
&= 0 \qquad (k = 0) \\
&= Y_{k0} \qquad (k \neq 0)
\end{aligned}
\right\} \qquad (26)
$$

A sequence $w_0(i)$ satisfying L equations such as the one shown above can be obtained using the same method as that shown in Eq. (24). Consequently, the 0-shift-correlation output between synchronously received input frame r(i) and the analyzing sequence is given by,

$$
\left.
\begin{aligned}
R_0 &= \frac{1}{L}\sum_{i=0}^{L-1} r(i) \cdot \overline{y_0(i)} = b_0 + \sum_{k=1}^{K} b_k Y_{k0} + \varepsilon_y \\
W_0 &= \frac{1}{L}\sum_{i=0}^{L-1} r(i) \cdot \overline{w_0(i)} = \sum_{k=1}^{K} b_k W_{k0} + \varepsilon_w \; .
\end{aligned}
\right\} \qquad (27)
$$

Consequently, using the relation $W_{k0} = Y_{k0}$ ($k \neq 0$), the demodulated output is represented by,

$$
\left.
\begin{aligned}
\tilde{b}_0 &= R_0 - W_0 = b_0 + \varepsilon \\
\varepsilon &= \varepsilon_y - \varepsilon_w
\end{aligned}
\right\} \qquad (28)
$$

where $\varepsilon_y$ and $\varepsilon_w$ denote components resulting from the white noise (AWGN).

A method of using one analyzing sequence $v_0(i)$ instead of using two analyzing sequences is described below. Sequence $v_0(i)$ is assumed be a sequence such as obtained by using the method shown in Eq. (26) so as to satisfy the following 0-shift-correlations.

$$
\left.
\begin{aligned}
V_{00} &= \frac{1}{L}\sum_{i=0}^{L-1} r_{0pf}(i) \cdot \overline{v_0(i)} = 1 \\
V_{k0} &= \frac{1}{L}\sum_{i=0}^{L-1} r_{kpf}(i) \cdot \overline{v_0(i)} = 0 \quad (k \neq 0)
\end{aligned}
\right\} \qquad (29)
$$

In this case, the 0-shift-correlation output between synchronousely received input frame r(i) and analyzing sequence $v_0(i)$ corresponds to the modulated output as follows,

$$\tilde{b}_0 = V_0 = \sum_{i=0}^{L-1} r(i) \cdot \overline{v_0(i)} = b_0 + \varepsilon_v \qquad (30)$$

where $\varepsilon_v$ denotes a component corresponding to AWGN noise.

With these methods, a CDMA communications system can be constructed such that arbitrary L different sequences with length L as the transmission spreading-sequences are provided and assigning the (L-1) sequences to (L-1) users, while using the remaining one sequence for modifying the analyzing matrix. This system is characterized by being perfectly unaffected by interference noise when the pilot-frame is transmitted using the above-described means so as to make the disturbance due to AWGN negligible.

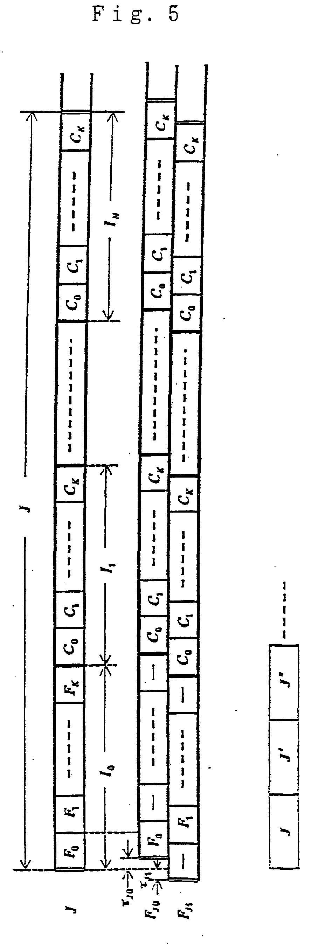

Let us describe methods of organizing the pilot and data-frames sent by respective user-stations $u_k$. These methods include a time-division method and a frequency division method. Figure 5 shows organization of a multiframe for time-division transmission. The timing information in the multiframe J shown in Fig. 5 is sent from base-station BS to respective user-stations $u_k$ using the down-link transmission system in Fig. 1. Multiframe J is repeated in the same form, as J', J", ... Multiframe J is called "the first frame". Multiframe J is composed of (N+1) of the second frames $I_n$ (n=0,1,2,.... N), and frame $I_n$ is composed of (K+1) of the third frames $F_k$(k = 0,1,2,.....K) or $C_k$. Each of the third frames transmits I-bit information and has a time width corresponding to the period T in Fig. 3. Transmitting pilot-frame $s_{kP}$ of user-station $u_k$ is sent onto the k-th frame slot $F_k$ on frame $I_0$. The other users cannot send any data on this slot, but receive only transmitting pilot-frame $s_{kP}$ and generate and store correlation output responses for all received waves including delayed waves. Thus, frame $I_0$ is a pilot-exclusive frame. On the other hand, all the user-stations can send their data-frames on frame slot $C_k$ of frame $I_n$ (n $\neq$ 0). This system is an isolated pilot transmission system.

Users receiving this multiframe timing information (for example, the pulse at the temporal top position of multiframe J) can set a transmitting multiframe based on the received timing position and can send it onto a common multiframe. If, however, the distances between base-station BS and user-stations $u_k$ are not equal, a timing error takes place due to the propagation delay time differences. Frame slots sent by user-stations $u_0$ and $u_1$ and received by base-station BS are shown as $F_{J0}$ and $F_{J1}$ (the average delay time between transmitter and receiver is assumed to be zero for convenience). $\tau_{J0}$ and $\tau_{J1}$, shown in the figure, denote the time differences between multiframe J and these slots. These time differences and $\tau_{0k}$ in Eq. (11) have relation $\tau_{0k} = \tau_{J0} - \tau_{Jk}$. Therefore, if time difference $\tau_{Jk}$ and delay time $\tau^*_{km}$ have the maximum values $\tau_{Jkmax}$ and $\tau^*_{kM}$, and the received frame time difference has the maximum value $\tau_{max}$, then the above-described demodulation can be performed without being subject to the disturbance due to the adjacent frames, as long as the following equation is met.

$$\tau_{max} = |\tau_{Jk\ max}| + |\tau^*_{kM}| < T_k \qquad (31)$$

That is, under the above condition, a boundary ($F_{BS}$) on the extended-frame-sequence of self-interference-wave $r_{0f}(t)$ and a boundary ($F_{BC}$) on the extended-frame-sequence of wave $r_{1f}(t)$ received from interfering station $u_1$ are not contained in the time zone of synchronously received frame ($T_D$), as shown in Fig. 3. Consequently, no odd-correlation-function occurs during a demodulation process for the synchronized received frame, and the above-described theory holds good.

In this context, the time difference maximum value $\tau_{max}$ can be measured when base-station BS monitors the pilot-frame of user-station $u_k$. Accordingly, whom value $\tau_{max}$ takes on excessively large value, by transmitting frame position adjusting information with a control channel to user-station $u_k$, it can control the transmitting frame-timing. As the control channel, a part of the paging channel or the frame synchronizing channel may be used.

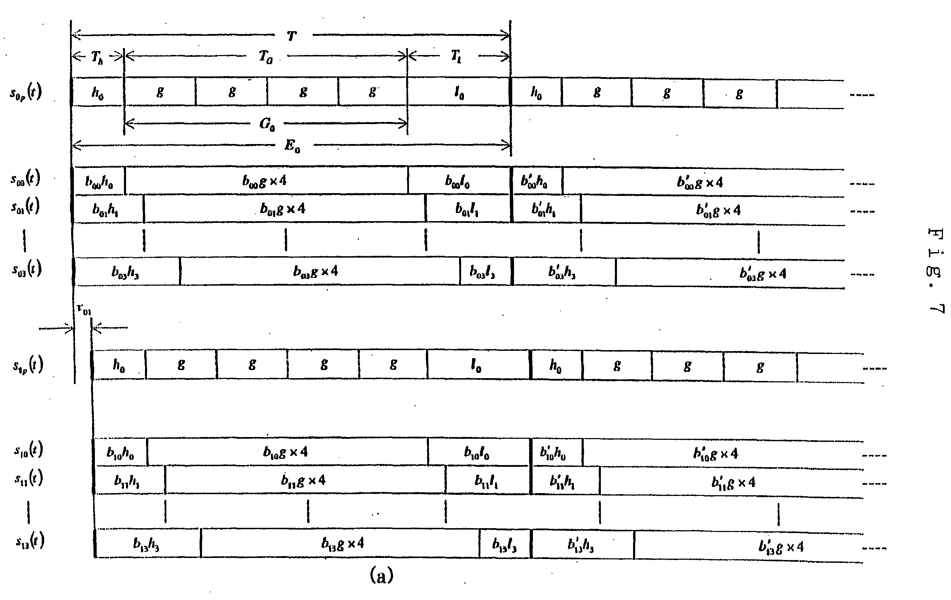

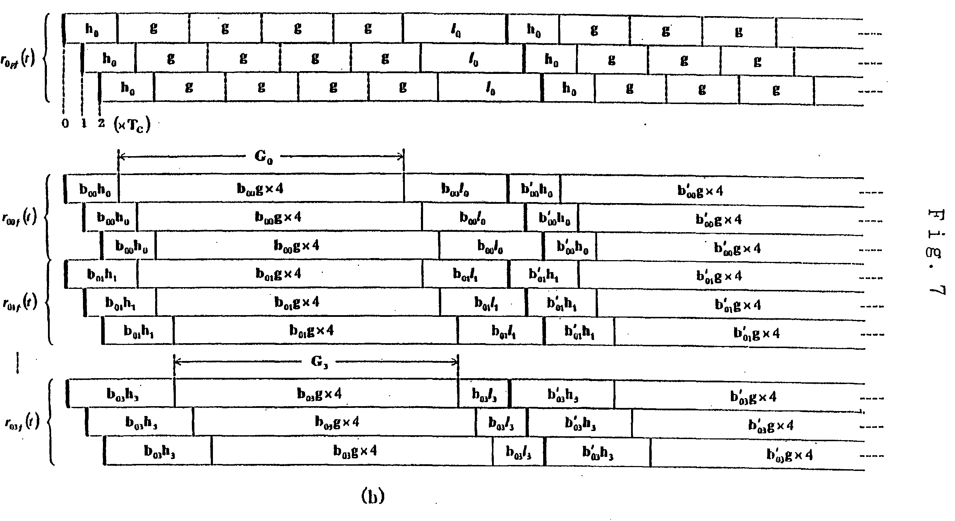

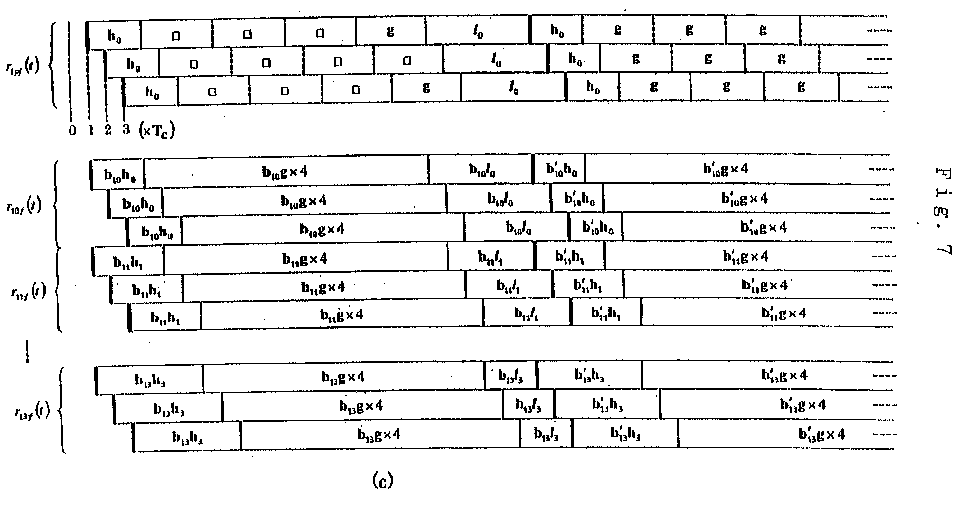

Next, let us describe a frequency division method. Figure 6(a) shows frame compositions, and Fig. 6(b) shows the corresponding frequency spectra. In Fig. 6(a), if a transmitting frame $s_B(t)$ composed of a core-spreading-sequence with length L (sequence period $T_D = LT_C$) is processed by DFT (Discrete Fourier Transformation), the spectra shown in the first stage of Fig. 7(b) are obtained. Here, it is assumed that L = 7 and each impulse is converted into a chip waveform having a square cosine spectrum for transmission. In this case, seven line spectra are made on the both sides of the frequency 0, and the amplitude of an outermost frequency ($\pm 7f_D, f_D = T^{-1}_D$) and the spectral component outside this frequency take zero.

The lower part of Fig. 6(a) shows a repeated sequence of a period $T_G$ (= $4T_D$) which is formed by arranging four pieces of the core-spreading-sequence described above. A pilot-frame $S_{0P}(t)$ and a data-frame $s_{0D}(t)$ sent by user-station $u_0$ are composed of so that repeated sequences $4g_0$ and $4b_{00}g_0$ are made in advance, and then extended sequences with period $T_E$ are made using them as the core-sequences by placing a rear portion and a front portion of sequence $g_0$ at the front and the rear outsides, those are the front portion (header, time interval $T_h$) and the rear portion (tail, time interval $T_\ell$), of the repeated sequences, respectively. A pilot and data-frames $S_{1P}(t)$ and $S_{1D}(t)$ transmitted by user-station $u_1$ are shown in a similar manner. Although time difference $\tau_{01}$ is present between these frames, it is set to be shorter than the header (tail). When these frames, designated by the synchronously received frame position $(T_G)$ of the wave transmitted from user-station $u_0$, are extracted and the outputs are processed by DFT, then the spectrum in the second stage of Fig. 6(b) is obtained.

The frequency slots of these spectra exist at the spacing of information rate $f_G$ (= $T^{-1}_G$), whose density is four times as large as that of the spectra in the first stage of Fig. 6(b). These frequency slots, however, occupy only one-fourth of all the slots. An output obtained by separately processing each of the four waves with the DFT analysis occupies the same frequency slots. In Fig. 6(a), the repeated sequences of pilot-frame $S_{1P}(t)$ and data-frame $s_{1D}(t)$ take a time-shifted position, by time $\tau_{01}$, from the time zone $T_G$ for which the discrete Fourier transformation (DFT)is applied. Due to the presence of the above-described header and tail, however, the extracted sequences on period $T_G$, each appear to be four repetitions of the same sequence, so that the frequency slots occupied by that spectrum remain unchanged.

Thus, when the transmitters at user-stations $u_0$ and $u_1$ to modulate carrier waves $f_0$, $f_1$, $f_2$, and $f_3$ spaced at intervals of $f_G$ with each of the extended-frames in Fig. 6(a) in order to produce the frames, and when the receiver extracts a portion with period $T_G$ of each output and process the extracted portion with the DFT analysis, spectra $S_{0P}$ (f), $S_{0D}(f)$, $S_{1P}(f)$, and $S_{1D}(f)$ on one-side radio-band, shown in the third stage of Fig. 6(b) are obtained. (The one-side spectra are shown for convenience.) That is, when the four extended-frames are arranged on a frequency axis, these waves are orthogonal to one another, so that the receiver can separate them from one another without any mutual interference. However, also in this case, for time difference $\tau_{01}$ between the received frame of user-stations $u_0$ and $u_1$ shown in Fig. 6 and time differences $\tau_{0M}$ and $\tau_{1M}$ (not shown) between main and delayed frames to be demodulated, the relation given by Eq. (31) must be satisfied.

This method can be applied to the first embodiment in the method of producing extended-frames by repeating each of the core frames in Fig. 3 plural times and then adding a header and a tail to each of the repeated frames, and, in addition, providing a pilot and a data carrier waves.

The method shown in Fig. 6 serves to establish a system which uses carrier waves $f_0$ and $f_2$ to transmit pilot-frames $s_{0P}(t)$ and $s_{1P}(t)$, respectively, uses carrier wave $f_1$ to transmit the first data-frames $s_{0D1}(t)$ and $s_{1D1}(t)$ from users $u_0$ and $u_1$, respectively, and uses carrier wave $f_3$ to transmit the second data-frames $s_{0D2}(t)$ and $s_{1D2}(t)$ (not shown) sent by users $u_0$ and $u_1$, respectively. This system enables each of users $u_0$ and $u_1$ to transmit one pilot-frame and two data-frames on extended-frame period $T_G$. The scale of the frequency utilization-efficiency $\eta$ of the present system can be expressed in terms of chips/bits as follows,

$$\nu = \frac{\text{Extended frame code length}}{\text{Amount of information simultaneously transmitted}} = \frac{L_G}{(N_f - N_p)(K+1)} = \frac{N_f L + L_h + L_\ell}{(N_f - N_p)(K+1)} \quad (32)$$

where $N_f$ denotes the total number of carrier waves, and $N_P$ denotes the number of pilot carrier waves. Figure 7 shows the case in which $N_f = 4$, $N_P = 2$, and $K = 1$, so if $L = 7$ and $L_n + L_\ell = 6$, then $\nu \doteqdot 8.5$. The smaller the scale $\nu$ is, the more advantageous the present system is. Let us use the condition of the maximum number of multiplexing described above, $K+1 = L-1$, and assume $N_P = L-1$ so that the pilot-frame of each user can be received every period of $T_G$.

Then, the following equation is obtained.

$$\nu = \frac{N_f L + L_k + L_\ell}{(N_f - L + 1)(L-1)} \quad (33)$$

In the above equation, if $N_f \gg L \gg 1$, then $\nu \to 1$. This means that the bandwidth occupied by this system to transmit one bit is 1 Hz and it indicates that this system operates with a smaller scale $\nu$ and significantly higher efficiency $\eta$ than conventional CDMA systems ($\nu \doteqdot 10$).

In general, for a case where the receiver does not need to receive the pilot-responses of all the users every period $T_G$, for example, one common pilot carrier wave is provided ($N_P = 1$), and pilot-frame $S_{0P}(t)$ [band $S_{0P}(f)$is assigned for ] is shared by (K+1) users and the frame is sequentially used in a time-division manner. In this case, the pilot-frame sent from each station is received every period (K+1) $T_G$. The scale $\nu$, however, is given by substituting the denominator of Eq. (32) with $(N_f - 1)L$, therefore, it is possible to further reduce scale $\nu$ by designing $N_f \gg 1$, resulting in a more advantageous system.

The system described by referring to Figs. 6 and 7 is an isolated pilot transmission system. This system has the advantage of being unaffected by interfering waves of user-stations, but requires isolated pilot time slots or frequency slots to be assigned. This may increase above-described scale $\nu$. In this regard, an effective method of transmitting pilot-information without providing isolated slots is shown below.

An analyzed sequence $z_k(i)$ perfectly orthogonal to the spreading-sequence $g_k(i)$ of user $u_k$ at shift positions except the 0 shift is defined so as to satisfy:

$$Z_{kk}(j) = \frac{1}{L}\sum_{i=0}^{L-1} g_k(i-j) \cdot z_k(i) \left.\begin{array}{l} \\ \\ = 1 \qquad (j=0) \\ \\ = 0 \qquad (j \neq 0) \end{array}\right\} \qquad (34)$$

where $Z_{kk}(j)$ denotes a periodical cross-correlation-function. If the received frame consists of the m-th delayed wave alone in pilot-flock-frame $r_{kpf}(i)$ of user-station $u_k$, then the correlation between the delayed frame and $z_k(i-m')$ is given by,

$$Z_{kk}(m,m') = \frac{1}{L}\sum_{m=0}^{M}\sum_{i=0}^{L-1}\mu_{km}g_k(i-m)\cdot z_k(i-m') \left.\begin{array}{l} \\ \\ = \mu_{km} \qquad (m=m') \\ \\ = 0 \qquad (m \neq m') \end{array}\right\} \qquad (35)$$

Thus, the amplitude of the input delayed by $m'T_C$ can be detected separately with sequence $z_k(i-m')$. Considering of interfering waves contained in the pilot-frame, the following correlation output is similarly given by,

$$Z_{kk}(m,m') = \mu_{km} + \varepsilon_I + \varepsilon_w \qquad (m=m') \left.\begin{array}{l} \\ = \varepsilon_I + \varepsilon_w \qquad (m \neq m') \end{array}\right\} \qquad (36)$$

where $\varepsilon_I$ and $\varepsilon_w$ denote correlation outputs resulting from interfering waves due to other users and white noise. It is assumed that user-station $u_k$ transmits one pilot-frame every 10 symbol frames. If the detection output of only N pilot-frames is integrated to produce the average value thereof, an influence caused by a sequence of transmitting information $b_{k'}(k' \neq k)$ sent from the k'-th interfering station generally approaches zero ($\varepsilon_I \to 0$) due to a scrambler. Since the average value of white noise is also zero, $\varepsilon_w \to 0$ is simultaneously realized. In this case, it is necessary that the pilot-frame position of the k-th station received from user-station $u_k$ does not substantially coincides with the pilot-frame position of the k'-th station received from user-station $u_{k'}(k' \neq k)$. (If the frame positions coincides with each other, the interference $\varepsilon_I$ will be a constant.) This function can be realized by such a technique that the base-station controls the pilot transmitting frame position of each station through the down-link. Further, in the frequency division method in Fig. 6, if, for example, user-station $u_k$ uses a carrier wave $f_k$ to transmit the pilot-frame of the k-th station and to transmit the data-frames of many other stations, the pilot-frames always use different carrier waves, therefore, interference $\varepsilon_I$ is not generated even if the temporal pilot-frame positions for these stations coincides with each other, thus enabling the above conditions to be met.

This is an interference admixed pilot transmission system characterized by improving the frequency utilization-efficiency.

Figure 7 is a view showing frame compositions for transmission and reception according to the second embodiment of the present invention. Here, the case in which the number of user-stations is 2(K=1) is considered. Figure 7(a) shows the base-band transmitting waveforms of user-stations $u_0$ and $u_1$. Symbol g denotes a common spreading-sequence used by user-stations $u_0$ and $u_1$. Transmitting pilot-frame $S_{0p}(t)$ of user $u_0$, is composed of an extended sequence with period $T_E$ such that a header $h_0$ and a tail $\ell_0$ may be added to the outsides of a repeated sequence with period $T_G$ made by $N_g(= 4)$ times repeating sequence g.

The transmitting data-frame of user-station $u_0$ is shown as $S_{0n}(t)(n = 0,1,2,....N-1)$. The figure shows the case of N = 4 where the time width $T_E$ contains four sequences. The extended sequence used for transmitting pilot-frame $s_{0p}(t)$ is denoted by $E_0(i)$. The sequence length $L_E$ of extended sequence $E_0(i)$ is expressed by,

$$L_E=L_k+N_gL+L_\ell \tag{37}$$

where $L_h$ and $L_\ell$ denote the lengths of the header and the tail, and $N_g$ denotes the number of repeating times of sequence g. If the extended sequence used for transmitting pilot-frame $s_{0n}(t)$ is shown as $E_n(i)$, then the extended sequence $E_n(i)$ is obtained by periodically shifting extended sequence $E_0(i)$ by n chips and is given by,

$$E_n(i)=E_0(i\text{-}n). \tag{38}$$

If a repeated sequence corresponding to a core portion of extended sequence $E_n(i)$ is defined as $G_n(i)$, repeated sequence $G_n(i)$ is given by the following equation regardless of n.

$$G_n(i)=g(i)\times 4 \tag{39}$$

Repeated sequence $G_n(i)$, however, occupies a temporal position located by n chips away from $G_0(i)$, therefore, the header length increases by n chips, whereas the tail length decreases by n chips.

Extended sequence $E_n(i)$ is multiplied by the n-th transmitting information $b_{0n}$ to produce a transmitting data-frame $s_{0n}(t)$. Thus, within time width $T_E$, user-station $u_0$ sends one pilot-frame and four data-frames; hence it sends four bits. Similarly, user-station $u_1$ uses the same extended sequence g(i) to send the frames $s_{1P}(t)$ and $s_{1n}(t)$. In this case, if frames $s_{0P}(t)$, $s_{0n}(t)$, $s_{1P}(t)$, and $s_{1n}(t)$ are transmitted on carrier waves $f_0$, $f_1$, $f_2$, and $f_3$ spaced at intervals of $f_G$, the spectra of these transmitting frames are arranged in separate frequency slots.

Since these transmitting frames each generates multipath delayed waves (the number of delayed waves is assumed to be M = 2), the received waves corresponding to frames $s_{0P}(t)$ and $s_{0n}(t)$ are shown in Fig. 7(b). Likewise, the received waves corresponding to frames $s_{1p}(t)$ and $s_{1n}(t)$ are shown in Fig. 7(c). Receiving time difference $\tau_{01}$ between the direct waves in Figs. 7(b) and 7(c) is generally not zero due to the asynchronous up-link transmission characteristics. In the figures, this deviation is assumed to be $T_c$.

While demodulating the frame $s_{0n}(t)$, the receiver extracts the core portion $G_n(i)$ from the received data-frame. Core portion $G_n(i)$ corresponds to a synchronously received frame, and a correlation output between this synchronously received frame $G_n(i)$ and the repeated sequence g (i) $\times$ 4 provided by receiver RX is produced. If the boundaries of other frames [$s_{0P}(t)$, $s_{0n}'(t)(n' \neq n)$, $s_{1P}(t) S_{1n}(t)$] is contained inside core portion $G_n(i)$, the correlation output is subjected to interference even if the signals occupy different frequency slots as a result of the DFT analysis for each frame along. Because the polarity of the spreading-sequence generally varies at the frame-boundaries depending on the transmitting information. To avoid this problem, the header and the tail are added. This interference can be avoided if the following equation is satisfied for the maximum value $\tau_{Jmax}$ of the time difference between the received direct waves and the maximum value $\tau^*_M$ for the delayed waves.

$$\left. \begin{array}{l} \tau_{max} = \left| 2\tau_{J\,max} \right| + \left| \tau^*_M \right| \le T_h \\[2em] T_\ell = T_h + \left( N_g - 1 \right) T_c \end{array} \right\} \tag{40}$$

Transmitter TX transmits one transmitting pilot-frame $s_{0P}(t)$ on carrier wave $f_0$, while receiver RX receives the synchronously received frame $r_{0Pf}(t)$ on corresponding carrier wave $f_0$. Synchronously received frame $r_{0Pf}(t)$ contains M delayed waves. When this frame is demodulated using carrier wave $f_0$ to produce correlation with the chip waveform, the following discrete sequence $r_{0Pf}(i)$ is obtained [in the following description, the subscript 0 which have been used to show the received wave of user-station $u_0$ is omitted from Eqs. (12) to (14), so as to be $\Lambda_{0f}(j) \rightarrow \Lambda_f(j)$, $\lambda_{00}(j) \rightarrow \lambda(j)$, $p_{0S} \rightarrow p_s$, and $\mu_{0m} \rightarrow \mu_m$]:

$$r_{Pf}(i) = \sum_{m=0}^{M} r_P(i-m) = \sum_{m=0}^{M} \mu_m b_0 g(i-m) \qquad (41)$$

Receiver RX outputs $G_n(i)$ in Eq. (39) from the internal sequence generator and generates a cross-correlation-function $\Lambda_f(j)$ between frame $r_{Pf}(i)$ and sequence $G_0(i)$. Since the delayed waves constitute cyclically shifted sequences, similarly to Eqs. (12) to (14), function $\Lambda_f(j)$ can be given by,

$$\left. \begin{array}{l} \Lambda_f(j) = r_{Pf}(i) * \overline{G_0(i)} = \sum_{s=0}^{L-1} p_s \delta(j-s) \\[12pt] p_s = \sum_{m=0}^{M} \mu_m \lambda^m(s) \\[12pt] \lambda^m(j) = \frac{1}{4L} \sum_{i=0}^{4L-1} c_i c_{i+m-j} \end{array} \right\} \qquad (42)$$

where $N_g L = 4L$ denotes a sequence length for the matched filter, and $\lambda^m(j)$ denotes an auto-correlation value for sequence $g(i)$ and a cyclically shifted sequence of sequence $g(i)$. Here, spreading-sequence $g(i)$ is assumed to be a self-orthogonal-sequence such that the periodical auto-correlation-function takes zero except the 0 shift. Hence, the following equations holds good:

$$\left. \begin{array}{ll} \lambda^m(j) = 1 & (j = m) \\[8pt] \quad\;\; = 0 & (j \neq m) \end{array} \right\} \qquad (43)$$

Consequently, the following equations are obtained.

$$\left. \begin{array}{ll} p_s = \mu_s & (0 \leq s \leq M) \\[8pt] \;\; = 0 & (0 > s > M) \end{array} \right\} \qquad (44)$$

The range of direct and delayed waves is assumed as ($0 \leq m \leq M$). Consequently, the multipath characteristics can be measured using function $\Lambda_f(j)$, corresponding to the pilot-frame response for desired-station $u_0$. (In the following description, the subscript 0 associated with desired-station $u_0$ will be continuously omitted.)

It is now assumed that the discrete sequence of the n-th synchronously received frame corresponding to the n-th data-frame $s_n(t)$ sent by desired-station $u_0$ is denoted by $r_{nf}(i)$ (n=0,1,2,...N-1). Since these sequences are all transmitted on the same carrier wave $f_1$, they cannot be separated from one another with conventional methods. The sum of all sequences $r_{nf}(i)$ is simply represented as an input $r(i)$, and the correlation-function between input $r(i)$ and core-sequence $G_0(i)$ is obtained with Eq. (41) similarly to Eq. (18),

$$\Phi(j) = r(i) * \overline{G_0(i)} = \sum_{n=0}^{N-1} r_{nf}(i) * \overline{G_0(i)}$$

$$= \sum_{s=0}^{L-1} \Phi_s \delta(j-s)$$

$$\Phi_s = \sum_{n=0}^{N-1} b_n \mu_{s-n} + \phi_s = \sum_{n=0}^{N-1} \tilde{b}_n \mu_{s-n} \quad (s-n : modN)$$

$$\left. \right\} \quad (45)$$

where $\phi_s$ denotes a white noise related component contained in input $r(i)$. The above equation indicates that the s-shift output $\Phi_s$ is given by $\phi_s$, $\mu_m$ is Eq. (42), and the n-th transmitting information $b_n$.

$\Phi_s$ of Eq. (45) is determined by applying input $r(i)$ to a matched filter that matches to $G_0(i)$. Hence the following N-element linear simultaneous equations are derived for unknown $\tilde{b}_n$.

$$[P][\tilde{b}] = [\Phi]$$

$$\begin{bmatrix} p_0 & p_1 & \cdots & p_{N-1} \\ p_{N-1} & p_0 & \cdots & p_{N-2} \\ \vdots & \vdots & & \vdots \\ p_1 & p_2 & \cdots & p_0 \end{bmatrix} \begin{bmatrix} \tilde{b}_0 \\ \tilde{b}_1 \\ \vdots \\ \tilde{b}_{N-1} \end{bmatrix} = \begin{bmatrix} \Phi_0 \\ \Phi_1 \\ \vdots \\ \Phi_{N-1} \end{bmatrix} \left. \right\} \quad (46)$$

In this case, matrix [P] is a cyclic matrix, the elements of which are given by Eqs. (42) to (44).

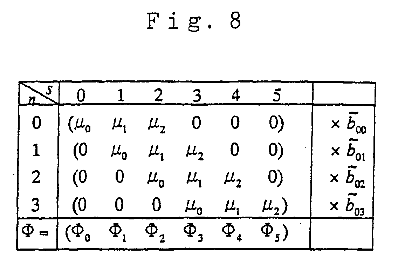

Figure 8 shows the components of correlation-function $\Phi$ where a self-orthogonal-sequence is used as the spreading-sequence, under the conditions that Eq. (43) holds good, the number of delayed waves is M = 2, the number of simultaneously transmitting frames sent over the same period T is N = 4, and the time variable is denoted by s. If a spreading-sequence that is not self-orthogonal is used as g(i), the pilot-response $\lambda^m(j)$ in Eq. (43) is not zero because (j $\neq$ m). Consequently, matrix [P] is not of cyclic but more complicated. This can be solved by selecting the (N-1)-th column vector of matrix from matrix [P] using the method shown in Eq. (22) and without sending the n-th data $b_{N-1}$, so as to avoid the rank reduction. Hence, Eq. (46) can be solved using y(i) and w(i) shown in Eqs. (24) to (28), or v(i) shown in Eqs. (29) and (30).

If a self-orthogonal-sequence is used as g(i), for the upper limit $N_{max}$ of the number N of simultaneous transmission frames, the number M of delayed waves, and the sequence length of g(i), the following relationship exists.

$$N_{max} = \infty \qquad (M \leq L)$$
$$N_{max} \leq (L-1) \qquad (M \geq L)$$
$$\qquad (47)$$

For a system where only frames $s_{0p}(t)$ and $s_{0n}(t)$ are transmitted and a repeated sequence made of two repetitions of sequence g(i) is used ($N_g = 2$), the extended-frame length is given by the following equation based on Eqs. (33) and (36).

$$L_\varepsilon = 2L_h + 2L + (N-1) \tag{48}$$

The number $\nu$ of chips required to transmit 1-bit data, where including the number of chips for the pilot-frame is included, can be represented as

$$\nu = 2L_E/(N-1). \tag{49}$$

Consequently, 2 chips/bit transmission performance can be achieved, with $N \to \infty$. If pilot-information is less frequently transmitted on the pilot-frame-sequence, and most part of this frame-sequence is used to transmit the data-frame, almost 1 chip/bit transmission performance can be achieved. This value remains unchanged even if the above-described method is used to simultaneously transmit frames $S_{1p}(t)$ and $S_{1n}(t)$ with other carrier waves $f_2$ and $f_3$.

Then, the present system can be extended to a multi-ary transmission system where a selected one of N code words $g_0, g_1, ..., g_{H-1}$ having a small cross-correlation each other, is used as spreading-sequence $g(i)$. In this case, $\log_2 H$ bits can be transmitted per transmitting frame, thereby further reducing the scale $\nu$.

Since matrix [P] in Eq. (46) is a cyclic matrix, it can be solved by means of Fourier transformation. First, the first row of matrix [P] is converted using a Fourier transformation symbol $F_N$, to obtain a matrix [$\alpha$].

$$\left( F_N \right) \begin{pmatrix} p_0 \\ p_1 \\ p_2 \\ \vdots \\ p_{N-1} \end{pmatrix} = \begin{pmatrix} \alpha_0 \\ \alpha_1 \\ \alpha_2 \\ \vdots \\ \alpha_{N-1} \end{pmatrix} \tag{50}$$

$$F_N(i,j) = \frac{1}{\sqrt{N}} exp\left[ -\frac{2\pi\sqrt{-1}}{N} ij \right] \tag{51}$$

In the above equation, $F_N(i,j)$ denotes the components of the i-th row and j-th column of matrix $[F_N]$. As result, the following relation is obtained,

$$[P] = \sqrt{N} \left( F_N \right) \begin{pmatrix} \alpha_0 & & & \\ & \alpha_1 & & 0 \\ & & \ddots & \\ 0 & & & \alpha_{N-1} \end{pmatrix} \left( F_N^{-1} \right) \tag{52}$$

$$[P]^{-1} = \frac{1}{\sqrt{N}} \left( F_N \right) \left( \begin{array}{ccc} \frac{1}{\alpha_0} & & \\ & \frac{1}{\alpha_1} & 0 \\ & & \ddots & \\ 0 & & \frac{1}{\alpha_{N-1}} \end{array} \right) \left( F_N^{-1} \right) \qquad (53)$$

When the right side of Eq. (46) is multiplied by matrix $[P]^{-1}$ from the leftside, the following equation is obtained.

$$\left( \begin{array}{c} \tilde{b}_0 \\ \tilde{b}_1 \\ \vdots \\ \tilde{b}_{N-1} \end{array} \right) = [P]^{-1} \left( \begin{array}{c} \Phi_0 \\ \Phi_1 \\ \vdots \\ \Phi_{N-1} \end{array} \right) \qquad (54)$$

Hence, solution $[\tilde{b}]$ is reduced. In this case, the rank generally does not decrease.

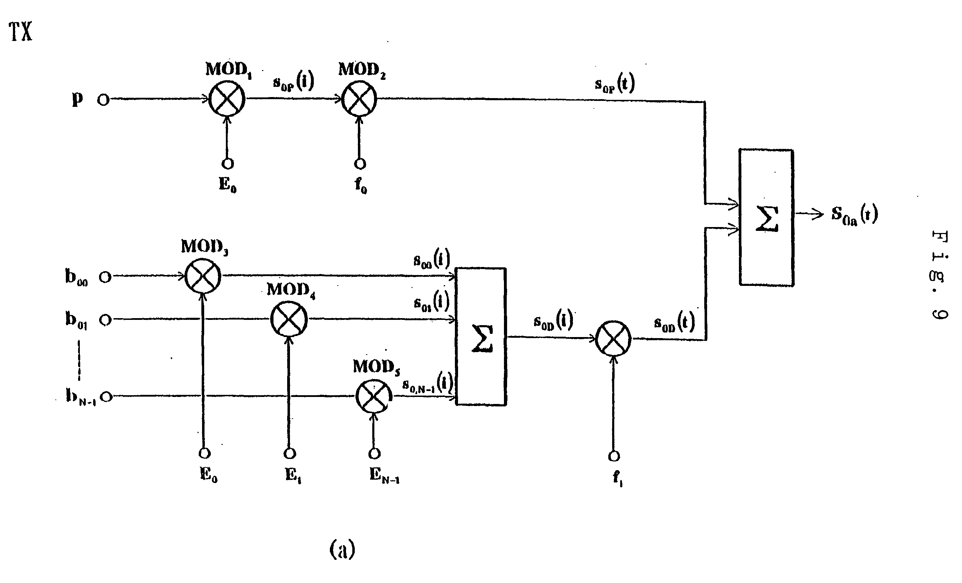

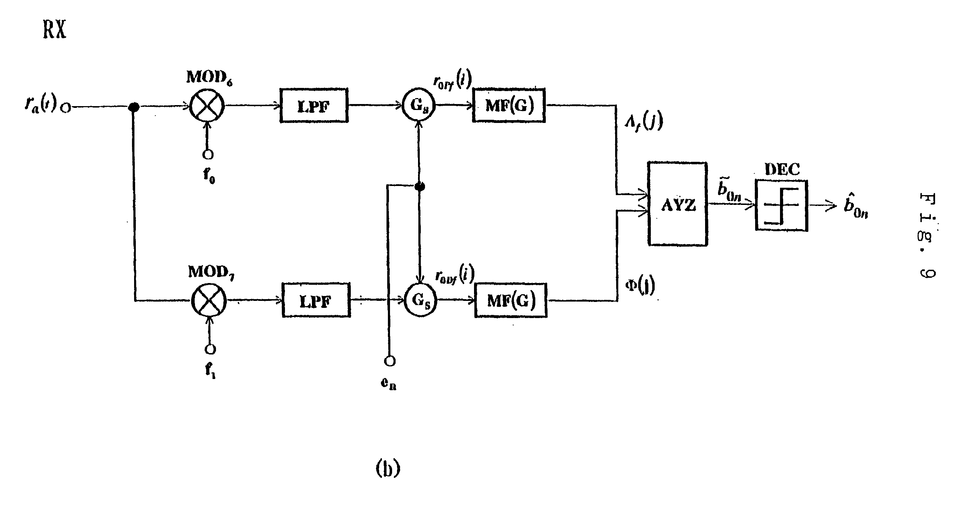

Figure 9 shows the circuit block diagram of the transmitter and the receiver according to the second embodiment. Figure 9(a) shows the circuit of transmitter TX of user-station $u_0$. The extended sequence $E_0$ in Fig. 7(a) is modulated with the pilot-information $p(= 1)$ of user-station $u_0$ and the resultant output modulates carrier wave $f_0$ to obtain an output $s_{0P}(t)$. Symbols $MOD_1$ to $MOD_5$ denote modulators. Then, extended sequences $E_0$ to $E_{N-1}$ are modulated with N-bit transmitting information $b_0$ to $b_{N-1}$, and the resultant outputs $s_{00}(i)$ to $s_{0,N-1}(i)$ are synthesized to produce an output $s_0(i)$, which then modulates carrier wave $f_1$ to thereby generate an output $s_{0D}(t)$. Outputs $s_{0P}(t)$ and $s_{0D}(t)$ are further synthesized to produce an output $s_{0a}(t)$ which is transmitted.

Figure 9(b) shows the circuit of receiver RX, which detects the information transmitted by desired-station $u_0$. The transmitting frames $s_{0a}(t)$ and $s_{1a}(t)$ sent from user-stations $u_0$ and $u_1$ are synthesized and received as a synthesized input $r_a(t)$. The pilot-flock-frame $r_{0Pf}(t)$ and data-flock-frame $r_{0Df}(t)$ contained in input $r_a(t)$ modulated on carrier waves $f_0$ and $f_1$, respectively, and are thus demodulated into base-band received signals by local carrier waves and low-pass filter LPF shown by modulators $MOD_6$ and $MOD_7$. Although not shown, these signals are correlatively demodulated with chip waveforms, the extended-frame $E_0$ is subsequently extracted therefrom using a synchronizing gate $G_s$ and a synchronizing signal $e_R$, and resultant outputs are then converted into chip impulse sequences $r_{0Pf}(i)$ and $r_{0Df}(i)$. Chip impulse sequence $r_{0Df}(i)$ is a received sequence containing all the sequences $r_{00f}(t)$ to $r_{03f}(t)$ shown in Fig. 7(b). Sequences $r_{0Pf}(i)$ and $r_{0Df}(i)$ are applied to a matched filter matched to repeated sequence $G_0$ in Fig. 7. The analyzing circuit AYZ uses the matched filter output $\Phi (j)$ and above-described $\Lambda_{0f}(j)$ to produce the n-th analyzed output $\tilde{b}_{0n}$ for the n-th information sent by user-station $u_0$. The detected output $\hat{b}_{0n}$ is obtained by hard-judging analyzed output $\tilde{b}_{0n}$ at decision circuit DEC.

As auto-orthogonal sequences to be used herein, an M sequence with DC component and 4-phase sequences such as Frank or a DFT-sequences. A 4-phase sequence with L chips may also be used as a binary sequence with 2L chips.

Next, a pair of E (even-shift orthogonal) sequences which have relationship of mates may used, instead of the auto-orthogonal sequence used in the second embodiment. Here, an E sequence pair with length L = 8, for example, shown below, is taken for explanation.

$$g_H = (+ + - + + + + -)$$

$$g_V = (+ + - + - - - +)$$

An auto-correlation-function and a cross-correlation-function for the E sequence pair take zero at even-shifts as shown by the equations below except that the 0 shift auto-correlation takes 1.

$$\Lambda_{HH}(j) = g_H * \bar{g}_H = \sum_{s=0}^{L-1} p_{HS}\delta(j-s)$$

$$\Lambda_{VV}(j) = g_V * \bar{g}_V = \sum_{s=0}^{L-1} p_{VS}\delta(j-s)$$

$$\Lambda_{HV}(j) = g_{\dot{H}} * \bar{g}_{\dot{V}} = \sum_{s=0}^{L-1} p_{CS}\delta(j-s)$$

$$\Lambda_{VH}(j) = g_{\dot{V}} * \bar{g}_{\dot{H}} = \sum_{s=0}^{L-1} p_{DS}\delta(j-s)$$

(55)

$$p_{HS} = p_{VS} = 1 \qquad (s=0)$$

$$p_{HS} = p_{VS} = p_{CS} = p_{DS} = 0 \qquad (s: \text{even}, \quad s \neq 0)$$

$$p_{HS}, \ p_{VS}, \ p_{CS}, \ p_{DS} \neq 0 \qquad (s: \text{odd})$$

(56)

Sequence $g_H$ is repeated four times to produce a repeated sequence. The above-described guard-sequences are placed at the front and the rear outsides of the repeated sequence to produce an extended sequence $E_H(n)$. An extended sequence $E_V(n)$ is similarly produced. n in parentheses denote the number in chips by which the sequences $E_H(0)$ and $E_V(0)$ are cyclically shifted. Assume that all of these extended sequences have length $L_E$. A transmitting frame with frame period $T = L_E T_C$ is considered. A cyclic period $N_P T$ is set for each of the frame slots of this transmitting frame-sequence, a slot number e(=0,1,2,....$N_P$-1) is added to each frame, and extended sequences corresponding to the slot number e are defined as $E_{He}(n)$ and $E_{Ve}(n)$. Then, sequence $E_{H0}(0)$ is assumed to be a pilot-frame, and sequences $E_{He}(n)$ and $E_{Ve}(n)$ (e ≠ 0) are assumed to be data-frames.

Here, one pilot-frame $pE_{H0}(0)$ is sent every $N_P$ slots, and receiver RX accurately detects matrix [P], a multipath response to these pilot-frames, based on the above-described theory. That is, the following equation is derived.

$$s_p(t) = pE_{H0}(0) \ (e = 0, \ n=0) \tag{57}$$

The e-th(e ≠ 0) frame slot is used to convey a data-frame and is given by:

$$s_{De}(t) = \sum_n \{b_{Hn} E_{He}(n) + b_{Vn} E_{Ve}(n)\}$$

$$(n = 0,2,4,.....L-1)$$

$$(e = 1,2,3,.....N_P - 1)$$

(58)

where $b_{Hn}$ and $b_{Vn}$ denote the n-th transmitting information.

According to the above equations, the frame slot $s_{De}$ (t) contains two types of extended-frames and such sequences as to be made with a means of shifting these extended-frames sequentially by two chips. Using matrix [P] already obtained based on frame $s_P(t)$ as well as the even-shift orthogonal property shown in Eq. (50), receiver RX, upon receiving data-frame $s_{De}(t)$, can separate and identify the L pieces of information contained in the data-frame.

In this system, for example, the transmitting frame of station $u_0$ is generated by modulating carrier wave $f_0$ with frames $s_P(t)$ and $s_{De}(t)$, and the transmitting frame of station $u_1$ is generated by modulating carrier wave $f_1$ with a similar base-band signal. (In this case, a sequence obtained by repeating the spreading-sequence $g_H$ twice should be used for the core part of extended sequence $E_H(0)$.) Comparing this system with the systems shown in Figs. 7 to 9, it may be understood that the system in Fig. 7 uses respective extended-frames which are made by means of cyclically shifting by 1-chip to transmit information, where just one type of spreading-sequences, however, are used. The system described herein requires the use of respective of the extended-frames made by means of cyclically shifting the 2-chips, where two types of extended sequences are used. Consequently, its frequency utilization-efficiency substantially equals that of the system shown in Figs. 7 to 9.

Now, the third embodiment of the present invention is described. Four 2-valued complementary sequences with sequence length 4 shown below will be considered.

$$\left\{ \begin{array}{l} A_0 = (+\ +\ +\ -) \\ \\ A_1 = (+\ -\ +\ +) \end{array} \right. \qquad \left\{ \begin{array}{l} B_0 = (+\ +\ -\ +) \\ \\ B_1 = (+\ -\ -\ -) \end{array} \right.$$

Each of these sequences is applied to a matched filter that matches to the respective sequences of its own group and the respective sequences of the other group, to obtain both-side correlation-functions. These outputs are then used to obtain an added correlation-functions where j is the shift variable as follows.

$$\left. \begin{array}{l} \ddot{E}_{(A/A)}(j) = A_0 * \overline{A}_0 + A_1 * \overline{A}_1 = \sum_{s=-3}^{3} p_{AS} \ddot{a}(j-s) \\ \\ \ddot{E}_{(B/B)}(j) = B_0 * \overline{B}_0 + B_1 * \overline{B}_1 = \sum p_{BS} \ddot{a}(j-s) \\ \\ \ddot{E}_{(B/A)}(j) = B_0 * \overline{A}_0 + B_1 * \overline{A}_1 = \sum_{s=-3}^{3} p_{CS} \ddot{a}(j-s) \\ \\ \ddot{E}_{(A/B)}(j) = A_0 * \overline{B}_0 + A_1 * \overline{B}_1 = \sum_{s=-3}^{3} p_{DS} \ddot{a}(j-s) \end{array} \right\} \qquad (59)$$

If the above set of sequences [ $(A_0, A_1), (B_0, B_1)$] are completely complementary sequences, and if $\mu_{0m} = \mu_0 = 1$, M = 0, and L = $L_M$ = 4 are assumed in Eqs. (41) to (44), then the values of the right side are given as follows.

$$p_{AS} = p_{BS} = 2\mu_0 \lambda^0(s) = 2 \qquad (s = 0)$$
$$= 0 \qquad (s \neq 0)$$
$$p_{CS} = p_{DS} = 0 \qquad\qquad\qquad\qquad (60)$$

Then, since the 0 shift value (s = 0) is the sum of correlations obtained based on two sequences, it takes 2 if the received voltage $\mu_0$ has the value of 1.

From the view point of the utilizing the property of the complementary sequences, extended sequences with sequence length $L_E$ (= 4L + 2) such as shown below are considered.

$$E_{A0} = (- A_0 \ A_0 \ A_0 \ A_0 \ +)$$

$$E_{A1} = (+ A_1 \ A_1 \ A_1 \ A_1 \ +)$$

Transmitter TX multiplies the pilot-information p(= 1) to these two extended sequences, and then uses the resultant output to modulate two carrier waves $f_0$ and $f_1$ having a frequency difference $f_G$ [= $(2LT_c)^{-1}$], respectively, thus producing the transmitting frame shown by the following equation. The transmitting frame is then set out by transmitter TX.

$$s_p(t) = [E_{A0}/f_0] + [E_{A1}/f_1] \qquad\qquad (61)$$

It is assumed that receiver RX demodulates only the received direct wave $r_P(t)$ corresponding to transmitting frame $s_P(t)$ (wave $r_P(t)$ is multiplied by carrier waves $f_0$ and $f_1$ to produce the low-frequency components thereof) and the following output $r_P(i)$ which is obtained by correlative demodulation with chip waveforms, is produced,

$$r_P(i) = [s_P(t)]f_0 + [s_P(t)]f_1$$
$$= [E_{A0}/f_0]f_0 + [E_{A1}f_1]f_1 + [E_{A0}/f_0]f_1 + [E_{A1}f_1]f_0 \qquad (62)$$
$$= E_{A0} + E_{A1}$$

where [$f_0$] denotes demodulation with carrier wave $f_0$. It is further assumed that no attenuation occurs during transmission. The third and fourth terms on the second line of the above equation take zero, because the frequency slots of the input signal are orthogonal to the demodulating carrier waves. Further, the first and second terms of the third line are obtained separately each other. If a part of the output $r_P(i)$ demodulated with carrier wave $f_0$, is added to a matched filter MF ($A_0 \ A_0$) that matches to a sequence ($A_0 \ A_0$) with sequence length $L_M$(=8), the resultant output is a correlation-function between the extended sequences $E_{A0}$ and ($A_0 \ A_0$). On the other hand, in received direct wave, if the other part of the output $r_P(t)$ demodulated with carrier wave $f_1$, is added to a similar filter, a correlation-function between the extended sequences $E_{A1}$ and ($A_1 \ A_1$) is obtained. Both outputs are added together to produce an output $\Lambda_A(j)$. Assuming that $\mu_0$ = 1, M = 0, and $L_M$ = 2L = 8 (sequence length of the matched filter) in Eqs. (42) to (44), then the output $\Lambda_A(j)$ is expressed by:

$$\Lambda_A(j) = \Lambda\left(E_{A0}/A_0A_0\right) + \Lambda\left(E_{A1}/A_1A_1\right)$$

$$= \sum_{s=-\sigma}^{\sigma} p_{PS}\,\delta(j-s) \qquad\qquad\qquad (63)$$

$$p_{PS} = 2\mu_0\lambda\,(s) = 2 \qquad\qquad (s=0)$$

$$= 0 \qquad\qquad (s\neq 0)$$

In this case, the spreading-sequence length $L_E = 4L+2 = 18$, and $\sigma = (L_E - L_M)/2\ (= 5)$ denotes the one-sided shift range. It should be noted that the actual received wave is composed of a direct wave and M delayed waves as shown by Eq. (10) and is represented as $r_{Pf}(i)$. Thus, the actual correlation-function output including similar outputs for the delayed waves is expressed by:

$$\Lambda_f(j)/r_{Pf}(i) = \sum_{m=0}^{M} 2\mu_m\Lambda^m(j) = \sum_{s=-6}^{\sigma+M} p_s\,\delta(j-s) \qquad\qquad (64)$$

$$p_S = 2\mu_m$$

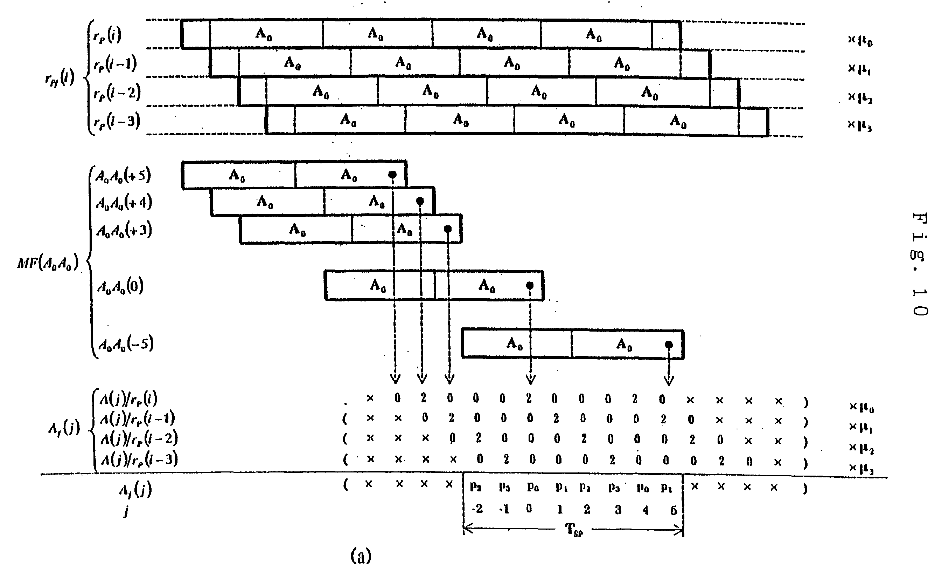

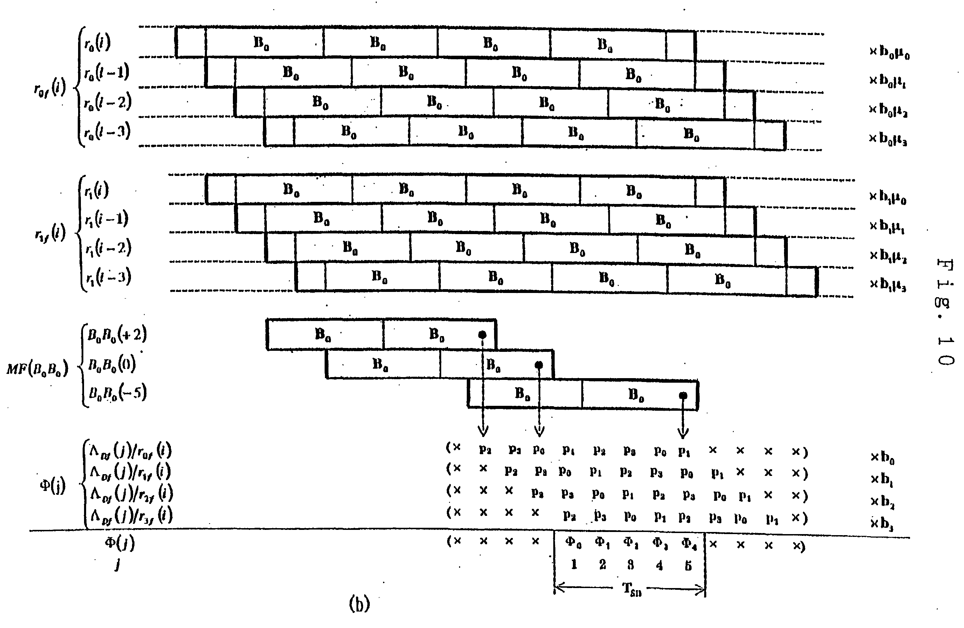

where $\mu_0$ denotes the received voltage of the direct wave, and $\mu_m\,(m\neq 0)$ denotes the received voltage of the delayed waves. Figure 10 shows the output components of matched filters according to the third embodiment. Figure 10(a) shows a response output for the pilot-frame. The upper two sections of Fig. 10(a) show the $A_0$-corresponding waves of input $r_P(i-m)$ and sequences $(A_0A_0)$ provided inside the matched filter. The sum of the $A_0$-corresponding correlation-function which is the product of the $A_0$-corresponding waves and sequences $(A_0\,A_0)$, and the similar $A_1$-corresponding correlation-function is shown as $\Lambda(j)/r_P(i-m)$. Symbol $\Lambda_f(j)$ denotes the j-shift correlation value as actually observed for the received wave containing the multipath waves. Symbol X in the figure indicates the output containing interference components due to the adjacent frames. Receiver RX to sets up a period $T_{SP}$ so as to observe the pilot-response $p_s$, using a synchronizing signal $E_{RP}$, extracting this pilot-response sequence.

Then, transmitter TX transmits N bits of transmitting information $b_n$ $(n = 0,1,2,.....N-1)$ in the same manner as described above, using complementary sequence $(B_0, B_1)$. The 0-shift and 2-shift extended sequences with length $L_E = 21$ are shown below as the example.

$$E_{B0}(0) = (+B_0B_0B_0B_0 + 0\ 0\ 0)$$

$$E_{B1}(0) = (-B_1B_1B_1B_1 + 0\ 0\ 0)$$

$$E_{B0}(2) = (0\ 0 + B_0B_0B_0B_0 + 0)$$

$$E_{B1}(2) = (0\ 0 - B_1B_1B_1B_1 + 0)$$

In general, sequence $E_{B0}(n)$ is obtained by shifting sequence $E_{B1}(0)$ by n chips, consequently it is made by adding n empty chip slots with zero to the left, and removing n right slots from the sequence. A transmitting data-frame produced based on this method is expressed by,

$$s_n(t)=[b_n E_{B0}(n)/f_0]+[b_n E_{B1}(n)/f_1]. \tag{65}$$

N transmitting data-frames are sent using the same time zone and the same frequency slots.

Receiver RX receives the following received wave which is the sum of the N data-frames and all of the delayed waves generated by these data-frames.

$$r(i) = \sum_{n=0}^{N-1} r_{nf}(i) + x(i) \tag{66}$$

$$r_{nf}(i) = \sum_{m=0}^{M} r_n(i-m) \tag{67}$$

When received wave r(i) is applied to the filter matched to sequence ($B_0$ $B_0$) and to the filter matched to the sequence ($B_1$ $B_1$) to generate an output, this output is a sequence $\Phi(j)$ which consists of the sum of the n-th correlation-function output $\Lambda_{Df}(j)/r_{nf}(i)$ with respect to n(= 0,1,2...N-1) which is the output obtained by multiplying the similar correlation-function to Eqs. (53) and (54) by information $b_n$, as follows,

$$\Lambda_{Df}(j)/r_{nf}(i) = \sum_{S=-\sigma+M}^{\sigma} b_n p_S \delta(j-s) + \varepsilon \tag{68}$$

$$\Phi(j) = \sum_{n=0}^{N-1} \Lambda_{Df}(j)/r_{nf}(i) = \sum_{S=-\sigma+M+N-1}^{\sigma} \Phi_j \delta(j-s) \tag{69}$$

where $\varepsilon$ denotes the components corresponding to the white noise x(i).

Figure 10(b) shows the n-th data-frame response $\Lambda_{Df}(j)/r_{nf}(i)$ and the output sequence of the synthesized output $\Phi(j)$ thereof, as well as inputs $r_{0f}(i)$ and $r_{1f}(i)$ and the internal sequences of the matched filter, for N = 4. The summing up range of Eq. (69) is shown in the figure as time zone $T_{SD}$, which contains no cross symbol. Receiver RX uses a synchronizing signal $e_{RD}$ to extract a data-response sequence corresponding to this time zone.

Defining pilot-response matrix [P], unknown matrix [$\tilde{b}$] and data-response matrix [$\Phi$] are defined as shown below based on the above outputs, the following N-element linear simultaneous equations are derived,

$$[P][\tilde{b}]=[\Phi]$$

$$\begin{pmatrix} p_{00} & p_{01} & p_{02} & \cdots & p_{0,N-1} \\ p_{10} & p_{11} & p_{12} & \cdots & p_{1,N-1} \\ & & & & \\ p_{N-1,0} & p_{N-1,1} & p_{N-1,2} & \cdots & p_{N-1,N-1} \end{pmatrix} \begin{pmatrix} \tilde{b}_0 \\ \tilde{b}_1 \\ \\ \tilde{b}_{N-1} \end{pmatrix} = \begin{pmatrix} \Phi_0 \\ \Phi_1 \\ \\ \Phi_{N-1} \end{pmatrix} \Bigg\} \tag{70}$$

$$p_{ij} = p_s \quad s = i - j + 1 (\mathrm{mod}\, N) \qquad (71)$$

where $p_{ij}$ denotes the element on the i-th row and j-th column of matrix [P] and $p_s$ denotes the value of Eq. (64). The n-th unknown $\tilde{b}_n$ is then solved from these simultaneous equations and the solution is then hard-judged to obtain the detection output $\hat{b}_n$. Since pilot matrix [P] stated above is cyclic, it can be solved using the method shown in Eqs. (50) to (54). Furthermore, if Eq. (70) is to be solved, y(i) and w(i) shown in Eqs. (24) to (28), or v(i) shown in Eqs. (29) and (30) may be used.

For the above-described system, complementary sequence $(A_0, A_1)$ can be assigned to the pilot-frame of user-station $u_0$, and complementary sequence $(B_0, B_1)$ can be assigned to the data-frame of user-station $u_0$. These sequences, however, cannot be used by other stations. For simultaneous transmission of data from many stations, a $\Gamma(= 2.4.16.....)$-order completely complementary sequence is used which can be produced based on Hadamard matrices. The first-, second-, and fourth-order Hadamard matrices $H_\Gamma$ are defined by:

$$H_1 = \begin{bmatrix} + & + \\ + & - \end{bmatrix} \qquad (72)$$

$$H_2 = \begin{bmatrix} + & + & + & + \\ + & - & + & - \\ + & + & - & - \\ + & - & - & + \end{bmatrix} \qquad (73)$$

$$H_4 = H_1 \otimes H_1 \otimes H_1 \otimes H_1 = \begin{bmatrix} + & + \\ + & - \end{bmatrix} \otimes \begin{bmatrix} + & + \\ + & - \end{bmatrix} \otimes \begin{bmatrix} + & + \\ + & - \end{bmatrix} \otimes \begin{bmatrix} + & + \\ + & - \end{bmatrix}$$

$$= \begin{pmatrix} + & + & + & + & + & + & + & + & + & + & + & + & + & + & + & + \\ + & - & + & - & + & - & + & - & + & - & + & - & + & - & + & - \\ + & + & - & - & + & + & - & - & + & + & - & - & + & + & - & - \\ + & - & - & + & + & - & - & + & + & - & - & + & + & - & - & + \\ + & + & + & + & - & - & - & - & + & + & + & + & - & - & - & - \\ + & - & + & - & - & + & - & + & + & - & + & - & - & + & - & + \\ + & + & - & - & - & - & + & + & + & + & - & - & - & - & + & + \\ + & - & - & + & - & + & + & - & + & - & - & + & - & + & + & - \\ + & + & + & + & + & + & + & + & - & - & - & - & - & - & - & - \\ + & - & + & - & + & - & + & - & - & + & - & + & - & + & - & + \\ + & + & - & - & + & + & - & - & - & - & + & + & - & - & + & + \\ + & - & - & + & + & - & - & + & - & + & + & - & - & + & + & - \\ + & + & + & + & - & - & - & - & - & - & - & - & + & + & + & + \\ + & - & + & - & - & + & - & + & - & + & - & + & + & - & + & - \\ + & + & - & - & - & - & + & + & - & - & + & + & + & + & - & - \\ + & - & - & + & - & + & + & - & - & + & + & - & + & - & - & + \end{pmatrix} \qquad (74)$$

where $\otimes$ is a symbol denoting a Kronecker product. Let us define a diagonal matrix such as having, as the orthogonal component a sequence, with length of 16, made by arranging all the rows of matrix $H_2$ in cascade.

$$\lambda_4 = \begin{pmatrix} + & & & & & & & & \\ & + & & & & & & & \\ & & + & & & & & & \\ & & & + & & & & 0 & \\ & & & & + & & & & \\ & & & & & - & & & \\ & & & & & & + & & \\ & & & & & & & - & \\ & & & & & & & & + \\ & & & & & & & & & - \\ & 0 & & & & & & & & & - \\ & & & & & & & & & & & + \\ & & & & & & & & & & & & - \\ & & & & & & & & & & & & & - \\ & & & & & & & & & & & & & & + \end{pmatrix} \qquad (75)$$

Then, the following product $H_4\lambda_4$ is obtained, where the respective rows are each described as a sequence $g_{hv}$ (h, v=0,1,2,3) with sequence length $L = 2^4 = 16$.

$$H_4\lambda_4 = \begin{pmatrix} + & + & + & + & + & - & + & - & + & + & - & - & + & - & - & + \\ + & - & + & - & + & + & + & + & + & - & - & + & + & + & - & - \\ + & + & - & - & + & - & - & + & + & + & + & + & + & - & + & - \\ + & - & - & + & + & + & - & - & + & - & + & - & + & + & + & + \\ + & + & + & + & - & + & - & + & + & + & - & - & - & + & + & - \\ + & - & + & - & - & - & - & - & - & + & - & - & + & - & - & + & + \\ + & + & - & - & - & + & + & - & + & + & + & + & - & + & - & + \\ + & - & - & + & - & - & + & + & + & - & + & - & - & - & - & - \\ + & + & + & + & + & - & + & - & - & - & + & + & - & + & + & - \\ + & - & + & - & + & + & + & + & - & + & + & - & - & - & + & + \\ + & + & - & - & + & - & - & + & - & - & - & - & - & + & - & + \\ + & - & - & + & + & + & - & - & - & + & - & + & - & - & - & - \\ + & + & + & + & - & + & - & + & - & - & + & + & + & - & - & + \\ + & - & + & - & - & - & - & - & - & + & + & - & + & + & - & - \\ + & + & - & - & - & + & + & - & - & - & - & - & + & - & + & - \\ + & - & - & + & - & - & + & + & - & + & - & + & + & + & + & + \end{pmatrix} = \begin{pmatrix} g_{00} \\ g_{01} \\ g_{02} \\ g_{03} \\ g_{10} \\ g_{11} \\ g_{12} \\ g_{13} \\ g_{20} \\ g_{21} \\ g_{22} \\ g_{23} \\ g_{30} \\ g_{31} \\ g_{32} \\ g_{33} \end{pmatrix} \qquad (76)$$

Denoting the element vector of the h-th row and the v-th column by sequence $g_{hv}$, the following matrix is obtained.

$$\Gamma_4 = \begin{bmatrix} (g_{00},\, g_{01},\, g_{02},\, g_{03}) \\ (g_{10},\, g_{11},\, g_{12},\, g_{13}) \\ (g_{20},\, g_{21},\, g_{22},\, g_{23}) \end{bmatrix} \tag{77}$$

Symbol $\Gamma_4$ denotes the fourth-order completely complementary sequence. The sums of the auto- and cross-correlation-functions between these element vectors have the following correlationship shown by,

$$\Lambda(g_h / g_{h'}) = \sum_{h=0}^{3} g_{hv} * \overline{g_{h'v'}}$$

$$= \sum_{s=-15}^{15} p_s \delta(j - s) \tag{78}$$

$$\left. \begin{array}{ll} p_s = 4 & (h = h',\; s = 0) \\ \phantom{p_s} = 0 & (h = h',\; s \neq 0) \\ \phantom{p_s} = 0 & (h \neq h') \end{array} \right\} \tag{79}$$

Above complementary sequences $g_{hv}$ can be used to define sequences similar to above-described repeated sequence ($A_0 \times 4$) and extended sequence ($E_{A0}$). Repeated sequence $G_{hv}$ is composed of four complementary sequences $g_{hv}$, and the extended sequence $E_{hv}$ is composed of sequence $G_{hv}$, which is preceded and followed by guard-sequences.

$$G_{hv} = (g_{hv}\; g_{hv}\; g_{hv}\; g_{hv})$$

$$E_{00}(0) = (+--+--+ g_{00}G_{00}g_{00} +++++-+)$$

$$E_{01}(0) = (--+++-- g_{01}G_{01}g_{01} +-+-+++)$$

$$E_{02}(0) = (+++++-+- g_{02}G_{02}g_{02} ++---+--)$$

$$E_{03}(0) = (-+-++++ g_{03}G_{03}g_{03} +--+++-)$$

Similar extended sequence $E_{hv}(0)(h \neq 0)$ can be generated. For transmission of the pilot and data-frame of user-station $u_0$, sets of extended sequences $E_{0v}$ and $E_{1V}$ are assigned to user-station $u_0$. If extended sequence $E_{hv}$ is used to modulate the carrier wave $f_v$ for transmission, the transmitting pilot and data-frames of user-station $u_0$ are, as in Eqs. (61) and (65), given by,

$$s_{0P}(t) = \sum_{v=0}^{3} [E_{0v} / f_v] \tag{80}$$

$$s_{0n}(t) = \sum_{v=0}^{3}\left[b_{0n}E_{1v}(n)/f_v\right] \tag{81}$$

where $b_{0n}$ denotes the n-th transmitting information of user-station $u_0$, and $E_{1v}(n)$ denotes a sequence obtained by shifting sequence $E_{0v}$ by n chips in the same manner as for the generation of sequence $E_{B0}(n)$. Since n = 0,1,2,....N-1 and N = L, then L bits can be transmitted using sequence $E_{hv}$ with sequence length $L_E$.

Similarly, sets of extended sequences $E_{2v}$ and $E_{3v}$ are assigned to user-station $u_1$ in order to transmit the pilot- and data-frames therefrom, and a pilot-frame $[E_{2v}/f_v]$ and the n-th data-frame $[b_{1n}E_{3v}/f_v]$ ($b_{1n}$: the n-th transmitting information) are produced on the same carrier wave $f_v$, as in Eqs. (80) and (81). When the receiver receives the transmitting frames sent from the two stations in the above manner and analyzes and demodulates the frames in the above-described manner with the assistance of the pilot-frames of these stations, estimated values $\tilde{b}_{0n}$ and $\tilde{b}_{1n}$ for the transmitted information can be produced without the interference of delayed or interfering waves. These values can be hard-judged to obtain detection outputs $b_{0n}$ and $b_{1n}$.

Increasing the order $\Gamma$ ($\Gamma = 2^\gamma$, $\gamma$=1,2,3.....) of sequence set, $\Gamma$ sets of sequences can be utilized. If two sets of sequences are assigned to each station for pilot and data-frames, ($\Gamma/2$) user-stations can simultaneously use these complementary sequences to make communications without being subject to the interference.

Let us describe, the frequency utilization-efficiency of the present invention. The length $L_E$ of the extended sequence and the information capacity (the number of bits) I that can be simultaneously sent by all the user-stations are given by,

$$\left.\begin{array}{l} L_E = \Gamma^3 + 4\Gamma^2 - 3 \\[2mm] I = \dfrac{\Gamma^2 N}{2} = \dfrac{\Gamma^3}{2} \; , \end{array}\right\} \tag{82}$$

Thus, the number of chips required per bit is represented by,

$$\left.\begin{array}{l} v = \dfrac{2\left(\Gamma^3 + 4\Gamma^2 - 3\right)}{\Gamma^3} \\[3mm] \fallingdotseq 2 \qquad (\Gamma \gg 1) \; . \end{array}\right\} \tag{83}$$

Each user may also use the transmitting frames for pilot transmission once in several symbol transmissions and for data transmission during the other periods. Alternatively, only one set of sequences may be assigned to the pilot-frame so as to be used by all the user-stations in time-division manner. With these methods, by approaching to $v \fallingdotseq 1$ ($\Gamma$ 1), thus one chip/bit transmission performance may be achieved.

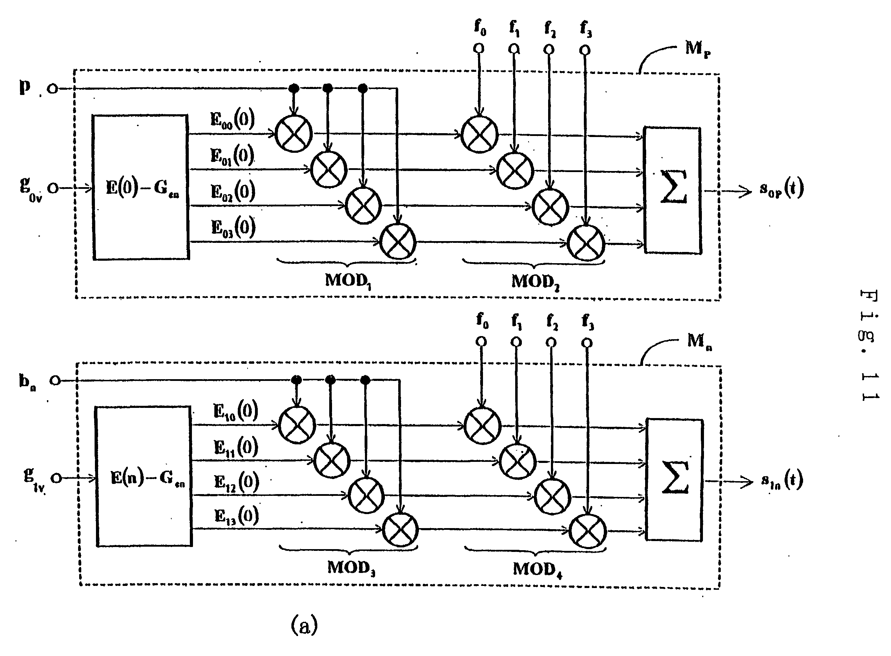

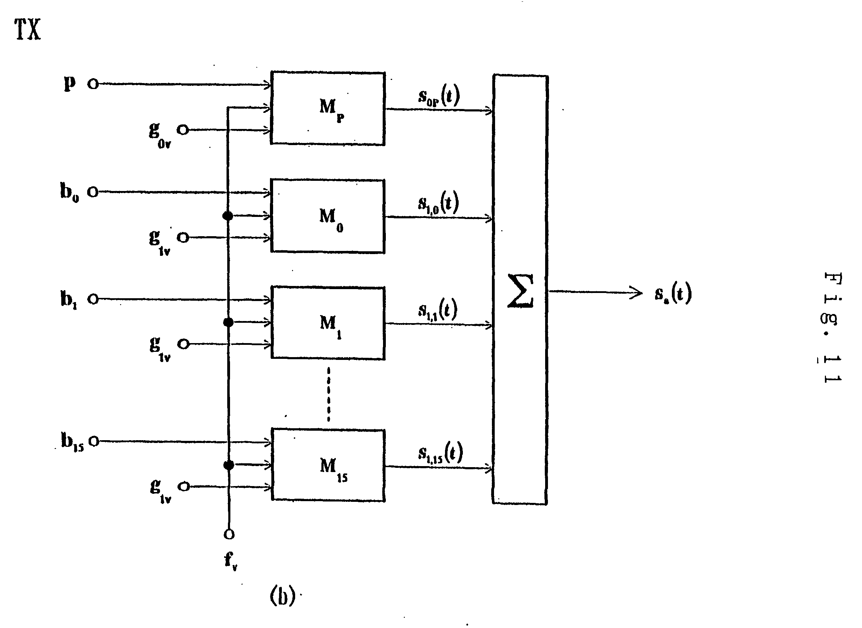

Figure 11 shows the circuits diagrams of the transmitter and the receiver according to the third embodiment of the present invention, which use complete complementary sequences with $\Gamma = 4$. Figure 11(a) shows a partial circuit of the transmitter at user-station $u_0$; the upper part thereof shows a modulation circuit for generating a pilot-frame, whereas the lower part shows a modulation circuit for generating the n-th data-frame. An extended sequence generator E(0)-Gen generates four sequences $E_{0v}(0)$ using complementary sequence $g_{0v}$. At the four modulators $MOD_1$ pilot-information p modulates all the sequences of $E_{0v}(0)$, and the resultant outputs are applied to modulators $MOD_2$, to modulate carrier wave $f_v$. The modulated outputs obtained are synthesized by a synthesizer $\Sigma$ to generate a pilot-frame $S_{0P}(t)$. (Since p = 1, modulators $MOD_1$ may be omitted, and sequences $E_{0v}$ may be applied directly to modulators $MOD_2$.)

On the other hand, extended sequence generator E(n)-Gen generates four sequences $E_{1v}(n)$ using complementary sequence $g_{1v}$. At the four modulators $MOD_3$, transmitting information $b_n$ modulates corresponding sequence

$E_{1v}(n)$. Then, at the four modulators $MOD_4$ the respective modulated outputs obtained modulate carrier waves $f_v$. The resultant modulated outputs are synthesized by synthesizer $\Sigma$ to generate the n-th data-frame $s_{1n}(t)$.

Figure 11(b) shows a circuit of the transmitter at user-station $u_0$, which is composed of the partial circuit $M_P$ and 16 partial circuits $M_n(n=0,1,2,.....15)$,both $M_q$ and $M_n$ are shown in Fig. 11(a). Outputs from these partial circuits are synthesized by synthesizer $\Sigma$ to generate a transmitting signal $s_a(t)$.

Figure 11(c) shows a circuit of the receiver for receiving and demodulating signals sent by desired-station $u_0$. An input signal $r_a(t)$ contains waves $s_{0P}(t)$ and $s_{1P}(t)$ and waves $s_{0n}(t)$ and $s_{1n}(t)$, as well as their delayed waves. At the four modulators $MOD_5$, input signal $r_a(t)$ is demodulated by four local carrier waves $f_v$ and low-pass filters LPF, and resultant outputs are then correlatively demodulated with chip waveform $w(t)$ (not shown in the figure) to obtain four chip impulse sequences $r(i)/f_v$. These chip impulse sequences are applied to illustrated matched filters $MF(S_{0v})$ and $MF(S_{1v})$, respectively.

An output from matched filter $MF(S_{0v})$ shown in Fig. 10(a) is pilot-response $\Lambda_f(j)$, which determines element $p_{ij}$ in Eq. (64). The output from matched filter $MF(S_{1v})$ is function $\Phi(j)$. The synchronizing pulses $e_{RP}$ and $e_{RD}$ applied to the synchronizing gate produces only useful outputs to be transmitted to analyzing circuit AYZ. Analyzing circuit AYZ mathematically determines unknown $\tilde{b}_n$ using Eq. (70). Unknown $\tilde{b}_n$ is hard-judged by decision circuit DEC to detect information $b_n$ transmitted by user $u_0$.

Most of the above-described operations are easily performed using digital signal processing, thus enabling demodulation and detection without any interference.

In the above embodiment, for example, with $e_{0n}(t)$ (n = 1,3,.......N-2), the transmitting frames are composed of using sequences made by means of two chips-spacing, thereby enabling N/2 bits/frame transmission. In general, the sequences made by means of spacing with an arbitrary number of chips can be utilized.

Further, M* types of code words are provided as complementary sequence $g_{1v}$ used to transmit the data-frame of user-station $u_0$ and they are described as $g^m_{1v}(m=0,1,2,.....M*-1)$. For m' < M*, between the code words $g^m_{hv}$ and $g^{m'}_{h'v}$ (h' ≠ h), the above-described complete complementary relation exists. For code words $g^m_{hv}$ and $g^{m'}_{hv}$ (m ≠ m'), however, orthogonal relation is not required. It is sufficient unless their cross-correlation-function takes an excessively large value. An example of such code words has been documented in detail (Technical report of the Institute of Electronics, Information and Communication Engineers, IT98-65). Transmitter TX at user-station $u_0$ selects one of the M* types of code words $g^m_{1v}$ for transmission, thereby enabling $N\log_2 M*$ bit/frame transmission.

Furthermore, M* multi-levels are provided instead of limiting transmitting information $b_n$ to binary values (±1), and transmitter TX transmits one of these levels. Receiver RX applies unknown $\tilde{b}_n$ to M* hard decision circuits whose outputs give one of the level transmitted. This method enables $N\log_2 M*$ bit/frame transmission. These methods reduce the value of scale ν by $1/\log_2 M*$ times.

It is assumed that each cell $C_p(p = 1,2,3,...)$ of a mobile communications system uses a set $\Gamma_p$ of complete complementary sequences. Since all the cells use the same frequency band, therefore the inter-cell interference must be suppressed by reducing the correlation between set $\Gamma p$ and the set $\Gamma p'$ (p ≠ p'). Many kinds of sets $\Gamma_p$ of complete complementary sequences can be provided using the p-th matrix Hp which is obtained by replacing the rows and columns of Hadamard matrix in Eq. (74) with different ones in an arbitrary manner. Hence the above object can be attained by selecting some candidate sets which have less cross-correlation each other, and assigning them to the cells.

The first to third embodiments of the present invention include a process of digital signal processing to solve the simultaneous equations. Let us explain a technique which makes it possible to perform the processing using simple operations, based on the fact that even mobile communications require only one pilot-frame response every 10 to $10^3$ data-frames.

Consider solving the following simultaneous linear equations, which are composed of known matrix [P], unknown set [$\tilde{b}$] and observed data-response matrix [$\Phi$].

$$\left. \begin{array}{l} p_{11}\,\tilde{b}_1 + p_{12}\,\tilde{b}_2 + ... + p_{1N}\,\tilde{b}_N = \Phi_1 \\ p_{21}\,\tilde{b}_2 + p_{22}\,\tilde{b}_2 + ... + p_{2N}\,\tilde{b}_N = \Phi_2 \\ \quad\vdots \\ p_{N1}\,\tilde{b}_1 + p_{N2}\,\tilde{b}_2 + ... + p_{NN}\,\tilde{b}_N = \Phi_N \end{array} \right\} \qquad (84)$$

It is assumed that the elements $p_{ij}$ (i, j = 1, 2, 3, ... N) are fixed and the observed value $\Phi_i$ varies. Then, as N simultaneous linear equations, $E_{q1}$ to $E_{qN}$ are set as follows,

$$Eq_1 : \begin{cases} [\Phi] = [1, 0, 0, \ldots 0] \\ [\tilde{b}_i] = [\tilde{b}_{11}, \tilde{b}_{12}, \ldots \tilde{b}_{1N}] \end{cases}$$

$$Eq_2 : \begin{cases} [\Phi] = [0, 1, 0, \ldots 0] \\ [\tilde{b}_2] = [\tilde{b}_{21}, \tilde{b}_{22}, \ldots \tilde{b}_{2N}] \end{cases}$$

$$\vdots$$

$$Eq_N : \begin{cases} [\Phi] = [0, 0, 0, \ldots 1] \\ [\tilde{b}_N] = [\tilde{b}_{N1}, \tilde{b}_{N2}, \ldots \tilde{b}_{NN}] \end{cases}$$

$$(85)$$

where $E_{q1}$ indicates what virtual solutions are obtained with a transposed virtual matrix of the right side of Eq. (84) given by $[\Phi] = [1,0,\ldots 0]$ and the virtual solutions take matrix $[\tilde{b}_i]$. When N virtual solution matrices thus are obtained, the correct solution is given by:

$$\tilde{b} = \sum_{i=0}^{N} \Phi_i [\tilde{b}_i]$$

$$\tilde{b}_1 = \Phi_1 \tilde{b}_{11} + \Phi_2 \tilde{b}_{12} + \ldots + \Phi_N \tilde{b}_{1N}$$

$$\tilde{b}_2 = \Phi_1 \tilde{b}_{21} + \Phi_2 \tilde{b}_{22} + \ldots + \Phi_N \tilde{b}_{2N}$$

$$\vdots$$

$$\tilde{b}_N = \Phi_1 \tilde{b}_{N1} + \Phi_2 \tilde{b}_{N2} + \ldots + \Phi_N \tilde{b}_{NN}$$

$$(86)$$

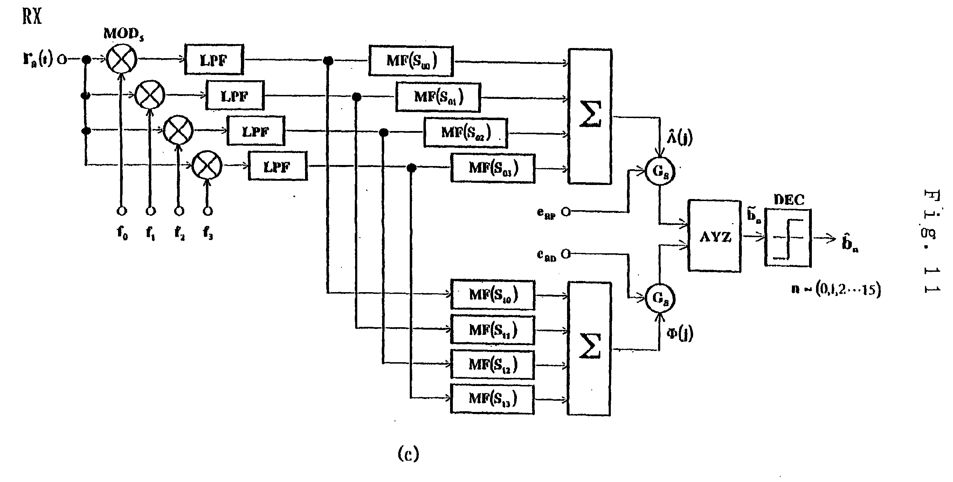

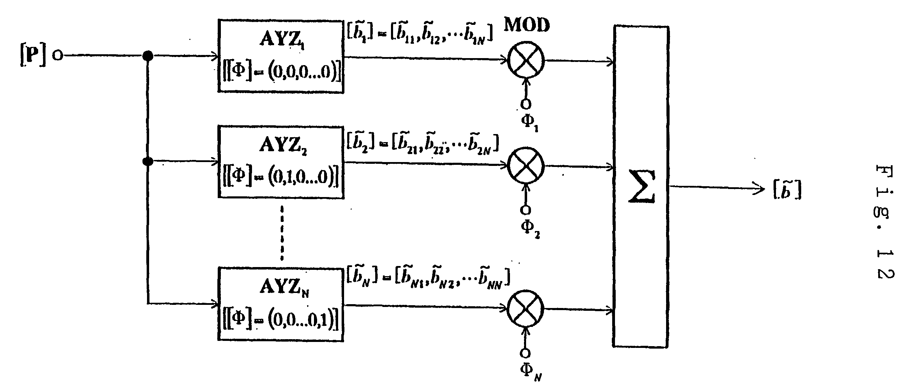

Figure 12 is a block diagram of a fast processing device for solving N-element linear simultaneous equations. The values of matrix [P] obtained based on pilot-frame responses are applied to all of analyzers $AYZ_i$. Analyzers $AYZ_i$ find virtual solutions $[\tilde{b}_i]$ based on virtual matrix $[\Phi]$ and store them. When a data-frame arrives, right observed value matrix $[\Phi]$ for that frame is obtained. Components $\Phi_i$ of matrix $\Phi$ are multiplied by solutions $\tilde{b}_i$ at modulator MOD shown in the figure, and resultant outputs are added together at synthesizer $\Sigma$ to obtain solution matrix $[\tilde{b}] = [\tilde{b}_1, \tilde{b}_2, \ldots \tilde{b}_N]$. This method is a technique with which solutions of most of the data-frames can be obtained with high speed and simple operations; it is significantly useful when used with the above-described embodiments.

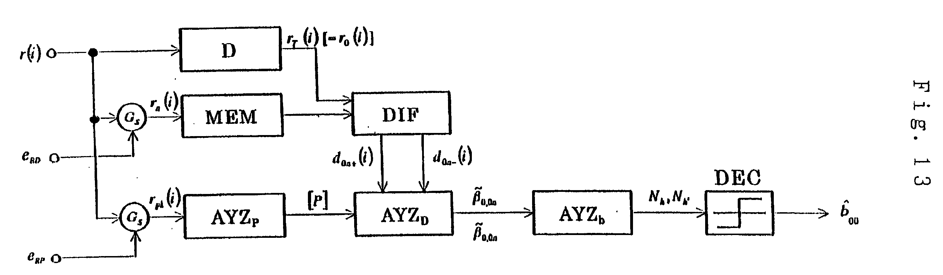

Figure 13 is a block diagram of a pilot-supported differential frame demodulating system according to the fourth embodiment. It is assumed that up-link communications are performed as shown in Fig. 1(a), and desired station $u_0$ and interfering station $u_k$ send pilot-frames $s_{0P}(t)$ and $s_{kP}(t)$ and data-frames $s_{0D}(t)$ and $s_{kD}(t)$, respectively. Assuming that the pilot-frames are transmitted over a multi-frame similar to the one in Fig. 5 or by the means of repeating a core-spreading-sequence as shown in Fig. 7, and the receiver obtains the pilot-responses corresponding to respective stations. Here, transmitter TX at user-station $u_k$ sends a transmitting frame $s_k(t)$ which is produced by modulating the spreading sequence with period T by a transmitting information as shown in Fig. 3(a). Receiver RX is assumed to synchronously receive the n-th data-frame $r_n(i)$ (the subscript D is omitted and discrete-sequence expression is used) using equalizing amplification and synchronization techniques.

(Data-frame $r_n(i)$ is actually a flock-frame containing a large number of delayed waves, but the subscript f is omitted here.) Matrix [P] in Eq. (20) is produced from the above-described pilot-response.

In Fig. 13, with the aid of synchronizing control signals $e_{RP}$ and $e_{RD}$ above-described pilot-frame $r_{pk}(i)$, a part of received signal r(i), is forwarded to an analyzer $AYZ_P$, while other part of signal r(i), the n-th data-frame $r_n(i)$, is forwarded to a memory circuit MEM. Data-frame $r_n(i)$ is sent to a differential frame generating circuit DIF via a delay circuit D to generate a differential output between data-frame $r_n(i)$ and a read output from memory circuit MEM. An output of delay circuit D is assumed to be a target-frame $r_T$ to be demodulated. For simplicity, it is assumed that $r_T = r_0$.

A differential frame (a sum frame is also called a "differential frame") generated by differential frame generating circuit DIF is defined by,

$$d_{0n-}(i) = r_0(i) - r_n(i) \qquad (n \neq 0)$$
$$d_{0n+}(i) = r_0(i) + r_n(i) \qquad (n \neq 0) \qquad \qquad (87)$$

where $r_n(i)$ denotes the n-the partner-frame. The following description refers to the case of a differential frame $d_{0n+}(i)$, but the subscript + is omitted in the expression hereafter.

In analyzer $AYZ_D$ in Fig. 13, when differential frame $d_{0n}(i)$ is used instead of received frame r(i) in Eq. (18), correlation-function $\Phi(j)$ based on spreading-sequence $g_0(i)$ of user-station $u_0$ is obtained. Using matrix $[\Phi]$ and matrix [P] it is possible to obtain the amplitude components $\beta_{k,0n}$ on the spreading-sequence of user-station $u_k$, which are contained in the differential frame. For an actual case in which differential frame $d_{0n}(i)$ contains AWGN, the corresponding output is $\tilde{\beta}_{k,0n}$ When a matrix $\tilde{\beta}_{0n}{}^T = [\tilde{\beta}_{0,0n}, \tilde{\beta}_{1,0n}, \dots \tilde{\beta}_{K,0n}]$ is used as an unknown set in place of matrix$[\tilde{b}]^T$ in Eq. (19), the following equation is derived:

$$[P] \; [\tilde{\beta}_{0n}] = [\Phi] \qquad \qquad (88)$$

If $(K + 1) \leq L$, solution$[\tilde{\beta}_{0n}]$ of the above interference equation can be obtained. [For preventing the rank reduction, $(K + 1) \leq (L - 1)$ is required.]

Specifically, for a target-frame $r_0(i)$, which is one of the synchronously received data-frames, $N_D$ differential frames (assume using the differential frames only) are made using a large number of $(N_D)$ partner-frames $r_n(i)$ [n = $-(N_0/2)...-2, -1, 1, 2,...(N_0/2)$] arriving around the target-frame. Applying the above equation to the respective differential frames, $N_D$ differential solutions $\tilde{\beta}_{0,0n}(i)$ can be obtained for a case affected by AWGN.

Here, the case in which the transmitting information $b_{00}$ of user-station $u_0$ contained in the target-frame is added to the transmitting information $b_{0n}$ on the partner-frames is defined as $C_a$, while the case in which information $b_{00}$ is cancelled by information $b_{0n}$ is defined as $C_c$, and the following relation is derived,

$$\tilde{\beta}_{0,0n} = b_{00} + b_{0n} + \varepsilon_0 + \varepsilon_n = 2b_{00} + \varepsilon_0 + \varepsilon_n \qquad C_a \; [b_{00} = b_{0n}]$$
$$= \varepsilon_0 + \varepsilon_n \qquad C_c \; [b_{00} = -b_{0n}] \qquad \qquad (89)$$

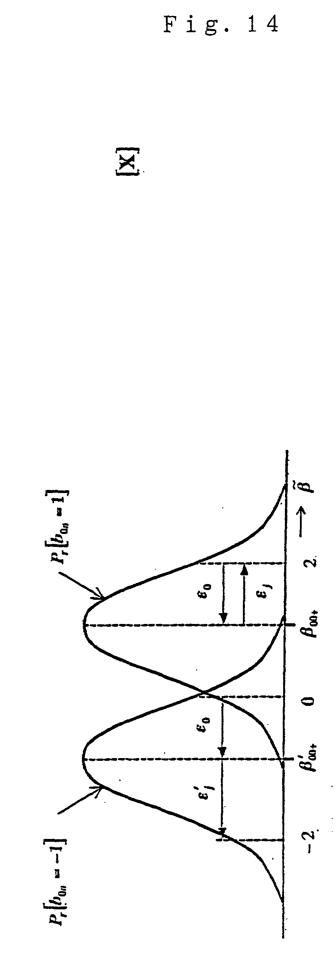

where $\varepsilon_0$ and $\varepsilon_n$ AWGN denote, errors corresponding to contained in the 0- and n-th frame inputs; they are random variables. Thus, the amplitude distribution of $N_D$ differential solution sets $s[\tilde{\beta}_{0, \ 0n}]$ which are applied to analyzer $AYZ_b$ equals the sum of two Gaussian distributions centering $2b_{00} + \varepsilon_0$ and $\varepsilon_0$ respectively. Figure 14 shows the occurrence-frequency-distribution corresponding to $b_{00} = +1$, which is decomposed of two Gaussian distributions. On the basis of these distributions, the following estimated value can be derived.

$$\left. \begin{array}{l} \tilde{\beta}_{00} = \dfrac{1}{N_D} \displaystyle\sum_{\substack{n=-N_D/2 \\ n \neq 0}}^{N_D/2} \tilde{\beta}_{0,0n} \\[2em] \fallingdotseq b_{00} + \varepsilon_0 \qquad (N_D \gg 1) \end{array} \right\} \qquad (90)$$

Above equation indicates that in accordance with the law of large numbers, it converges to $b_{00} + \varepsilon_0$ as the number $N_D$ of differential frames increases.

Analyzer $AYZ_b$ in Fig. 13 calculates the average value of $N_D$ estimated value sets $s[\tilde{\beta}_{0, \ 0n}]$ to obtain $\tilde{\beta}_{00}$. [Applying a similar calculation to differential frame $d_{0n}(i)$ in Eq. (87), other $N_D$ sets are obtained. Therefore, the average value of the $2N_D$ sets can be also utilized by adding them together.] Here, it is assumed that $b_{00} = b_{0h} = 1$ is true, and our attention is paid to a differential frame $d_{0h}$ with partner-frame number h which satisfies the following conditions,

$$\left. \begin{array}{l} \tilde{\beta}_{0,0h} = b_{00} + b_{0h} + \varepsilon = 2 \qquad (h \in n) \\[1.5em] \varepsilon = \varepsilon_0 + \varepsilon_h = 0 \ . \end{array} \right\} \qquad (91)$$

What the above two equations simultaneously hold good, means AWGN in input frames $d_{0h}$ cancel each other. On the other hand, consider a case where a differential frame $d_{0h}$, satisfies the following equation and $b_{00} = 1$ and $b_{0h}' = -1$ are true.

$$\left. \begin{array}{l} \tilde{\beta}_{0,0h'} = \varepsilon = -2 \qquad (h' \in n) \\[1.5em] \varepsilon = \varepsilon_0 + \varepsilon_{h'} = -2 \end{array} \right\} \qquad (92)$$

If the two equations above are simultaneously satisfied, input frame $d_{0h}$, should generally contain a large AWGN.

The group of h-differential frames are extracted, and the differential solutions $[\tilde{\beta}_{k, 0h}](k \neq 0)$ for the information transmitted by the interfering stations are examined. Since $\varepsilon = 0$, these solutions take neighborhood ones of prescribed values $[0, \pm 2]$. On the other hand, the similar solutions $[\tilde{\beta}_{k, 0h}](k \neq 0)$ of the group of h'-differential frames do not take the similar prescribed values but values more scattered. Thus, for both the groups of differential frames, the numbers of differential solutions belonging to the h- and h'-differential frames, $N_h[\tilde{\beta}_{k, 0h} \in 0, \pm 2]$ and $N_{h'}[\tilde{\beta}_{k, 0h'} \in 0, \pm 2]$ are obtained, respectively, and their magnitudes are made on the decision by DEC in Fig. 13, thereby a detected output $b_{00}$ of the information on the 0-th frame sent by user $u_0$ can be obtained.

In general, in CDMA communications system, the communication shown in Fig. 1 is performed inside a cell, while a similar communication is being concurrently performed in adjacent cells using the same frequency-band. The distribution of inter-cell interference due to the other cells can be approximated by AWGN, and its average value is zero. Consequently, the disturbance can be avoided by increasing the number $N_D$ of differential frames.

Now, an analyzing function base interference removing type differential frame demodulating system is described as another type of the fourth embodiment of the present invention. According to this system, analyzer $AYZ_D$

in Fig. 13 has a function of using the above-described analyzing functions, instead of solving Eq. (19).

The 0-shift-correlation between the above-described synchronously received differential frame $d_{0h}(i)$ and the interference analyzing sequence $w_0(i)$ in Eq. (26) is expressed by,

$$D_{won} = \frac{1}{L}\sum_{i=0}^{L-1} d_{0n}(i) \cdot \overline{w_0(i)} = \sum_{k=1}^{K}(b_{k0} + b_{kn})W_{k0} + \varepsilon_{w0} + \varepsilon_{wn} \qquad (93)$$

where $b_{k0}, b_{kn}; \varepsilon_{w0}$, and $\varepsilon_{wn}$ denote correlation components corresponding to the information transmitted by station $u_k$ and the AWGN on input frames $r_0(i)$ and $r_n(i)$, respectively.

If the interference components contained in the differential frames completely cancel one another, the first term of right side of Eq. (93) takes zero and such characteristics are obtained that the less the cancelled residue is, the less the correlation $D_{w0n}$ becomes. Here, the power of correlation output $D_{w0n}$ is defined as.

$$P_{dwn} = \{D_{w0n}\}^2 \qquad (94)$$

Then, such a frame set as to satisfy the following equation is selected from differential frame sets $s[d_{0n}][n = -(N_D/2),...-1, 1, 2,...(N_D/2)]$ and a new differential frame number h [h=1, 2,...H, H ≤ N_D] is given to the selected frames.

$$P_{dwh} \langle P_{th} \qquad (h \in n) \qquad (95)$$

where $P_{dwh}$ denotes the power of correlation output between the h-th differential frame and sequence $w_0(i)$, and $P_{th}$ denotes a properly set threshold power. If there is no cancelled component but all the interference components are summed up, the power in Eq. (94) is given by,

$$P_{max} = \left\{\sum_{k=1}^{K} 2|Y_{k0}|\right\}^2 \qquad (96)$$

Thus, is selecting threshold power $P_{th}$ so as take a value of be about one-tenth of $P_{max}$, it allows us to select such a differential frame sets $s[d_{0h}]$ that most of the interference components on the frames are cancelled out.

Averaging the correlation outputs between respective differential frames of set $s[d_{0h}]$ and sequence $y_0(i)$ defined by Eq. (23), the averaged value is just expected value $\tilde{b}_{00}$ for the 0-th transmitted information as follows.

$$\left.\begin{array}{l} \tilde{b}_{00} = \dfrac{1}{H}\sum_{h=1}^{H} D_{y0h} \\[3mm] = b_{00} + \varepsilon_{dy}(H) \\[3mm] D_{y0h} = \dfrac{1}{L}\sum_{i=0}^{L-1} d_{0h}(i) \cdot \overline{y_0(i)} \end{array}\right\} \qquad (97)$$

The above equation consists of H components where a case $C_a$ and $C_c$ in Eq. (89) each takes one half the probability. The average value $\varepsilon_{dh}(H)$ of AWGN ($\varepsilon_0 + \varepsilon_h$) over H components is significantly less than the average value $\varepsilon_{dh}(N_D)$ obtained for the case where $N_D$ differential frames are used, because of the frame selection effect in Eq. (95).

In addition, a differential-frame selecting method using another analyzing function is shown. The j-shift periodical cross-correlation-function between differential frame $d_{0n}(i)$ and analyzing function $y_0(i)$ defined by Eq. (24) is given by,

$$D_{y0h}(j) = \frac{1}{L}\sum_{i=0}^{L-1} d_{0n}(i)\cdot\overline{y_0(i-j)}$$

$$= (b_{00} + b_{00}) + \sum_{k=1}^{K}(b_{k0} + b_{kn})Y_{k0} + \varepsilon_y \qquad (j=0) . \qquad (98)$$

For $j \neq 0$, a correlation-function $D_{y0n}(j)$ contains no components of the desired wave shown in the first term of the second equation. Then, the power $P_{dyn}$ for the above correlation-function is defined as,

$$P_{dyn} = \frac{1}{(L-1)}\sum_{j=1}^{L-1}\{D_{y0n}(j)\}^2 \quad . \qquad (99)$$

If the sum of AWGN and interference noise contained in the differential frame is cancelled by the differential operation, power $P_{dyn}$ takes zero. Then, a threshold power $P_{th}$ similar to the one described previously is used to select the h-th differential frame.

$$P_{dyh} < P_{th} \qquad (h \in n) \qquad (100)$$

For h-differential frame set $s[d_{0h}(i)]$ selected in this manner, estimated value $\tilde{b}_{00}$ for the transmitted information can be obtained using Eq. (97). The transmitted information can be detected as $b_{00}$ by making hard-decision on this estimated value with circuit DEC in Fig. 13.

In Eq. (98), $z_0(i)$ defined by Eq. (35) can be used instead of $y_0(i)$. In this case, if sequence $r_{0pf}(i)$ contains intensive delayed wave components $g_0(i-m)$, the integration range in Eq. (99) may be limited to $j \neq m$.

In the above description, the condition in Eq. (100) has been used to select h-differential frame set. If threshold power $P_{th}$ is selected to have an excessively small value in a high-noise environment, the number of candidate frames contained in h-set takes zero, thus it is impossible to obtain estimated value $\tilde{b}_{00}$. In such a case, the value of threshold power $P_{th}$ may be slightly increased, and the following second condition should be added.

If the noise power contained in the h-differential frame set is sufficiently cancelled out, correlation $D_{y0h}$ in Eq. (97) should take a value close to the prescribed values $(0,\pm2)$. Thus, three regions $R_0 (0\pm\delta)$, $R_2(2\pm\delta)$, $R_{-2}(-2\pm\delta)$ are provided, and the numbers of respective differential frames $d_{0h}$ whose correlation $D_{y0h}$ takes values within these regions, respectively, are denoted by $H_0$, $H_2$, and $H_{-2}$. In general, relation $H \gtreqqless (H_0 + H_2 + H_{-2})$ exists. Then, the following evaluation function is obtained.

$$\eta = \frac{H_2 - H_{-2}}{H_0 + H_2 + H_{-2}} \qquad (101)$$

If the noise remaining in the h-differential frame set is sufficiently small for $b_0 = 1$, it results in that $H_2 \eqsim H_0$, $H_{-2} = 0$, thus $\eta = 0.5$. Consequently, transmitted information $b_{00}$ can be detected by making hard decision by DEC whether value $\eta$ has a positive or negative ones.

Furthermore, the above differential demodulating system can be constructed by using the auto-complementary sequences described in the third embodiment, as a pair of transmitting sequences for each user. It is assumed that pilot-responses have been obtained by another means. For example, two sets of complete complementary sequences [ $(A_0,A_1),(B_0,B_1)$] and [ $(C_0,C_1), (D_0,H_1)$] are provided. Sequence pairs $(A_0,A_1)$, $(B_0,B_1)$, $(C_0,C_1)$, and $(D_0,D_1)$ are assigned to respective users $u_A$, $u_B$, $u_C$, and $u_D$. An extended sequence is made by adding the corresponding pair of the header and tail to each of element-sequences in the sets. Extended-frames $A_0$ and $A_1$ are modulated with the n-th transmitting information $b_{An}$ at the station A, and carrier waves $f_0$ and $f_1$ are modulated and the resultant outputs are synthesized to produce a transmitting frame. The other stations also produce the similar transmitting frames. These all frames are transmitted. The receiver can receive two sets of synthesized frames $(A_0,B_0,C_0,D_0)$ and $(A_1,B_1,C_1,D_1)$ formed on carrier waves $f_0$ and $f_1$ respectively, and can separate these two sets from each other using the corresponding carrier-waves. If receiver RX receives the 0-th target-frame $r_0(i)$ and demodulates it and detect the information sent by the desired station $u_A$, receiver RX forwards the two demodulated outputs with carrier-waves $f_0$ and $f_1$, to two matched filters matched to the respective sequences $(B_0, B_1)$, respectively. Sequences $(A_0,A_1)$ and Sequences $(B_0,B_1)$ have the complete orthogonal property shown in Eq. (60). Thus, the sum of outputs from the above-described filters contains none of the correlation components between sequences $(B_0,B_1)$ and both sequences $(A_0,A_1)$ and their delayed waves. Since there is no orthogonal relation between sequences $(B_0,B_1)$ and both sequences $(C_0,C_1)$ and $(D_0,D_1)$, the above-described sum contains the correlation components between sequences $(B_0,B_1)$ and both sequences $(C_0,C_1)$ and $(D_0, D_1)$.

This orthogonal property is utilized. That is, the correlation-function output between differential frame $d_{0n}(i)$ in Eq. (87) and sequences $(B_0,B_1)$ is obtained, and h-differential frame set $s[d_{0h}(i)]$ is then extracted by the means of finding such a differential frame that the power is less than a threshold power as shown in Eq. (95). The average value of the 0-shift-correlation outputs between respective frames of the selected h-set and desired station sequences $(A_0, A_1)$ is given by an equation similar to Eq. (97), resulting in estimated value $\check{b}_{00}$ for the transmitted information.

As explained above, using the analyzing function $(B_0,B_1)$ orthogonal to the spreading-sequence of the desired station, h-differential frame set each of which contains little interference or AWGN can be selected, thereby detection of transmitted information $b_{00}$ can be performed at a low error rate.

In general, in the CDMA communications system, the communication shown in Fig. 1 is performed within one cell (local cell), while similar communication is being concurrently done within adjacent (other) cells. The same frequency band is typically used in the local and other cells. Accordingly, receiver RX is subjected not only to intra-cell interference due to other stations within the local cell but also to inter-cell interference due to stations of other cells. The first to third embodiments can deal with the intra-cell interference but are not sufficiently effective inter-cell interference or AWGN. The fourth embodiment, however, has the advantage of avoiding the inter-cell interference.

As described above in detail, the present invention provides the operating means for the CDMA communications system, wherein the transmitter sends not only the data-frames but also the isolated or duplicate pilot-frames, whereas the receiver utilizes the received pilot-response to produce demodulated outputs free from multipath effects and the disturbance due to interfering waves which are contained in the data-frame response. The above system uses the algebraic processing for solving a system of linear equations, and the present invention provides the means of simplifying and accelerating this processing. The present invention also provides the means of solving equations which otherwise cannot be solved. The present invention further provides the means of removing additional noise that cannot be removed by means of the above algebraic processing, by applying the differential frame analyzing method and utilizing the noise cancelling effect brought by the plurality of partner frames.

Due to the above characteristics, when the present invention is applied to mobile communications systems, radio LANs, satellite communications systems, etc., it is very effective in increasing the capacity of the systems and improving the frequency utilization-efficiency.

In the aspect of the invention set forth in Claim 1, as described as the first example, the transmitter arranges guard-sequences to outsides of a spreading sequence to produce an extended sequence, subsequently modulates the extended sequences with transmitting information and pilot-information to produce a data-frame and an isolated-pilot-frame, respectively, such as not interfered with by other users, and then transmits these frames. The receiver receives a data-flock-frame and a pilot-flock-frame corresponding to the above-described transmitting frames, analyzes the data-flock-frame based on a demodulated response of the pilot-flock-frame, estimates the interfering wave components based on the results of the analysis, and removes the disturbance due to the interference components from the received demodulated components, thus detecting the transmitted information without being subject to the interference.

In the aspect of the invention set forth in Claims 2 to 4, as described as the first embodiment, as the analyzing method in the aspect of the invention set forth in Claim 1, a system of linear equations produced with the correlation-functions for the received pilot-flock-frame and data-flock-frame are solved, or the received data-flock-frame is solved with an analyzing sequence produced based on the received pilot-flock-frame, thereby obtaining demodulated outputs to detect the transmitted information.

In the aspect of the invention set forth in Claim 5, as described as the first embodiment, each transmitter sends the pilot-frame on the pilot timings of the multi-frame in a time-division manner, so that an analyzed response to the pilot-frame sent by a desired-station can be obtained without being affected by frames sent by other user-stations. On the basis of this result, the transmitted information can be detected without being subject to the interference by interfering waves.

In the aspect of the invention set forth in Claim 6, as described as the first embodiment, a repeated transmitting data-frame and a repeated pilot-frame are produced, and these repeated frames modulate different carrier waves and the resultant outputs are added together, that is, they are synthesized in a frequency-division manner to obtain a transmitting multiplexed frame. Accordingly, the receiver can receive the pilot-flock-frame sent by the desired station without being subject to the interference by similar transmitting multiplexed frames sent by other user-stations, can analyze the data-flock-frame based on the pilot-flock-frame, and can detect, based on the analyzed result, the transmitted information without being obstructed by interfering waves.

The aspect of the present invention in Claim 7 provides means of sending a duplicate pilot-frame that uses duplicately the time-or frequency-slots used as transmitting frames of other user-stations, compared to the isolated-pilot-frame in the system of Claims 1, 5, and 6, producing such a duplicate pilot-response by selecting an analyzing sequence as to minimize the disturbance due to interference, and using this response to analyze the received data-flock-frame, as well as means of improving the frequency-utilization-efficiency.

In the aspect of the invention set forth in Claims 8 and 9, as described as the second embodiment, in addition to the aspect of the invention set forth in Claim 1, a core-sequence is obtained by repeating an auto-orthogonal spreading sequence cyclically shifted by n chips, and the n-shift extended sequence is produced by placing a rear and front portions of the core-sequence at the front and the rear sides of the core-sequence, as the guard-sequences. Thus, even if the transmitter sends the extended sequence frames modulated with different information at one chip-spacing, the receiver can separate and identify the sequences without being subjected to mutual interference, thus detecting the transmitted information.

In the aspect of the invention set forth in Claims 10 and 11, as described as the third embodiment, in addition to the aspect of the invention set forth in Claim 1, extended sequences are each obtained by adding guard-sequences to a sequence produced by repeating respective constituent elements of complete complementary sequences, and the extended sequences are modulated with transmitting data and pilot-information to obtain frames for transmission. Accordingly, if sequences assigned with a plurality of stations are sent at one chip-spacing, the receiver can separate and identify the sequences without being subjected to mutual interference, thus detecting the transmitted information.

In the aspect of the invention set forth in Claims 12 to 14, as described as the third embodiment, the degree of freedom in system design for development conditions or the frequency-utilization-efficiency can be increased by sending the transmitting frames at intervals of an arbitrary number of chips or adjusting the frequency of the pilot-frame transmissions, thus detecting the transmitted information without being obstructed by interfering waves.

In the aspect of the invention set forth in Claims 15 and 16, as described as the third embodiment, one of many types of sequences is selected as a spreading sequence and transmitted or subjected to multi- amplitude modulation, thus increasing the information quantity transmitted per frame, resulting in improvement of the frequency-utilization-efficiency.

In Claims 17 and 18, when a system of linear equations are to be solved, for the purpose of preventing the rank reduction of the coefficient matrices, a system is designed such that the maximum number of users is reduced by one beforehand or the number of time-slots arranged at intervals of available chips is reduced by one time-slot beforehand. Thus, by reducing the analyzing errors due to the white noise statistically, resulting in improvement of the error rate characteristics for the received signals.

In Claim 19, since the coefficient matrices used in Claims 8 to 12 are cyclic, by using Fourier transformation matrices and inverse transformation matrices for the analysis, the amount of operations required can be reduced.

In the aspect of the invention set forth in Claim 20, as described as the third embodiment, since the special operational method to solve the multi-element linear simultaneous equations is used, the amount of operations required can be significantly reduced when the received data-frame is analyzed with the pilot-frame-response, thus achieving fast processing.

In the aspect of the invention set forth in Claims 21 to 23, as described as the fourth embodiment, a large number of differential frames are produced for a target-frame to be demodulated which has been transmitted from the desired-station, these differential frames are used to obtain corrected differential outputs for the target-frame, and a set of the corrected differential frames having a low corrected differential noise power are estimated and selected from the corrected differential outputs, and a demodulated output based on an analyzed output obtained from the above set is produced, thereby enabling the transmitted information to be detected without being obstructed by inter-cell interference.

## Claims

1. A direct-sequence CDMA communications system having a pilot-supported interference separating function, is **characterized in that** each transmitter comprises a function of generating extended sequences which are composed by arranging a rear and a front portions of a core-spreading-sequence or zero sequences respectively at the front and the rear outsides of the core-spreading-sequence as guard-sequences,

a function of modulating the extended sequences with transmitting information to produce a transmitting data-frame,

a function of modulating the extended sequences with pilot information to produce an isolated pilot-frame that is not affected by data-frames and pilot-frames transmitted by the other transmitters, and

a function of transmitting the data and isolated pilot-frames; and

a receiver comprises a function of receiving a synchronously received data-flock-frame on a position synchronized with the core-sequence in the extended sequence coming from the desired station,

a function of receiving a similar synchronously received isolated pilot-flock-frames,

a function of analyzing both the flock-frames, estimating the influence of interfering wave components based on both the analyzed outputs to remove the influence, and thereby producing an estimated value $\tilde{b}_0$ for the information transmitted by the desired station $u_0$, and

a function of making hard decision on the estimated value and thereby obtaining the transmitted information without being subject to the interference.

2. A direct-sequence CDMA communications system having a pilot-supported interference separating function according to claim 1, is **characterized in that** the receiver comprises means of applying pilot flock frame $r_{kpf}$ received from the k (= 0, 1, 2, ...)-th user-station $u_k$ and the synchronously received data-flock-frame synchronized with a data-frame received from the desired station $u_0$, to matched filters which matches to one or more kinds of arbitrary analyzing sequences with sequence-length equal to the core-spreading-sequence, to output a pilot-response cross-correlation-function and a data-response cross-correlation-function to a storage, and

means of solving a system of linear equations composed of a pilot-response matrix P and a data-response (cross-correlation-function) matrix $\Phi$ using algebraic operations to obtain an estimated value $\tilde{b}_0$ for the information transmitted by the desired station.

3. A direct-sequence CDMA communications system having a pilot-supported interference separating function according to claim 1, is **characterized in that** the system comprises means of producing the first analyzing sequence y whose cross-correlation-function with the 0-th pilot-flock-frame $r_{0pf}$ received from the desired station $u_0$ takes the value 1 at the 0-shift position and the value 0 at the other shift positions, to produce 0-shift-correlation-value $Y_k$ between analyzing sequence $y_0$ and the pilot-flock-frame $r_{kpf}$ received from the interfering station,

means of producing the second analyzing sequence w whose 0-shift-correlations with pilot-flock-frame $r_{opf}$ and $r_{kpf}$ (k ≠ 0) take the values 0 and $Y_k$, respectively, and

means of subtracting a 0-shift-correlation value W between synchronously received data-frame r and the second analyzing sequence w, from a 0-shift-correlation-value R between synchronously received data-frame r and the first analyzing sequence y, to obtain an estimated value $\tilde{b}_0$ for the information transmitted by the desired station.

4. A direct-sequence CDMA communications system having a pilot-supported interference separating function according to claim 3, is **characterized in that** an analyzing sequence v whose 0-shift-correlations with the 0-th pilot-flock-frame $r_{0pf}$ and the k-th pilot-flock-frame $r_{kpf}$ (k ≠ 0) take the values 1 and 0, respectively, is produced and,

a 0-shift-correlation-value V between synchronously received data-frame r and the analyzing sequence v is defined as an estimated value $\tilde{b}_0$.

5. A direct-sequence CDMA communications system having a pilot-supported interference separating function according to any one of claims 1 to 4, is **characterized in that** the transmitter at a base-station comprises a quasi-synchronizing function of transmitting synchronizing information on multiframe to control the transmitting timing of a frame-sequence transmitted by each user-station so that the synchronously received frame which the receiver received from the desired station may not contain frame-boundaries included in extended frame-sequences of self-interference-waves received from the desired station or frame-boundaries included in respective extended frame-sequences received from interfering stations;

respective user-station receivers comprise means of receiving and identifying the synchronizing information; respective user-station transmitters comprise means of transmitting their pilot-frames onto the respective pilot-slots on the multiframe in a time-division manner; and the base-station receiver comprises means of receiving the respective pilot-flock-frames to produce the pilot-response correlation-functions or analyzing sequences.

**6.** A direct-sequence CDMA communications system having a pilot-supported interference separating function according to any one of claims 1 to 4, is **characterized in that** the transmitter comprises means of repeatedly arranging a core-spreading-sequence to generate a repeated sequence and adding guard-sequences at the front and the rear outsides of the repeated sequence to produce an extended sequence,

means of modulating one or more extended sequences with the transmitting information and the pilot-information to produce a group of repeated data-frames and a repeated pilot-frame, and
means of summing up the outputs which are obtained by modulating orthogonal carrier waves different in frequency from each other by both the respective repeated frames, to produce a transmitting multiplexed-frame synthesized in a frequency-division manner; and
the receiver comprises means of receiving the multiplexed-frame, using local carrier-waves corresponding to the transmission-carrier-waves as well as a synchronization technique, separating the group of the synchronously received data-flock-frame based on the pilot-flock-frame and demodulating them; and
the base-station has a quasi-synchronization function of transmitting synchronizing information to control the transmitting timing of respective user-station transmitters so that the synchronously received frame received from the desired station may not contain frame-boundaries included in extended frame-sequences of self-interference-waves received from the desired station or frame-boundaries included in respective extended frame-sequences received from interfering stations.

**7.** A direct-sequence CDMA communications system having a pilot-supported interference separating function according to claim 1, is **characterized in that** each transmitter periodically transmits, instead of the isolated pilot used in claim 1, overlapping pilot-frames onto timings that overlap data-frames transmitted by the other transmitters; and

the receiver receives the respective overlapping pilot-frames, to produce correlation-values between the respective overlapping pilot-frames and an analyzing sequence z that is orthogonal to the spreading-sequence of the desired station at every shift-position except the 0-shift-position, in order to obtain a pilot-response-output by averaging these correlation-values.

**8.** A direct-sequence CDMA communications system having a pilot-supported interference separating function according to claim 1, is **characterized in that** the transmitter of the k-th user station comprises means of producing an extended sequence $E_0$ which is constructed by arranging a rear and a front portions of a repeated sequence obtained by repeating a plurality of times a core-spreading-sequence with length L at the front and rear outside of the repeated sequence as guard-sequences, respectively,

means of cyclically shifting the extended sequence by n (n = 0,1,2,...., L-1) chips to produce the n-shift extended sequence $E_n$,
means of modulating the n-shift extended sequence $E_n$ with the n-th transmitting information $b_{kn}$ to produce the n-th transmitting data-frame,
means of summing up L transmitting data-frames to produce a synthesized data-frame and transmitting the synthesized data frame over the k-th carrier wave, and
means of transmitting a transmission frame produced by modulating extended sequence $E_0$ with the pilot information using the k'($\neq$ k)-th carrier-wave; and
the receiver comprises means of using the k-th and k'-th carrier-waves to demodulate the synchronously received data-flock-frame and pilot-flock-frame synchronized with the frame of the desired station, respectively, and
one of the following means (a) to (c) for obtaining an estimated value $\tilde{b}_0$ for the information transmitted by desired station $u_0$ based on both the demodulated outputs:

(a) means of applying pilot-flock-frame $r_{kpf}$ received from the k-th user station and the synchronously received data-flock-frame synchronized with the data-frame of the desired station, to the matched filter that matches to one or more types of arbitrary analyzing sequences with sequence-length equal to that of the core-spreading-sequence, to output a pilot-response cross-correlation-function and a data-response cross-correlation-function to a storage, and

means of using algebraic operations to solve a system of linear equations in composed of the pilot-response matrix P and the data-response cross-correlation-function matrix $\Phi$, in order to obtain an estimated value $\tilde{b}_0$ for the information transmitted by the desired station;

(b) means of producing the first analyzing sequence y whose cross-correlation-function with the 0-th pilot-flock-frame $r_{0pf}$ received from the desired station (0-th station $u_0$) takes the values 1 and 0 at the 0-shift and the other shift-positions, respectively, to produce 0-shift-correlation value $Y_k$ between analyzing sequence y and the k-th pilot-flock-frame $r_{kpf}$ received from the k-th interfering station $u_k (k \neq 0)$,

means of producing the second analyzing sequence w whose 0-shift-correlations with pilot-flock-frame $r_{0pf}$ and with pilot-flock-frame $r_{kpf}$ ($k \neq 0$) take the values 0 and $Y_k$, respectively, and
means of subtracting a 0-shift-correlation value W between synchronously received data-frame r and analyzing sequence w from the 0-shift-correlation-value R between synchronously received data-frame r and analyzing sequence y to obtain an estimated value $\tilde{b}_0$ for the information transmitted by desired station; and

(c) means of producing an analyzing sequence v whose 0-shift-correlations with pilot-flock-frame $r_{0pf}$ and with pilot-flock-frame $r_{kpf}$ ($k \neq 0$) take the values 1 and 0, respectively, to obtain an estimated value $\tilde{b}_0$ for information transmitted by the desired station based on a 0-shift-correlation value V between the synchronously received data-frame r and analyzing sequence v.

**9.** A direct-sequence CDMA communications system having a pilot-supported interference separating function according to claim 8, is **characterized in that** the transmitter comprises means of providing, as core-spreading-sequences, even-shift orthogonal sequences $g_H$ and $g_v$ which are in a relation of mates, and producing extended sequences $E_H(0)$ and $E_v(0)$ by adding the guard sequences to the respective repeated core-sequences,

means of shifting extended sequences $E_H(0)$ and $E_v(0)$ by an even-number value (n) to generate extended sequences $E_H(n)$ and $E_v(n)$,
means of modulating each of the extended sequences with the pilot information and the transmitting information, respectively, and
means of modulating the same carrier-wave with the resultant modulated outputs and transmitting the modulated carrier-wave; and
the receiver comprises one of the following means (a) to (c) for obtaining an estimated value $\tilde{b}_0$ for the information transmitted by desired station $u_0$ based on the synchronously received frame synchronized with the frame of the desired station:

(a) means of applying pilot-flock-frame $r_{kpf}$ received from the k-th user station and the synchronously received data-flock-frame synchronized with the data frame of the desired station, to the matched filter that matches to one or more types of arbitrary analyzing sequences with sequence length equal to that of the core-spreading-sequence, to output a pilot-response cross-correlation-function and a data-response cross-correlation-function to a storage, and

means of using algebraic operations to solve a system of L linear equations in L-unknowns composed of the pilot-response matrix P and the data-response cross-correlation function matrix $\Phi$, in order to obtain an estimated value $\tilde{b}_0$ for the information transmitted by the desired station;

(b) means of producing the first analyzing sequence $y_0$ whose cross-correlation function with the 0-th pilot-flock-frame $r_{0pf}$ received from the desired station (0-th station $u_0$) takes the values 1 and 0 at the 0-shift and the other shift-positions, respectively, to produce 0-shift-correlation value $Y_k$ between analyzing sequence $y_0$ and the k-th pilot-flock-frame $r_{kpf}$ received from the k-th interfering station $u_k (k \neq 0)$,

means of producing the second analyzing sequence $w_0$ whose 0-shift-correlations with pilot-flock-frame $r_{0pf}$ and with pilot-flock-frame $r_{kpf}$ ($k \neq 0$) take the values 0 and $Y_k$, respectively, and
means of subtracting a 0-shift-correlation value W between synchronously received data-frame r and analyzing sequence $w_0$ from a 0-shift-correlation value R between synchronously received data-frame r and analyzing sequence $y_0$ to obtain an estimated value $\tilde{b}_0$ for the information transmitted by desired station; and

(c) means of producing an analyzing sequence v whose 0-shift-correlations with pilot-flock-frame $r_{0pf}$ and with pilot-flock-frame $r_{kpf}$ ($k \neq 0$) take the values 1 and 0, respectively, to obtain an estimated value $\tilde{b}_0$ for information transmitted by the desired station based on a 0-shift-correlation value V between the synchronously received data-frame r and analyzing sequence v.

**10.** A direct-sequence CDMA communications system having a pilot-supported interference separating function according to any one of claims 1 to 4, is **characterized in that** $\Gamma$ sets of $\Gamma$-element sequences constituting $\Gamma$-order complete complementary sequences are provided, two of these sets are assigned to each user- station as a pilot-spreading-sequence $g_{hv}$ (h = 0,2,4,..... $\Gamma$-2) and a data-spreading-sequence $g_{h+1,\,v}$;

the transmitter of the k-th user- station $u_k$ comprises means of producing $\Gamma$ repeated element-sequences in a way of producing a repeated element-sequence by repeating of the v(= 0, 1, 2, ..., $\Gamma$-1)-th element-sequence of pilot-spreading-sequence $g_{hv}$ and data-spreading-sequence $g_{h+1,\,v}$ (h=2k),

means of arranging guard-sequences at the front and the rear outside of the respective repeated element-sequences to produce extended sequences $E_{hv}$ and $E_{h+1,\,v}$,

means of modulating extended sequences $E_{hv}$ and $E_{h+1,\,v}$ (h = 2k) with the pilot information and the data-information, respectively, and

means of transmitting a transmission frame which is produced by modulating the v-th carrier-wave $f_v$ with the resultant modulated outputs; and

the receiver comprises means of applying an output obtained by demodulating the synchronously received frame received from desired station $u_0$ with carrier-wave $f_v$, to a matched filter that matches to the element-sequences $g_{hv}$ and $g_{h+1,v}$ (h = 0, 1), to produce pilot-response and data-response correlation-functions, and one of the following means (a) to (c) for obtaining an estimated value $\tilde{b}_0$ for the information transmitted by the desired station using the resultant outputs:

(a) means of applying pilot-flock-frame $r_{kpf}$ received from the k-th user station and the synchronously received data-flock-frame synchronized with the data frame of the desired station, to the matched filter that matches to one or more types of arbitrary analyzing sequences with sequence length equal to that of the core-spreading-sequence, to output a pilot-response cross-correlation-function and a data-response cross-correlation-function to a storage, and

means of using algebraic operations to solve a system of linear equations in composed of the pilot-response matrix P and the data-response cross-correlation function matrix $\Phi$, in order to obtain an estimated value $\tilde{b}_0$ for the information transmitted by the desired station;

(b) means of producing the first analyzing sequence $y_0$ whose cross-correlation function with the 0-th pilot-flock-frame $r_{0pf}$ received from the desired station (0-th station $u_0$) takes the values 1 and 0 at the 0-shift and the other shift-positions, respectively, to produce 0-shift-correlation value $Y_k$ between analyzing sequence $y_0$ and the k-th pilot-flock-frame $r_{kpf}$ received from the k-th interfering station $u_k(k \neq 0)$,

means of producing the second analyzing sequence $w_0$ whose 0-shift-correlations with pilot-flock-frame $r_{0pf}$ and with pilot-flock-frame $r_{kpf}$ (k $\neq$ 0) take the values 0 and $Y_k$, respectively, and

means of subtracting a 0-shift-correlation value W between synchronously received data-frame r and analyzing sequence $w_0$ from a 0-shift-correlation value R between synchronously received data-frame r and analyzing sequence $y_0$ to obtain an estimated value $\tilde{b}_0$ for the information transmitted by desired station; and

(c) means of producing an analyzing sequence v whose 0-shift-correlations with pilot-flock-frame $r_{0pf}$ and with pilot-flock-frame $r_{kpf}$ (k $\neq$ 0) take the values 1 and 0, respectively, to obtain an estimated value $\tilde{b}_0$ for information transmitted by the desired station based on a 0-shift-correlation value V between the synchronously received data-frame r and analyzing sequence v.

11. A direct-sequence CDMA communications system having a pilot-supported interference separating function according to claim 10, is **characterized in that** the transmitter of user-station $u_k$ comprises means of shifting the respective extended sequences by n (n= 0,1,2,....L-1.) chips to generate $\Gamma$ peaces of n-shift extended sequences $E_{hv}(n)$ (h = 2k, 2k+1) (v = 0,1,2,...,$\Gamma$-1),

means of modulating the $\Gamma$ peaces of n-shift extended sequences with the n-th transmitting information to make the v-th modulated output, and

means of modulating the v-th carrier-wave with the v-th modulated output and transmitting the modulated carrier-wave; and

the receiver comprises means of obtaining estimated values $\tilde{b}_m$ for L pieces of information transmitted by the desired station.

12. A direct-sequence CDMA communications system having a pilot-supported interference separating function according to claim 8, is **characterized in that** any one or plural numbers selected from integers (0 to L-1) are used for the "n" to transmit plural pieces of transmitting information, which are then received and demodulated.

13. A direct-sequence CDMA communications system having a pilot-supported interference separating function according to claim 11, is **characterized in that** any one or plural numbers selected from integers (0 to L-1) are used for the "n" to transmit plural pieces of transmitting information, which are then received and demodulated.

14. A direct-sequence CDMA communications system having a pilot-supported interference separating function according to any one of claims 8 and 10 to 13, is **characterized in that** an extended sequence or a set of extended sequences having been used as a pilot-frame is used to transmit the pilot-frame once every plural frames, and the resultantly produced idle frames are used to transmit data-information or the pilot-frames of other user stations, so as to be shared by all users in a time-division manner.

15. A direct-sequence CDMA communications system having a pilot-supported interference separating function according to any one of claims 8 to 13, is **characterized in that** the transmitter comprises means of providing M* core-spreading-sequences and selecting and transmitting one of the core-spreading-sequences; and

the receiver comprises means of providing analyzing circuits that can deal with all the core-spreading-sequences to obtain M* estimated values for the information transmitted, and means of comparing the estimated values with each other to detect $\log_2 M^*$ bits of transmitted information per symbol frame.

16. A direct-sequence CDMA communications system having a pilot-supported interference separating function according to any one of claims 8 to 13, is **characterized in that** the transmitter modulates the extended sequence with multi-amplitude information; and

the receiver obtains, by means of multi-amplitude discrimination, an estimated value $\tilde{b}$, for transmitted information to detect a plurality of bits of transmitted information per symbol frame.

17. A direct-sequence CDMA communications system having a pilot-supported interference separating function according to any one of claims 2 to 4, is **characterized in that**, in a system wherein up to (L-1) user stations can transmit simultaneously their signals over the same band using the core-spreading-sequence with length L,

the receiver comprises means of adding an additional pilot-response for one station to the pilot-responses produced based on the pilot-flock-frames received from (L-1) user-stations to produce an L×L matrix P and, means of determining the additional pilot-responses so as not to reduce the rank of matrix P.

18. A direct-sequence CDMA communications system having a pilot-supported interference separating function according to claims 8 to 13, is **characterized in that**, in a system wherein (L-1) transmitting frames each is sequentially shifted by one-chip interval in frames by frame basis for one of the core-spreading-sequences with length L which compose the repeated extended sequences,

the receiver comprises means of adding one row of an additional pilot-response to (L-1) rows of the pilot responses produced based on the pilot-flock-frames to produce an L×L matrix P and means of determining the additional pilot-responses so as not to reduce the rank of matrix P.

19. A direct-sequence CDMA communications system having a pilot-supported interference separating function according to any one of claims 8 to 13, is **characterized in that**, in a case where a system of N linear equations in N-unknowns consisted of pilot-response matrix P having a form of an N×N cyclic matrix, data-response matrix $\Phi$, and unknown matrix $\tilde{b}$ is solved by:

multiplying the matrix P by an N × N Fourier transformation matrix to obtain a matrix $\alpha$, multiplying the Fourier transformation matrix $F_N$ by a diagonal matrix having the reciprocal of the elements of matrix $\alpha$ as the diagonal element of the row, multiplying the multiplied output matrix by an N × N Fourier inverse transformation matrix $F_N^{-1}$ to obtain an inverse matrix $[P]^{-1}$ of pilot-response matrix P, and multiplying inverse matrix by data-response matrix $\Phi$ to obtain unknown matrix $\tilde{b}$.

**20.** A direct-sequence CDMA communications system having a pilot-supported interference separating function according to any one of claims 2 to 4 and 7 to 13, is **characterized in that** a system of L simultaneous equations in L unknowns consisted of pilot-response matrix, unknown matrix, and data-response matrix is solved using a method comprising the following steps:

obtaining beforehand a solution matrix of the equations consisted of a hypothetical data-response matrix such that the elements of the j-th row and the other rows may take the values 1 and 0, respectively;

multiplying each element by the element $\Phi_j$ of the j-th row of data-response matrix $\Phi$ to obtain $\Phi_j \bar{b}_{ji}$; and

adding up $\Phi_j \bar{b}_{ji}$ for all values of solution matrix $\bar{b}$

**21.** A direct-sequence CDMA communications system having a pilot-supported interference separating function according to any one of claims 1 to 4, is **characterized in that** the receiver comprises

means of extracting synchronously received pilot- and data-frames synchronized with the frame of the desired station,

means of selecting one of the data-frames as a demodulation target-frame assigned by the number zero, and producing the n-th differential frame $d_{0n}$ made of the difference (sum) between the target frame and the partner frame which is the n-th data frame coming in neighborhood of the target-frame,

means of solving a system of simultaneous equations in for the differential frame by algebraic operation to obtain sets of differential frames s $[d_{oh}]$ and s $[d_{oh,}]$ such that estimated values $\tilde{\beta}_{0n}$ (k = 0, 1, 2, ...) for the information transmitted by the desired-station and interfering stations take values within a neighborhood of prescribed values (+2, -2),

means of obtaining the numbers of candidates such that estimated values $\tilde{\beta}_{0H}$ for the information transmitted by the desired station obtained from $d_{oh}$ and $d_{oh,}$ fall within prescribed values, respectively, and

means of determining the detected output $b_{00}$ for the information on the target-frame transmitted by the desired station by comparing the magnitude.

**22.** A direct-sequence CDMA communications system having a pilot-supported interference separating function according to claim 21, is **characterized in that** the receiver comprises

means of obtaining the first analyzing sequence y whose cross-correlation function with the 0-th pilot-flock-frame $r_{0pf}$ received from the desired station takes the values 1 and 0 at the 0-shift and the other shift positions, respectively, to produce the 0-shift-correlation-value $Y_k$ between the first analyzing sequence y and the k-th pilot-flock-frame $r_{kpf}$ received from interference- station $u_k (k \neq 0)$,

means of obtaining the second analyzing sequence w whose 0-shift-correlations with the pilot-flock-frame $r_{opf}$ and $r_{kpf}$ (k $\neq$ 0) take the values 0 and $Y_k$, respectively,

means of producing the correlation-value $W_{0n}$ between the second analyzing sequence w and the n-th differential frame $d_{0n}$ to obtain a set $s[d_{0h}]$ of the differential frames satisfying such a condition that the power of $W_{0n}$ is equal to or less than a prescribed threshold value, and

means of obtaining correlation-values $D_{0h}$ between the respective differential frames $d_{0h}$ and the first analyzing sequence y, and

means of averaging the correlation-values $D_{0h}$,

thereby producing an estimated value $\tilde{b}_{00}$ for the information on the target-frame transmitted by the desired station.

**23.** A direct-spreading CDMA communications system having a pilot-supported interference separating function according to claim 22, is **characterized in that** the system assigns each user-station $u_A$, $u_B$, $u_C$, $u_D$, ... with one of sets $(A_0, A_1)$, $(B_0, B_1)$, $(C_0, C_1)$, $(D_0, D_1)$ ... of self-complementary sequences whose elements constitute sets (A, B), (C, D) ... of complete complementary sequences, each transmitter comprises means of modulating respective two-element sequences $(A_0, A_1)$, $(B_0, B_1)$ ... with the n-th transmitting information $b_{An}$, $b_{Bn}$,..., and further modulating two different carrier waves with the modulated outputs obtained, to generate the n-th transmitting frame, and

the receiver comprises means of demodulating a received input frame with the respective carrier waves, to separate received element-sequences $(A_0, B_0, C_0, ...)$ and $(A_1, B_1, C_1, ...)$,

means of providing self-complementary sequence set $(B_0, B_1)$ having complete complementary relationship with self-complementary sequence set $(A_0, A_1)$ at the desired-station $u_A$ to obtain 0 shift cross-correlation values between the n-th synchronized received differential frame $d_{0n}$ and the respective element-sequences of self-complementary sequence set $(B_0, B_1)$, thereby producing a set $s[d_{0h}]$ that satisfies such a condition that the power of the sum output of the cross-correlation values is equal to or less than a threshold value, and means of producing 0 shift cross-correlation outputs between differential frame $d_{0h}$ and self-complementary sequence set $(A_0, A_1)$ which the desired-station used, and

averaging a sum of the 0-shift-correlation outputs to produce an estimated value $\hat{b}_{x_0}$ for the 0-th target frame bearing information transmitted by the desired-station.

Fig. 1

(a)

(b)

TX

$b_k$ O $\longrightarrow$ PI $\xrightarrow{b//p}$ MOD1 $\xrightarrow{s(t)}$ MOD2 $\xrightarrow{s(t)}$ MOD3 $\longrightarrow$ $s_{ak}(t)$

RX $\xrightarrow{e_{sp}}$ PTG $\xrightarrow{p}$

g(t)   w(t)   $f_a$

(a)

RX

$r_a(t)$ O $\longrightarrow$ MOD4 $\longrightarrow$ LPF $\longrightarrow$ MOD5 $\longrightarrow$ $I_t$ $\int$ $\xrightarrow{r(i)}$ $r_D(i)$ D-AYZ $\xrightarrow{\tilde{b}_0}$ DEC $\longrightarrow$ $\hat{b}_0$

$f'_a$   w(t)

[P]   $e_P$

$r_P(i)$ P-AYZ $\xrightarrow{e_{uP}}$ SYN

$\longleftarrow$ DEM $\longrightarrow$

$e_{sp}$

(b)

Fig. 2

EP 1 176 746 A1

Fig. 3

$r_{0Pf}(i)$

| $g_0(i)$ | $g_0(i)$ |
|---|---|
| $g_0(i-1)$ | $g_0(i-1)$ |
| $g_0(i-2)$ | $g_0(i-2)$ |

$r_{1Pf}(i)$

| $g_1(i)$ | $g_1(i)$ |
|---|---|
| $g_1(i-1)$ | $g_1(i-1)$ |
| $g_1(i-2)$ | $g_1(i-2)$ |

$MF(g_0)$

| $g_0(i)$ |
|---|
| $g_0(i-1)$ |

$MF(g_0)$

| $g_0(i)$ |
|---|
| $g_0(i-1)$ |

$\Lambda_0(0)$ $\Lambda_0(1)$

$\Lambda_1(0)$ $\Lambda_1(1)$

$\Lambda_0(j)/r_{0P}(i)$

$\Lambda_1(j)/r_{1P}(i)$

$\Lambda_0(j)/r_{0P}(i-1)$

$\Lambda_1(j)/r_{1P}(i-1)$

$\Lambda_0(j)/r_{0P}(i-2)$

$\Lambda_1(j)/r_{1P}(i-2)$

$\Lambda_{0f}(j)=\sum_{m=0}^{2}\Lambda_0(j)\Big/r_{0P}(i-m)$

$\Lambda_{1f}(j)=\sum_{m=0}^{2}\Lambda_1(j)\Big/r_{1P}(i-m)$

0  1  2  3  4  5  6

$\rightarrow j(\times T_c)$

0  1  2  3  4  5  6

$\rightarrow j(\times T_c)$

Fig. 4

Fig. 5

# Fig. 6

$s_B(t)$

$b_{00}g_0$

$T_D$

$T_h$  $T_t$

$s_{0P}(t)$

$g_0$  $g_0$  $g_0$  $g_0$

$T_G$

$T_E$

$s_{0D}(t)$

$b_{00}g_0$  $b_{00}g_0$  $b_{00}g_0$  $b_{00}g_0$

$\tau_{01}$

$s_{1P}(t)$

$g_1$  $g_1$  $g_1$  $g_1$

$s_{1D}(t)$

$b_{10}g_1$  $b_{10}g_1$  $b_{10}g_1$  $b_{10}g_1$

(a)

-7  -6  -1  0  1  6  7 $(\times f_D)$

-28  -24  -4  0 1 2 3 4  2 2 2 2 2 $(\times f_G)$

$S_{1P}(f)$  $S_{0P}(f)$

$S_{1D}(f)$  $S_{0D}(f)$

$f_0$ $f_1$ $f_2$ $f_3$

$f_0 - 28f_G$

$f_3 - 28f_G$

$f_0 + 28f_G$

$f_3 + 28f_G$

(b)

$s_{0p}(t)$

$T$

$T_h$  $T_G$  $T_l$

$h_0$ | $g$ | $g$ | $g$ | $g$ | $l_0$ | $h_0$ | $g$ | $g$ | $g$

$G_0$

$E_0$

$s_{00}(t)$ | $b_{00}h_0$ | $b_{00}g \times 4$ | $b_{00}l_0$ | $b'_{00}h_0$ | $b'_{00}g \times 4$

$s_{01}(t)$ | $b_{01}h_1$ | $b_{01}g \times 4$ | $b_{01}l_1$ | $b'_{01}h_1$ | $b'_{01}g \times 4$

$s_{03}(t)$ | $b_{03}h_3$ | $b_{03}g \times 4$ | $b_{03}l_3$ | $b'_{03}h_3$ | $b'_{03}g \times 4$

$\tau_{01}$

$s_{1p}(t)$

$h_0$ | $g$ | $g$ | $g$ | $g$ | $l_0$ | $h_0$ | $g$ | $g$ | $g$

$s_{10}(t)$ | $b_{10}h_0$ | $b_{10}g \times 4$ | $b_{10}l_0$ | $b'_{10}h_0$ | $b'_{10}g \times 4$

$s_{11}(t)$ | $b_{11}h_1$ | $b_{11}g \times 4$ | $b_{11}l_1$ | $b'_{11}h_1$ | $b'_{11}g \times 4$

$s_{13}(t)$ | $b_{13}h_3$ | $b_{13}g \times 4$ | $b_{13}l_3$ | $b'_{13}h_3$ | $b'_{13}g \times 4$

(a)

Fig. 7

Fig. 7

(b)

58

Fig. 7

$r_{1pf}(t)$

| $h_0$ | □ | □ | □ | g | $l_0$ | $h_0$ | g | g | g | ----- |
| $h_0$ | □ | □ | □ | □ | $l_0$ | $h_0$ | g | g | g | ----- |
| $h_0$ | □ | □ | □ | g | $l_0$ | $h_0$ | g | g | g | ----- |

0 1 2 3 $(\times T_c)$

$r_{10f}(t)$

| $b_{10}h_0$ | $b_{10}g \times 4$ | $b_{10}l_0$ | $b'_{10}h_0$ | $b'_{10}g \times 4$ | ----- |
| $b_{10}h_0$ | $b_{10}g \times 4$ | $b_{10}l_0$ | $b'_{10}h_0$ | $b'_{10}g \times 4$ | ----- |
| $b_{10}h_0$ | $b_{10}g \times 4$ | $b_{10}l_0$ | $b'_{10}h_0$ | $b'_{10}g \times 4$ | ----- |

$r_{11f}(t)$

| $b_{11}h_1$ | $b_{11}g \times 4$ | $b_{11}l_1$ | $b'_{11}h_1$ | $b'_{11}g \times 4$ | ----- |
| $b_{11}h_1$ | $b_{11}g \times 4$ | $b_{11}l_1$ | $b'_{11}h_1$ | $b'_{11}g \times 4$ | ----- |
| $b_{11}h_1$ | $b_{11}g \times 4$ | $b_{11}l_1$ | $b'_{11}h_1$ | $b'_{11}g \times 4$ | ----- |

$r_{13f}(t)$

| $b_{13}h_3$ | $b_{13}g \times 4$ | $b_{13}l_3$ | $b'_{13}h_3$ | $b'_{13}g \times 4$ | ----- |
| $b_{13}h_3$ | $b_{13}g \times 4$ | $b_{13}l_3$ | $b'_{13}h_3$ | $b'_{13}g \times 4$ | ----- |
| $b_{13}h_3$ | $b_{13}g \times 4$ | $b_{13}l_3$ | $b'_{13}h_3$ | $b'_{13}g \times 4$ | ----- |

(c)

Fig. 8

| $n$ \ $s$ | 0 | 1 | 2 | 3 | 4 | 5 | |
|---|---|---|---|---|---|---|---|
| 0 | $(\mu_0$ | $\mu_1$ | $\mu_2$ | 0 | 0 | $0)$ | $\times \tilde{b}_{00}$ |
| 1 | $(0$ | $\mu_0$ | $\mu_1$ | $\mu_2$ | 0 | $0)$ | $\times \tilde{b}_{01}$ |
| 2 | $(0$ | 0 | $\mu_0$ | $\mu_1$ | $\mu_2$ | $0)$ | $\times \tilde{b}_{02}$ |
| 3 | $(0$ | 0 | 0 | $\mu_0$ | $\mu_1$ | $\mu_2)$ | $\times \tilde{b}_{03}$ |
| $\Phi =$ | $(\Phi_0$ | $\Phi_1$ | $\Phi_2$ | $\Phi_3$ | $\Phi_4$ | $\Phi_5)$ | |

EP 1 176 746 A1

TX

$MOD_1$  $s_{0P}(t)$  $MOD_2$  $s_{0P}(t)$

p

$E_0$  $f_0$

$\sum$  $\rightarrow$ $S_{0a}(t)$

$MOD_3$  $s_{00}(t)$

$b_{00}$

$MOD_4$  $s_{01}(t)$

$b_{01}$

$\sum$  $s_{0D}(t)$  $s_{0D}(t)$

$MOD_5$  $s_{0,N-1}(t)$

$b_{N-1}$

$E_0$  $E_1$  $E_{N-1}$  $f_1$

Fig. 9

(a)

60

Fig. 9

(b)

EP 1 176 746 A1

Fig. 10

62

$r_{Pf}(i)$ $\begin{cases} r_P(i) \\ r_P(i-1) \\ r_P(i-2) \\ r_P(i-3) \end{cases}$

$A_0$  $A_0$  $A_0$  $A_0$  $\times \mu_0$

$A_0$  $A_0$  $A_0$  $A_0$  $\times \mu_1$

$A_0$  $A_0$  $A_0$  $A_0$  $\times \mu_2$

$A_0$  $A_0$  $A_0$  $A_0$  $\times \mu_3$

$MF(A_0 A_0)$ $\begin{cases} A_0 A_0(+5) \\ A_0 A_0(+4) \\ A_0 A_0(+3) \\ A_0 A_0(0) \\ A_0 A_0(-5) \end{cases}$

$A_0$  $A_0$

$A_0$  $A_0$

$A_0$  $A_0$

$A_0$  $A_0$

$A_0$  $A_0$

$\Lambda_f(j)$ $\begin{cases} \Lambda(j)/r_P(i) \\ \Lambda(j)/r_P(i-1) \\ \Lambda(j)/r_P(i-2) \\ \Lambda(j)/r_P(i-3) \end{cases}$

| | × | 0 | 2 | 0 | 0 | 0 | 2 | 0 | 0 | 0 | 2 | 0 | × | × | × | × | ) | $\times \mu_0$ |
| ( | × | × | 0 | 2 | 0 | 0 | 0 | 2 | 0 | 0 | 0 | 2 | 0 | × | × | × | ) | $\times \mu_1$ |
| ( | × | × | × | 0 | 2 | 0 | 0 | 0 | 2 | 0 | 0 | 0 | 2 | 0 | × | × | ) | $\times \mu_2$ |
| ( | × | × | × | × | 0 | 2 | 0 | 0 | 0 | 2 | 0 | 0 | 0 | 2 | 0 | × | ) | $\times \mu_3$ |

| $\Lambda_f(j)$ | ( | × | × | × | × | $p_2$ | $p_3$ | $p_0$ | $p_1$ | $p_2$ | $p_3$ | $p_0$ | $p_1$ | × | × | × | × | ) |
| $j$ | | | | | | -2 | -1 | 0 | 1 | 2 | 3 | 4 | 5 | | | | | |

$T_{SP}$

(a)

# Fig. 10

(b)

Fig. 11

(a)

Fig. 11

TX

$s_a(t)$

$\Sigma$

$s_{0P}(t)$   $s_{1,0}(t)$   $s_{1,15}(t)$   $s_{1,15}(t)$

$M_P$   $M_0$   $M_1$ ------ $M_{15}$

$f_v$

$g_{0v}$   $g_{1v}$   $g_{1v}$   $g_{1v}$

$p$   $b_0$   $b_1$   $b_{15}$

(b)

(c)

Fig. 11

EP 1 176 746 A1

Fig. 1 2

[P]

$[[\Phi]] = (0,0,0...0)$  AYZ$_1$

$[[\Phi]] = (0,1,0...0)$  AYZ$_2$

$[[\Phi]] = (0,0...0,1)$  AYZ$_N$

$[\tilde{b_1}] = [\tilde{b_{11}}, \tilde{b_{12}}, ... \tilde{b_{1N}}]$

$[\tilde{b_2}] = [\tilde{b_{21}}, \tilde{b_{22}}, ... \tilde{b_{2N}}]$

$[\tilde{b_N}] = [\tilde{b_{N1}}, \tilde{b_{N2}}, ... \tilde{b_{NN}}]$

MOD

$\Phi_1$

$\Phi_2$

$\Phi_N$

$\Sigma$

$[g]$

Fig. 13

Fig. 14

Fig. 15

Fig. 16

(a)

(b)

Fig. 17

**EP 1 176 746 A1**

## INTERNATIONAL SEARCH REPORT

| International application No. |
|---|
| PCT/JP00/02576 |

**A. CLASSIFICATION OF SUBJECT MATTER**
Int.Cl⁷ H04J13/04, H04B1/707

According to International Patent Classification (IPC) or to both national classification and IPC

**B. FIELDS SEARCHED**

Minimum documentation searched (classification system followed by classification symbols)
Int.Cl⁷ H04J13/00-13/06, H04B1/69-1/713

Documentation searched other than minimum documentation to the extent that such documents are included in the fields searched
Jitsuyo Shinan Koho        1926-1996     Toroku Jitsuyo Shinan Koho   1994-2000
Kokai Jitsuyo Shinan Koho  1971-2000     Jitsuyo Shinan Toroku Koho   1996-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P,X | Mitsuhiro Tomita, et al., " Gold Keiretsu wo mochiita | 1,2,5 |
| P,A | Pilot Frame Shien Kei, CDMA Tsuushi Houshiki", Technical Research report of the Institute of Electronics Information and Communication Engineers, 18 June, 1999 (18.06.99)(Tokyo) Vol.99, No.126, pp.41-48 | 3,4,6-23 |
| P,X | JP, 2000-78058, A (Katsuyoshi Azeyanagi et al., Fuji Electric Co., Ltd.),14 March, 2000 (14.03.00), | 1,2,5 |
| P,A | Full text; Figs. 1 to 33 & EP, 966111, A2 | 3,4,6-23 |
| A | JP, 7-143110, A (Daiei Electron K.K.), 02 June, 1995 (02.06.95), Full text; Figs. 1 to 5   (Family: none) | 1-23 |
| A | JP, 10-98444, A (Katsuyoshi Azeyanagi), 14 April, 1998 (14.04.98), Full text; Figs. 1 to 9 & EP, 869632, A1    & WO, 98/12831, A1 & AU, 9743182, A    & CN, 1205143, A | 1-23 |
| A | Masao Shibatani et al., "Shusei Souho Keiretsu wo Mochiita | 1-23 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 July, 2000 (14.07.00) | 01 August, 2000 (01.08.00) |

| Name and mailing address of the ISA/ Japanese Patent Office | Authorized officer |
|---|---|
| Facsimile No. | Telephone No. |

Form PCT/ISA/210 (second sheet) (July 1992)

73

## INTERNATIONAL SEARCH REPORT

| | International application No. |
|---|---|
| | PCT/JP00/02576 |

**C (Continuation). DOCUMENTS CONSIDERED TO BE RELEVANT**

| Category* | Citation of document, with indication, where appropriate, of the relevant passages | Relevant to claim No. |
|---|---|---|
| | Tai Multipath CDMA Tsuushin Houshiki", Technical Research Report of the Institute of Electronics, Information and Communication Engineers, Vol.98, No.595, 18 February, 1999 (18.02.99)(Tokyo), pp.19-24 | |
| A | Katsuyoshi Azeyanagi, "E Keiretsu Tsui wo mochiita Tai Burst Zatsuon Joho Dentatsu", Technical Research Report of the Institute of Electronics, Information and Communication Engineers, 19 June, 1997 (19.06.97) (Tokyo) Vol.97, No.103, pp.67-71 | 1-23 |
| A | Katsuyoshi Azeyanagi, "Kinji Douki CDMA no tameno Channel Kan Kansho ga naku Multipath no Eikyo wo ukenei 2 So Shingo no Kanzen Souho Keiretsu wo mochiita Sekkei Hou", Technical Research Report of the Institute of Electronics, Information and Communication Engineers, 19 March, 1998(19.03.98)(Tokyo), Vol.97, No.614, p.43-48 | 1-23 |
| P, A | Katsuyoshi Azeyanagi, "Kanzen Souho Keiretsu wo mochiita Channel Kan Kansho nai Kinji Douki CDMA ni okeru Multipath no Suitei to Shingou no Tatami komi ni yoru Shuhasu Riyou Koritsu no Hiyaku Teki Zoudai", Technical Research Report of the Institute of Electronics, Information and Communication Engineers, 18 June, 1999 (18.06.99) (Tokyo), Vol.99, No.126, pp.35-39 | 1-23 |
| P, A | Toshiaki Imoto, "Kotonaru Cel, Kotonaru Sector ni okeru, Kotonaru Kanzen Soho Keiretsu no Wariate to sono Koka", Technical Research Report of the Institute of Electronics, Information and Communication Engineers, 17 March, 2000(17.03.00)(Tokyo), Vol.99, No.704, pp.33-38 | 1-23 |

Form PCT/ISA/210 (continuation of second sheet) (July 1992)